(19) Europäisches Patentamt
European Patent Office
Office européen des brevets

(11) **EP 3 968 288 A2**

(12) **EUROPÄISCHE PATENTANMELDUNG**

(43) Veröffentlichungstag:
**16.03.2022 Patentblatt 2022/11**

(21) Anmeldenummer: **21203252.8**

(22) Anmeldetag: **30.01.2015**

(51) Internationale Patentklassifikation (IPC):
***G06V 40/18*** *(2022.01)*

(52) Gemeinsame Patentklassifikation (CPC):
**G06F 17/145; G06T 7/13; G06T 7/337; G06T 7/74;
G06T 7/77; G06V 10/955; G06V 40/18; G06V 40/20**

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **04.02.2014 DE 102014201997**

(62) Dokumentnummer(n) der früheren Anmeldung(en)
nach Art. 76 EPÜ:
**15701823.5 / 3 103 059**

(71) Anmelder: **FRAUNHOFER-GESELLSCHAFT zur
Förderung
der angewandten Forschung e.V.
80686 München (DE)**

(72) Erfinder:
• **KRENZER, Daniel
99848 Wutha-Farnroda (DE)**

• **HESS, Albrecht
98667 Schönbrunn (DE)**
• **KÁTAI, András
98693 Ilmenau (DE)**

(74) Vertreter: **Pfitzner, Hannes et al
Schoppe, Zimmermann, Stöckeler
Zinkler, Schenk & Partner mbB
Patentanwälte
Radlkoferstraße 2
81373 München (DE)**

Bemerkungen:
Diese Anmeldung ist am 18-10-2021 als
Teilanmeldung zu der unter INID-Code 62 erwähnten
Anmeldung eingereicht worden.

(54) **3D-BILDANALYSATOR ZUR BLICKRICHTUNGSBESTIMMUNG**

(57)     Ein 3D-Bildanalysator zur Bestimmung einer Blickrichtung oder einer Blickgeraden (bestehend aus einem Blickrichtungsvektor und einem Ortsvektor, der z. B. den Pupillenmittelpunkt angibt und an dem der Blickrichtungsvektor ansetzt) in einem 3D-Raum ist ausgebildet, um zumindest einen ersten Satz von Bilddaten und einen weiteren Satz von Bildinformationen zu empfangen, wobei das erste Bild ein Muster umfasst, das eines dreidimensionalen Objekts aus einer ersten Perspektive in eine erste Bildebene abbildet, und wobei der weitere Satz ein Bild umfasst, das ein Muster umfasst, das das selbe dreidimensionale Objekts aus einer weiteren Perspektive in eine weitere Bildebene abbildet, oder wobei der weitere Satz eine Bildinformationen und/oder eine Beziehung zwischen mindestens zwei Punkten im ersten Bild und/oder mindestens eine Positionsinformation umfasst. Die Bildinformationen werden auf Basis des ersten Bildes oder eines oder mehrerer weiteren Bilder bestimmt. Die Positionsinformation beschreibt eine Beziehung zwischen mindestens einem Punkt des dreidimensionalen Objekts und der ersten Bildebene. Der 3D-Bildanalysator umfasst eine Positionsberechnungseinrichtung und eine Ausrichtungsberechnungseinrichtung und berechnet damit eine Blickrichtung in einem 3D-Raum.

FIG 1

**Beschreibung**

Ausführungsbeispiele der vorliegenden Erfindung beziehen sich auf einen 3D-Bildanalysator zur Bestimmung einer Blickrichtung (bzw. Richtungsvektor) oder einer Blickgeraden (bestehend aus Ortsvektor und Richtungsvektor) in einem 3D-Raum ohne, dass eine Kalibration durch den Benutzer, dessen Blickrichtung bestimmt werden soll, erforderlich ist. Weitere Ausführungsbeispiele beziehen sich auf ein Bildanalysesystem mit einem 3D-Bildanalysator zum Erkennen einer Ausrichtung bzw. Blickrichtung und auf ein entsprechendes Verfahren zum Erkennen der Ausrichtung bzw. Blickrichtung.

Zur automatischen Bestimmung der Blickrichtung eines Menschen gibt es unterschiedliche Kategorien von Systemen. Eine sehr weit verbreitete Kategorie sind videobasierte Systeme, die mit ein oder mehreren Kameras die Augen der Person aufnehmen und diese Videoaufnahmen online oder offline auswerten um daraus die Blickrichtung zu bestimmen.

Systeme zur videobasierten Blickrichtungsbestimmung erfordern in der Regel für jeden Nutzer zu Beginn der Nutzung und in einigen Fällen auch zusätzlich während der Nutzung (z. B. beim Verlassen des Kameraerfassungsbereiches oder bei einer Veränderung der Lage zwischen Benutzer und System) eine Kalibrierprozedur, um die Blickrichtung des Nutzers bestimmen zu können. Des Weiteren erfordern einige dieser Systeme eine sehr spezielle und definierte Anordnung der Kamera(s) und der Beleuchtung zueinander oder eine sehr spezielle Anordnung der Kamera(s) zum Benutzer und Vorwissen über die Position des Benutzers (wie z. B. in der Patentschrift DE 10 2004 046 617 A1) um die Blickrichtungsbestimmung durchführen zu können.

Deshalb besteht der Bedarf nach einem verbesserten Ansatz.

Eine Aufgabe ist es, eine effiziente und zuverlässige Richtungserkennung, z.B. Blickrichtungserkennung zu ermöglichen.

Die Aufgabe wird durch die unabhängigen Ansprüche gelöst. Weiterbildungen sind in den Unteransprüchen definiert.

Ausführungsbeispiele der vorliegenden Erfindung schaffen einen 3D-Bildanalysator zur Bestimmung einer Blickrichtung oder einer Blickgeraden (umfassend z.B. einem Blickrichtungsvektor und einem Ortsvektor, der z. B. den Pupillenmittelpunkt angibt und an dem der Blickrichtungsvektor ansetzt) oder eines Blickpunktes, wobei der 3D-Bildanalysator ausgebildet ist, um zumindest einen ersten Satz von Bilddaten, der auf Basis eines ersten Bildes bestimmt wird, und einen weiteren Satz von Informationen, die auf Basis des ersten Bildes oder eines weiteren Bildes bestimmt wird, zu empfangen, wobei das erste Bild ein Muster enthält, das sich durch die Abbildung eines dreidimensionalen Objekts (z.B. Muster einer Pupille, einer Iris oder einer Ellipse) aus einer ersten Perspektive in eine erste Bildebene ergibt, und wobei der weitere Satz auch ein Bild mit einem Muster enthält, das sich durch die Abbildung des gleichen dreidimensionalen Objekts aus einer weiteren Perspektive in eine weitere Bildebene ergibt, oder wobei der weitere Satz Informationen enthält, welche eine (Relativ-) Beziehung zwischen mindestens einem Punkt des dreidimensionalen Objekts und der ersten Bildebene beschreiben. Der 3D-Bildanalysator umfasst eine Positionsberechnungseinrichtung und eine Ausrichtungsberechnungseinrichtung. Die Positionsberechnungseinrichtung ist ausgebildet, um eine Position des Musters in einem dreidimensionalen Raum basierend auf dem ersten Satz, einem weiteren Satz, der auf Basis des weiteren Bildes bestimmt wird, und einer geometrischen Beziehung zwischen den Perspektiven des ersten und des weiteren Bildes zu berechnen oder um die Position des Musters in dem dreidimensionalen Raum basierend auf dem ersten Satz und einer statistisch ermittelten Beziehung zwischen mindestens zwei charakteristischen Merkmalen zueinander in dem ersten Bild zu berechnen oder um die Position des Musters in dem dreidimensionalen Raum basierend auf dem ersten Satz und einer Lagebeziehung zwischen mindestens einem Punkt des dreidimensionalen Objektes und der ersten Bildebene zu berechnen. Die Ausrichtungsberechnungseinrichtung ist ausgebildet, um zwei mögliche 3D-Blickvektoren pro Bild zu berechnen und aus diesen möglichen 3D-Blickvektoren den 3D-Blickvektor zu ermitteln, gemäß dem das Muster in dem dreidimensionalen Raum ausgerichtet ist, wobei die Berechnung und Ermittlung auf dem ersten Satz, dem weiteren Satz und auf der berechneten Position des Musters basiert.

Der Kern der vorliegenden Erfindung liegt also darin, dass erkannt wurde, dass - ausgehend von der o.g. Positionsbestimmungseinrichtung bestimmten Position des Musters - eine Ausrichtung eines Objektes im Raum, wie z. B. eine Ausrichtung einer Pupille im Raum (also die Blickrichtung), und/oder eine Blickgerade (bestehend aus einem Blickrichtungsvektor und einem Ortsvektor, der z. B. den Pupillenmittelpunkt angibt und an dem der Blickrichtungsvektor ansetzt) basierend auf mindestens einem Satz von Bilddaten, z. B. aus einer ersten Perspektive und Zusatzinformationen bzw. einem weiteren Satz von Bilddaten (aus einer weiteren Perspektive) bestimmt werden kann. Zur Bestimmung der Ausrichtung wird eine Positionsberechnungseinrichtung zu Hilfe genommen, die in einem ersten Schritt die Position des Musters bestimmt. Ausgehend von dieser bestimmten Position des Musters gibt es nun zwei mögliche 3D-Blickvektoren, entsprechend welchen das Muster ausgerichtet sein kann. Diese zwei möglichen 3D-Blickvektoren werden beispielsweise dadurch bestimmt, dass die optische Verzerrung des Musters mit einer Grundform des Musters verglichen wird und hieraus bestimmt wird, welchen Betrag das Muster gegenüber der optischen Ebene des Bildes (vgl. erster Satz von Bilddaten) verkippt ist. Ausgehend von dem Beispiel einer (runden) Pupille, welche in dem Fall von Verkippung sich als Ellipse darstellt, wird klar, dass es zwei mögliche Verkippungswinkel der Pupille gegenüber der optischen Ebene gibt, welche zu der ellipsenförmigen Darstellung der Pupille führen. Die Ausrichtungsberechnungseinrichtung ermittelt nun basierend auf dem weiteren Satz von Bildinformationen oder basierend auf Zusatzinformationen, die auch basierend auf dem ersten Satz von Bildinformationen gewonnen werden können, welcher der theoretisch möglichen Verkippungswinkel bzw. 3D-Blickvektoren der Realität, also der tatsächlichen Blickrichtung, entspricht.

Also kann (unter Nutzung der 3D-Positionsberechnung und einer virtuellen Projektionsebene) vorteilhafterweise der Blickrichtungsvektor und/oder die Blickgerade (bestehend aus Ortsvektor des gesuchten Muster und Richtungsvektor) ohne vorherige Kenntnis eines Abstands zwischen Pupille und Kamera oder ohne genau Positionierung der optischen Achsen der Kameras (z.B. durch den Pupillenmittelpunkt) bestimmt werden.

Entsprechend Ausführungsbeispielen ist es möglich, dass die Bestimmung bzw. Auswahl des zutreffenden 3D-Blickvektors dadurch erfolgt, dass zwei weitere mögliche 3D-Blickvektoren für einen weiteren Satz von Bilddateien (aus einer weiteren Perspektive) ermittelt werden, wobei ein 3D-Blickvektor aus dem ersten Bilddatensatz mit einem 3D-Blickvektor aus dem weiteren Bilddatensatz übereinstimmt, der dann der tatsächliche 3D-Blickvektor ist. Alternativ hierzu kann entsprechend weiteren Ausführungsbeispielen auch der erste Bilddatensatz analysiert werden, z. B. hinsichtlich dessen, wie viele Pixel der im ersten Bild abgebildeten Sklera des Auges von den zwei möglichen 3D-Blickvektoren (beginnend am Pupillenmittelpunkt) überstrichen werden. Hierbei wird dann der 3D-Blickvektor ausgewählt, der weniger Pixel der Sklera überstreicht. Anstelle der Analyse der Sklera wäre es auch möglich, dass der 3D-Blickvektor ausgewählt wird, entlang dessen Projektion ins Bild (beginnend am Pupillenmittelpunkt der kleinere Abstand zwischen Pupillenmittelpunkt und Rand der Augenöffnung resultiert.

Entsprechend weiteren Ausführungsbeispielen können auch statistisch ermittelte Beziehung, wie z.B. ein Abstand zwischen zwei charakteristischen Gesichtsmerkmalen (z. B. Nase, Auge) zur Berechnung der 3D-Position eines Punktes des Musters (z. B. Pupillen- oder Irismittelpunkt) herangezogen werden. Diese statistischen Beziehungen sind vorab ermittelt und in einem Speicher gespeichert.

Entsprechend weiteren Ausführungsbeispielen ist die Ermittlung der oben beschriebenen 3D-Position eines Punktes des Musters nicht auf die Nutzung statistische ermittelter Werte beschränkt. Sie kann auch basierend auf den Ergebnissen einer vorgeschalteten Berechnungseinrichtung erfolgen, welche die 3D-Positionen charakteristischen Gesichtsmerkmalen (z. B. Nase, Auge) oder einen 3D-Position des oben genannten Musters liefert.

Entsprechend weiteren Ausführungsbeispielen kann die Auswahl des tatsächlichen 3D-Blickvektors aus den möglichen 3D-Blickvektoren auch basierend auf der 3D-Position des Musters (z. B. Pupillen- oder Irismittelpunkt) und den oben genannten 3D-Positionen charakteristischer Gesichtsmerkmale (z. B. Augenecken, Mundecken) erfolgen.

Entsprechend weiteren Ausführungsbeispielen erfolgt die Ausrichtungsberechnung dadurch, dass eine erste virtuelle Projektionsebene, durch Drehung der tatsächlichen ersten Projektionsebene inklusive Optik um den Knotenpunkt der Optik, für das erste Bild berechnet wird, so dass eine erste virtuelle optische Achse, die als Senkrechte zu der ersten virtuellen Projektionsebene definiert ist, sich durch den Mittelpunkt des erkannten Musters erstreckt. Bevorzugt wird entsprechend weiteren Ausführungsbeispielen zur Ausrichtung eine zweite virtuelle Positionsebene, durch Drehung der tatsächlichen zweiten Projektionsebene inklusive Optik um den Knotenpunkt der Optik, für das weitere Bild berechnet, so dass eine zweite virtuelle optische Achse, die als Senkrechte zu der zweiten virtuellen Projektionsebene definiert ist, sich durch den Mittelpunkt des Kantenmusters erstreckt. Durch die Nutzung der oben beschriebenen virtuellen Projektionsebenen, ist es möglich nachfolgend basierend auf dem ersten und dem weiteren Bildern jeweils zwei mögliche 3D-Blickvektoren zu berechnen von denen jeweils einer (im Idealfall exakt, in der Realität mit geringer Abweichung) dem tatsächlichen 3D-Blickvektor entspricht.

Entsprechend weiteren Ausführungsbeispielen kann der 3D-Blickvektor durch einen Satz von Gleichungen beschrieben werden, wobei jede Gleichung eine geometrische Beziehung der jeweiligen Achsen und der jeweiligen virtuellen Projektionsebene gegenüber dem 3D-Blickvektor beschreibt. Bezogen auf die erste virtuelle Projektionsebene kann durch eine erste Gleichung auf Basis der Bilddaten des ersten Satzes der 3D-Blickvektor beschrieben werden, wobei zwei Lösungen der ersten Gleichung möglich sind. Eine zweite Gleichung auf Basis der Bilddaten des zweiten Satzes führt für den 3D-Blickvektor bezogen auf die zweite virtuelle Projektionsebene zu zwei (weiteren) Lösungen. Der tatsächliche 3D-Blickvektor kann durch eine gewichtete Mittelung aus je einem Lösungsvektor der erste und einem Lösungsvektor der zweiten Gleichung berechnet werden. Diese beiden Vektoren sind dadurch definiert, dass ihre Differenz kleiner als eine Differenz zwischen anderen Kombinationen aus den Lösungsvektoren der beiden Gleichungen ist, so dass das System aus Gleichungen, umfassend die erste und die zweite Gleichung eine eindeutige Lösung hat. Der oben genannte Lösungsvektor der ersten Gleichung ist mit einem Toleranzbereich von beispielsweise plus/minus 10 % dem oben genannten Lösungsvektor der zweiten Gleichung gleich.

Entsprechend weiteren Ausführungsbeispielen kann der 3D-Bildanalysator in eine Verarbeitungseinheit implementiert sein, die beispielsweise einen selektiv-adaptiven Datenprozessor umfasst.

Entsprechend weiteren Ausführungsbeispielen kann der 3D-Bildanalysator Teil eines Bildanalysesystems zum Verfolgen einer Pupille sein. Ein derartiges Bildanalysesystem umfasst typischerweise mindestens einen Hough-Pfad für zumindest eine Kamera oder bevorzugt zwei Hough-Pfade für zumindest zwei Kameras. Ferner kann jeder Hough-Pfad einen Pre-Prozessor sowie eine Hough-Transformationseinrichtung umfassen. Zusätzlich zu dieser Hough-Transformationseinrichtung auch noch eine Einrichtung zum Analysieren des erfassten Musters und zum Ausgeben eines Satzes von Bilddaten inkludiert sein.

Entsprechend weiteren Ausführungsbeispielen wird ein Verfahren zur Bestimmung einer Blickrichtung oder Blickgeraden geschaffen. Das Verfahren umfasst die Schritte des Empfangens von zumindest eines ersten Satzes von Bilddaten, der auf Basis eines ersten Bildes bestimmt wird, und eines weiteren Satzes von Informationen, der auf Basis des ersten Bildes oder eines weiteren Bildes bestimmt wird, wobei das erste Bild ein Musters eines dreidimensionalen Objekts aus einer ersten Perspektive in eine erste Bildebene abbildet und wobei der weitere Satz ein weiteres Bild mit einem Muster enthält, das sich durch die Abbildung des gleichen dreidimensionalen Objekts aus einer weiteren Perspektive in eine weitere Bildebene ergibt, oder eine Information umfasst, welche eine Beziehung zwischen mindestens einem Punkt des dreidimensionalen Objekts und der ersten Bildebene beschreibt. Das Verfahren umfasst ferner den Schritt des Berechnens einer Position des Musters in einem dreidimensionalen Raum basierend auf dem ersten Satz, einem weiteren Satz, der auf Basis des weiteren Bildes bestimmt wird, und einer geometrischen Beziehung zwischen den Perspektiven des ersten und des weiteren Bildes oder Berechnen der Position des Musters in dem dreidimensionalen Raum basierend auf dem ersten Satz und einer statistisch ermittelten Beziehung zwischen mindestens zwei charakteristischen Merkmalen zueinander in dem ersten Bild oder Berechnen der Position des Musters in dem dreidimensionalen Raum basierend auf dem ersten Satz und einer Lagebeziehung zwischen mindestens einem Punkt des dreidimensionalen Objektes und der ersten Bildebene. In einem dritten Schritt wird ein 3D-Blickvektor berechnet, gemäß dem das Muster in dem dreidimensionalen Raum ausgerichtet ist, wobei die Berechnung basierend auf dem ersten Satz von Bilddaten und dem weiteren Satz von Informationen und auf der berechneten Position des Musters erfolgt.

Entsprechend weiteren Ausführungsbeispielen kann dieses Verfahren durch einen Computer ausgeführt werden. Insofern bezieht sich ein weiteres Ausführungsbeispiel auf ein Computer-lesbares digitales Speichermedium mit einem Programmcode zur Durchführung des obigen Verfahrens.

Ausführungsbeispiele der vorliegenden Erfindung werden nachfolgend anhand der beiliegenden Zeichnungen erläutert. Es zeigen:

Fig. 1 ein schematisches Blockschaltbild eines 3D-Bildanalysators gemäß einem Ausführungsbeispiel;

Fig. 2a ein schematisches Blockschaltbild eines Hough-Prozessors mit einem Pre-Prozessor und einer Hough-Transformationseinrichtung gemäß einem Ausführungsbeispiel;

Fig. 2b ein schematisches Blockschaltbild eines Pre-Prozessors gemäß einem Ausführungsbeispiel;

Fig. 2c eine schematische Darstellung von Hough-Kernen zur Detektion von Geraden (abschnitten);

Fig. 3a ein schematisches Blockschaltbild einer möglichen Implementierung einer Hough-Transformationseinrichtung gemäß einem Ausführungsbeispiel;

Fig. 3b einzelne Zelle einer Verzögerungsmatrix entsprechend einem Ausführungsbeispiel;

Fig. 4a-d ein schematisches Blockschaltbild einer weiteren Implementierung einer Hough-Transformationseinrichtung entsprechend einem Ausführungsbeispiel;

Fig. 5a ein schematisches Blockschaltbild einer stereoskopischen Kameraanordnung mit zwei Bildprozessoren und einer Nachverarbeitungseinrichtung, wobei jeder der BildProzessoren einen Hough-Prozessor gemäß Ausführungsbeispielen aufweist;

Fig. 5b eine exemplarische Aufnahme eines Auges zur Illustration einer mit der Vorrichtung aus Fig. 5a durführbaren Blickwinkeldetektion und zur Erläuterung der Blickwinkeldetektion im monoskopischen Fall;

Fig. 6-7 weitere Darstellungen zur Erläuterung von zusätzlichen Ausführungsbeispielen bzw. Aspekten;

Fig. 8a-c schematische Darstellungen von optischen Systemen mit den dazugehörigen Projektionsebenen; und

Fig. 8d schematische Darstellung einer Ellipse mit den zu ihrer Beschreibung genutzten Parametern

Fig. 8e schematische Darstellung der Abbildung eines Kreises im 3D-Raum als Ellipse auf eine Ebene zur Erläuterung der Berechnung der Ausrichtung des Kreises in 3D-Raum basierend auf den Parametern der Ellipse; und

Fig. 9a-9i weitere Darstellungen zur Erläuterung von Hintergrundwissen für die Hough-Transformationseinrichtung.

Nachfolgend werden Ausführungsbeispiele der vorliegenden Erfindung anhand der Figuren im Detail erläutert. Es sei darauf hingewiesen, dass gleiche Elemente mit gleichen Bezugszeichen versehen sind, so dass die Beschreibung derer aufeinander angewendet werden kann bzw. austauschbar ist.

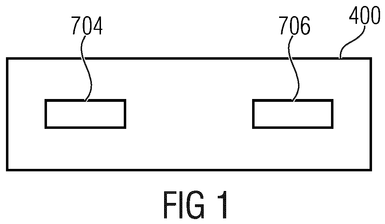

Fig. 1 zeigt einen 3D-Bildanalysator 400 mit einer Positionsberechnungseinrichtung 404 und einer Ausrichtungsberechnungseinrichtung 408. Der 3D-Bildanalysator ist dazu ausgebildet, um basierend auf mindestens einem Satz von Bilddaten, bevorzugt aber auf Basis von einem ersten Satz und einem zweiten Satz von Bilddaten eine Blickrichtung in einem 3D-Raum (also eine 3D-Blickrichtung) zu bestimmen. Zusammen mit einem ebenfalls ermittelten Punkt auf der Blickgeraden (z. B. dem Pupillen- oder Irismittelpunkt im 3D-Raum) ergibt sich aus diesem Punkt und der oben genannten Blickrichtung die 3D-Blickgerade, die auch als Basis für die Berechnung des 3D-Blickpunktes genutzt werden kann.

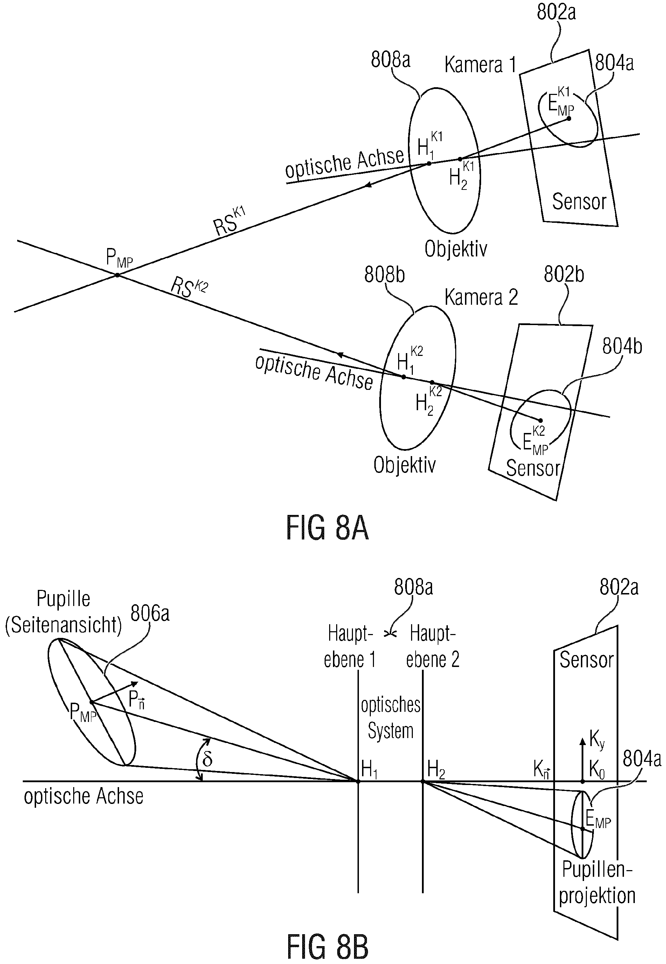

Das Grundverfahren bei der Bestimmung umfasst die drei Basisschritte: Empfangen von zumindest dem ersten Satz von Bilddaten, der auf Basis eines ersten Bildes 802a bestimmt wird (vgl. Fig. 8a) und eines weiteren Satzes von Informationen, der auf Basis des ersten Bildes 802a oder eines weiteren Bildes 802b bestimmt wird. Hierbei bildet das erste Bild 802a ein Muster 804a eines dreidimensionalen Objekts 806a (vgl. Fig. 8b) aus einer ersten Perspektive in eine erste Bildebene ab. Der weitere Satz umfasst typischerweise das weitere Bild 802b.

In weiteren Ausführungsbeispielen kann der weiter Satz alternativ (statt konkreter Bilddaten) auch eine oder mehrere der folgenden Information enthalten, eine Lagebeziehung zwischen einem Punkt $P_{MP}$ des dreidimensionalen Objekts 806a und der ersten Bildebene 802a, Lagebeziehungen zwischen mehreren charakteristischen Punkten zueinander im Gesicht oder Auge, Lagebeziehungen von charakteristischen Punkten im Gesicht oder Auge bezogen auf den Sensor, die Lage und Ausrichtung des Gesichtes.

Im nächsten Schritt wird die Position des Musters 806a in dem dreidimensionalen Raum basierend auf dem ersten Satz dem weiteren Satz und einer geometrischen Beziehung zwischen den Perspektiven des ersten und des zweiten Bildes 802a und 802b berechnet. Alternativ kann die Berechnung der Position des Musters 806a in dem dreidimensionalen Raum basierend auf dem ersten Satz und einer statistisch ermittelten Beziehung zwischen mindestens zwei charakteristischen Merkmalen in dem ersten Bild 804a zueinander berechnet werden. Der letzte Schritt dieses Grundverfahrens bezieht sich auf das Berechnen des 3D-Blickvektors, gemäß dem das Muster 804a und 804b in dem dreidimensionalen Raum ausgerichtet ist. Die Berechnung erfolgt basierend auf dem ersten Satz und dem zweiten Satz.

Ein ausführliches Berechnungsbeispiel für diese Blickrichtungsberechnung wird nachfolgend anhand der Fig. 8a bis 8e beschrieben.

Berechnung des Pupillenmittelpunktes

Wie bereits beschrieben, entsteht bei der Abbildung der kreisförmigen Pupille 806a durch die Kameraobjektive 808a und 808b auf den Bildsensoren 802a und 802b jeweils eine elliptische Pupillenprojektion (vgl. Fig. 8a). Der Mittelpunkt der Pupille wird auf beiden Sensoren 802a und 802b und somit auch in den entsprechenden Kamerabildern immer als Mittelpunkt $E_{MP}^{K1}$ und $E_{MP}^{K2}$ der Ellipse abgebildet. Daher kann durch stereoskopische Rückprojektion dieser beiden Ellipsenmittelpunkte $E_{MP}^{K1}$ und $E_{MP}^{K2}$ mit Hilfe des Objektivmodells der 3D-Pupillenmittelpunkt bestimmt werden. Optionale Voraussetzung dazu ist eine idealerweise zeitsynchrone Bildaufnahme, damit die von beiden Kameras abgebildeten Szenen identisch sind und somit der Pupillenmittelpunkt an der gleichen Position erfasst wurde.

Zunächst muss für jede Kamera der Rückprojektionsstrahl RS des Ellipsenmittelpunktes berechnet werden, welcher entlang des Knotenpunktstrahls zwischen dem Objekt und dem objektseitigen Knotenpunkt (H1) des optischen System verläuft (Fig. 8a).

$$RS(t) = RS_0 + t \cdot RS_{\vec{n}}$$

$$(A1)$$

Dieser Rückprojektionsstrahl wird durch Gleichung (A1) definiert. Er besteht aus einem Anfangspunkt RSo und einem normierten Richtungsvektor $RS_{\vec{n}}$, welche sich im genutzten Objektivmodell (Fig. 8b) durch die Gleichungen (A2) und (A3) aus den beiden Hauptpunkten $H_1$ und $H_2$ des Objektivs sowie dem Ellipsenmittelpunkt $E_{MP}$ in der Sensorebene ergeben. Dazu müssen alle drei Punkte (Hi, $H_2$ und $E_{MP}$) im Eyetracker-Koordinatensystem vorliegen.

$$RS_0 = H_1$$

$$(A2)$$

$$RS_{\vec{n}} \frac{H_2 - E_{MP}}{|H_2 - E_{MP}|}$$

$$(A3)$$

Die Hauptpunkte lassen sich mit den Gleichungen

$$H_2 = K_O + b \cdot K_{\vec{n}}$$

und

$$H_1 = K_O + (b + d) \cdot K_{\vec{n}}$$

direkt aus den Objektiv- und Kameraparametern berechnen (Fig. 8b), Ko der Mittelpunkt der Kamerasensoreben ist und $K_{\vec{n}}$ der Normalvektor der Kamerasensorebene. Der 3D-Ellipsenmittelpunkt im Kamerakoordinatensystem lässt sich aus den zuvor bestimmten Ellipsenmittelpunktparametern $x_m$ und $y_m$, welche in Bildkoordinaten vorliegen, mittels Gleichung

$$P_{Kamera} = \begin{bmatrix} P_{Kamera}^x \\ P_{Kamera}^y \\ P_{Kamera}^z \end{bmatrix} = \left( \begin{bmatrix} P_{Bild}^x \\ P_{Bild}^y \\ 0 \end{bmatrix} + \begin{bmatrix} S_{offset}^x \\ S_{offset}^y \\ 0 \end{bmatrix} - \frac{1}{2} \cdot \begin{bmatrix} S_{res}^x \\ S_{res}^y \\ 0 \end{bmatrix} \right) \cdot S_{PxGr}$$

errechnen. Dabei ist $P_{Bild}$ die Auflösung des Kamerabildes in Pixeln, $S_{offset}$ ist die Position auf dem Sensor an der begonnen wird das Bild auszulesen, $S_{res}$ ist die Auflösung des Sensors und $S_{PxGr}$ ist die Pixelgröße des Sensors.

Der gesuchte Pupillenmittelpunkt ist im Idealfall der Schnittpunkt der beiden Rückprojektionsstrahlen $RS^{K1}$ und $RS^{K2}$. Mit praktisch ermittelten Modellparametern und Ellipsenmittelpunkten ergibt sich allerdings schon durch minimale Messfehler kein Schnittpunkt der Geraden mehr im 3-D-Raum. Zwei Geraden in dieser Konstellation, welche sich weder schneiden noch parallel verlaufen, werden in der Geometrie windschiefe Geraden genannt. Im Falle der Rückprojektion kann angenommen werden, dass die beiden windschiefen Geraden jeweils sehr nahe am Pupillenmittelpunkt vorbei verlaufen. Dabei liegt der Pupillenmittelpunkt an der Stelle ihres geringsten Abstands zueinander auf halber Strecke zwischen den beiden Geraden.

Der kürzeste Abstand zwischen zwei windschiefen Geraden wird von einer senkrecht zu beiden Geraden stehenden Verbindungsstrecke angegeben. Der Richtungsvektor $\vec{n}_{St}$ Der senkrecht auf beiden Rückprojektionsstrahlen stehenden Strecke kann entsprechend Gleichung (A4) als Kreuzprodukt ihrer Richtungsvektoren berechnet werden.

$$\vec{n}_{St} = RS_{\vec{n}}^{K1} \ x \ RS_{\vec{n}}^{K2}$$

$$(A4)$$

Die Lage der kürzesten Verbindungsstrecke zwischen den Rückprojektionsstrahlen wird durch Gleichung (A5) definiert. Durch Einsetzen von $RS^{K1}(s)$, $RS^{K2}(t)$ und $\vec{n}_{St}$ ergibt sich daraus ein Gleichungssystem, aus welchem $s$, $t$ und $u$ berechnet werden können.

$$RS^{K1}(s) + u \ \vec{n}_{St} \ RS^{K2}(t)$$

$$(A5)$$

Der gesuchte Pupillenmittelpunkt P$_{MP}$, welcher auf halber Strecke zwischen den Rückprojektionsstrahlen liegt, ergibt sich folglich aus Gleichung (A6) nach dem Einsetzen der für s und u berechneten Werte.

$$P_{MP} = RS^{K1}(s) + \frac{u}{2} \cdot \vec{n}_{St} \qquad (A6)$$

Als Indikator für die Genauigkeit des berechneten Pupillenmittelpunktes P$_{MP}$ kann zusätzlich die minimale Distanz d$_{RS}$ zwischen den Rückprojektionsstrahlen berechnet werden. Je genauer die Modellparameter und Ellipsenmittelpunkte waren, welche für die bisherigen Berechnungen genutzt wurden, desto geringer ist d$_{RS}$.

$$d_{RS} = u \cdot |\vec{n}_{St}|$$

$$(A7)$$

Der berechnete Pupillenmittelpunkt ist einer der beiden Parameter, welcher die vom Eyetracker zu ermittelnde Blickgerade des Auges bestimmen. Außerdem wird er zur Berechnung des Blickrichtungsvektors $\vec{P_n}$ benötigt, welche nachfolgend beschrieben wird.

Der Vorteil dieser Methode zur Berechnung des Pupillenmittelpunktes besteht darin, dass die Abstände der Kameras zum Auge nicht fest im System abgespeichert sein müssen. Dies ist z. B. bei dem in der Patentschrift DE 10 2004 046 617 A1 beschriebenen Verfahren erforderlich.

Berechnung des Blickrichtungsvektors

Der zu bestimmende Blickrichtungsvektor $\vec{P_n}$ entspricht dem Normalvektor der kreisförmigen Pupillenfläche und ist somit durch die Ausrichtung der Pupille im 3-D-Raum festgelegt. Aus den Ellipsenparametern, welche für jede der beiden ellipsenförmigen Projektionen der Pupille auf den Kamerasensoren bestimmt werden können, lassen sich die Lage und Ausrichtung der Pupille ermitteln. Hierbei sind die Längen der beiden Halbachsen sowie die Rotationswinkel der projizierten Ellipsen charakteristisch für die Ausrichtung der Pupille bzw. die Blickrichtung relativ zu den Kamerapositionen.

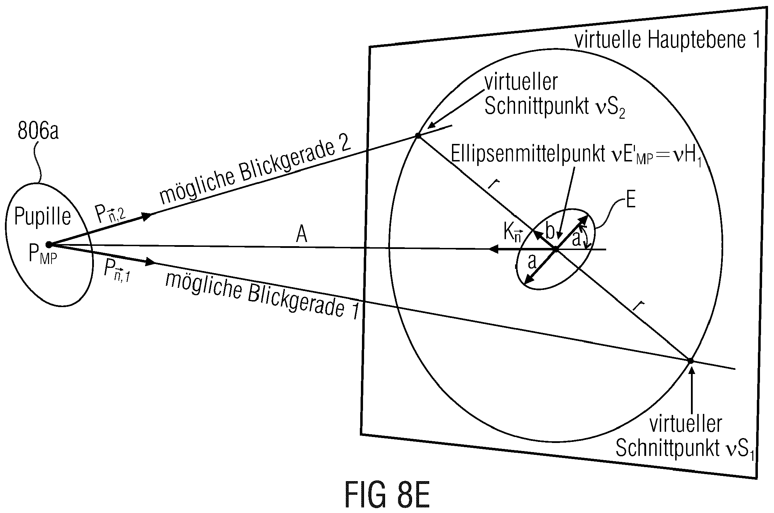

Ein Ansatz zur Berechnung der Blickrichtung aus den Ellipsenparametern und fest im Eyetracking-System abgespeicherten Abständen zwischen den Kameras und dem Auge wird z. B. in der Patentschrift DE 10 2004 046 617 A1 beschrieben. Wie in Fig. 8e dargestellt, geht dieser Ansatz von einer Parallelprojektion aus, wobei die durch die Sensornormale und den Mittelpunkt der auf den Sensor projizierten Pupille definierte Gerade durch den Pupillenmittelpunkt verläuft. Dazu müssen die Abstände der Kameras zum Auge vorab bekannt und fest im Eyetracking-System abgespeichert sein.

Das bei dem hier vorgestellten Ansatzes verwendete Modell des Kameraobjektivs, welches das Abbildungsverhalten eines realen Objektivs beschreibt, findet hingegen eine perspektivische Projektion des Objekts auf den Bildsensor statt. Dadurch kann die Berechnung des Pupillenmittelpunktes erfolgen und die Abstände der Kameras zum Auge müssen nicht vorab bekannt sein, was eine der wesentlichen Neuerungen gegenüber der oben genannten Patentschrift darstellt. Durch die perspektivische Projektion ergibt sich die Form der auf dem Sensor abgebildeten Pupillenellipse allerdings im Gegensatz zur Parallelprojektion nicht allein durch die Neigung der Pupille gegenüber der Sensorfläche. Die Auslenkung $\delta$ des Pupillenmittelpunktes von der optischen Achse des Kameraobjektivs hat, wie in Fig. 8b skizziert, ebenfalls einen Einfluss auf die Form der Pupillenprojektion und somit auf die daraus ermittelten Ellipsenparameter.

Im Gegensatz zur Skizze in Fig. 8b ist der Abstand zwischen Pupille und Kamera mit mehreren hundert Millimetern sehr groß gegenüber dem Pupillenradius, welcher zwischen 2 mm und 8 mm liegt. Daher wird die Abweichung der Pupillenprojektion von einer idealen Ellipsenform, welche bei einer Neigung der Pupille gegenüber der optischen Achse entsteht, sehr gering und kann vernachlässigt werden.

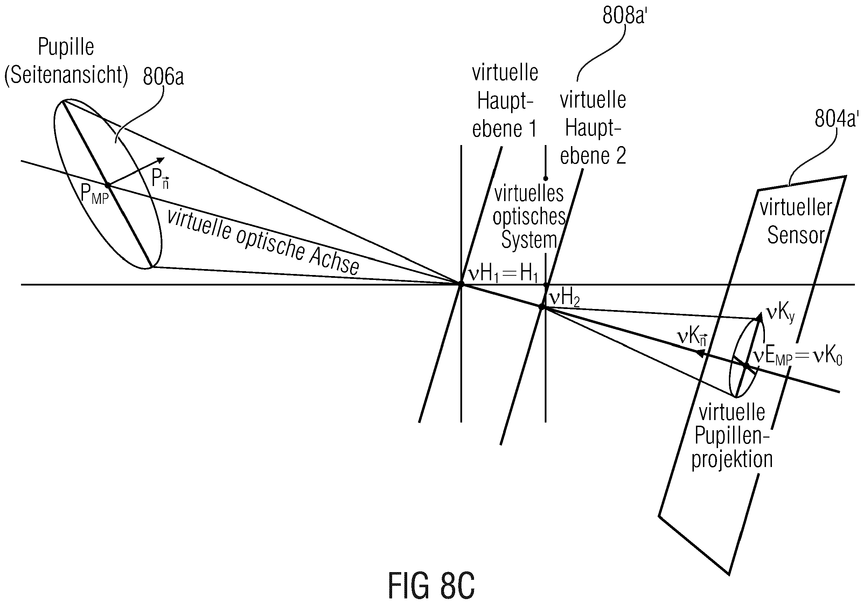

Um den Blickrichtungsvektor $\vec{P_n}$ berechnen zu können, muss der Einfluss des Winkels $\delta$ auf die Ellipsenparameter eliminiert werden, so dass die Form der Pupillenprojektion allein durch die Ausrichtung der Pupille beeinflusst wird. Dies ist immer dann gegeben, wenn der Pupillenmittelpunkt $P_{MP}$ direkt in der optischen Achse des Kamerasystems liegt. Daher kann der Einfluss des Winkels $\delta$ beseitigt werden, indem die Pupillenprojektion auf dem Sensor eines virtuellen Kamerasystems vK berechnet wird, dessen optische Achse direkt durch den zuvor berechneten Pupillenmittelpunkt $P_{MP}$ verläuft, wie in Fig. 8c dargestellt.

Die Lage und Ausrichtung eines solchen virtuellen Kamerasystems 804a' (vK in Fig. 8c) lässt sich aus den Parametern des originalen Kamerasystems 804a (*K* in Fig. 8b) durch Drehung um dessen objektseitigen Hauptpunkt $H_1$ berechnen. Dieser entspricht dadurch gleichzeitig dem objektseitigen Hauptpunkt $vH_1$ des virtuellen Kamerasystems 804a'. Somit sind die Richtungsvektoren der Knotenpunktstrahlen der abgebildeten Objekte vor und hinter dem virtuellen optischen System 808c' identisch zu denen im originalen Kamerasystem. Alle weiteren Berechnungen zur Bestimmung des Blickrichtungsvektors erfolgen im Eyetracker-Koordinatensystem.

Der normierte Normalvektor $vK_{\vec{n}}$ der virtuellen Kamera *vK* ergibt sich folgendermaßen:

$$vK_{\vec{n}} = \frac{P_{MP} - H_1}{\left| P_{MP} - H_1 \right|}$$

$$(A8)$$

Für das weitere Vorgehen ist es erforderlich, die Rotationwinkel um die x-Achse ($vK_{\theta}$), um die y-Achse ($vK_{\varphi}$) und um die z-Achse ($vK_{\psi}$) des Eyetracker-Koordinatensystems zu berechnen um die der Einheitsvektor der z-Richtung des Eyetracker-Koordinatensystems um verschiedene Achsen des Eyetracker-Koordinatensystems gedreht werden muss um den Vektor $vK_{\vec{n}}$ zu erhalten. Durch Drehung des Einheitsvektor der x-Richtung sowie des Einheitsvektors der y-Richtung des Eyetracker-Koordinatensystems um die Winkel $vK_{\theta}$, $vK_{\varphi}$ und $vK_{\psi}$ können die Vektoren $vK_x$ und $vK_{\vec{y}}$ berechnet werden, welche die x- und y- Achse des virtuellen Sensors im Eyetracker-Koordinatensystem angeben.
Um die Lage des virtuellen Kamerasystems 804a' (Fig. 8c) zu erhalten, muss dessen Ortsvektor bzw. Koordinatenursprung *vK0*, welcher gleichzeitig der Mittelpunkt des Bildsensors ist, mittels Gleichung (A9) so berechnet werden, dass er im Knotenpunktstrahl des Pupillenmittelpunktes $P_{MP}$ liegt.

$$vK_0 = vH_1 - (d+b) \cdot vK_{\vec{n}}$$

$$(A9)$$

Die dazu benötigte Distanz *d* zwischen den Hauptpunkten sowie die Entfernung *b* zwischen der Hauptebene 2 und der Sensorebene müssen dazu bekannt sein oder z. B. mit einem Versuchsaufbau experimentell ermittelt werden.
Weiterhin ergibt sich die Lage des bildseitigen Hauptpunktes aus Gleichung (A10).

$$vH_2 = vH_1 - d \cdot vK_{\vec{n}}$$

$$(A10)$$

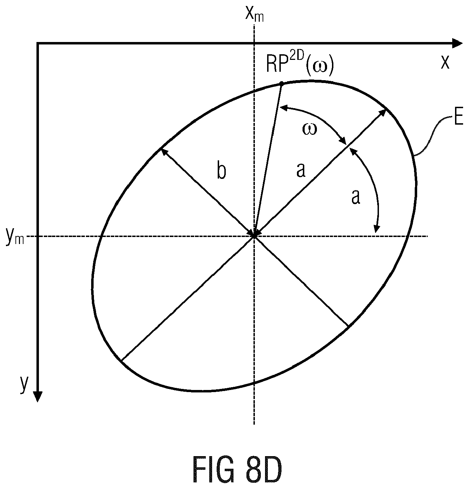

Zur Berechnung der Pupillenprojektion auf dem virtuellen Sensor 804a' werden zunächst Randpunkte $RP^{3D}$ *der* zuvor ermittelten Ellipse auf dem Sensor in Originallage benötigt. Diese ergeben sich aus den Randpunkten $RP^{2D}$ der Ellipse *E* im Kamerabild, wobei entsprechend Fig. 8d $E_a$ die kurze Halbachse der Ellipse ist, $E_b$ die lange Halbachse der Ellipse, $E_{x_m}$ und $E_{y_m}$ die Mittelpunktkoordinaten der Ellipse und $E_{\alpha}$ der Rotationswinkel der Ellipse. Die Lage eines Punktes $RP^{3D}$ im Eyetracker-Koordinatensystem kann durch die Gleichungen (A11) bis (A14) aus den Parametern der Ellipse *E*, des Sensors *S* und der Kamera *K* berechnet werden, wobei ω die Lage eines Randpunktes $RP^{2D}$ entsprechend Fig. 8d auf dem Ellipsenumfang angibt.

$$\begin{bmatrix} x' \\ y' \end{bmatrix} = \begin{bmatrix} E_a \cdot \cos(\omega) \\ E_b \cdot \sin(\omega) \end{bmatrix}$$

$$(A11)$$

$$RP^{2D} = \begin{bmatrix} x' \cdot \cos(E_\alpha) + y' \cdot \sin(E_\alpha) + E_{x_m} \\ -x' \cdot \sin(E_\alpha) + y' \cdot \cos(E_\alpha) + E_{y_m} \end{bmatrix}$$

$$(A12)$$

$$\begin{bmatrix} s_1 \\ t_1 \end{bmatrix} = \left( RP^{2D} \cdot \frac{1}{2} \cdot S_{res} - S_{offset} \right) \cdot S_{PxGr}$$

$$(A13)$$

$$RP^{3D} = K_0 + s_1 \cdot K_{\tilde{x}} + t_1 \cdot K_{\tilde{y}}$$

$$(A14)$$

Die Richtung eines Knotenpunktstrahls $KS$ im originalen Kamerasystem, welcher einen Pupillenrandpunkt als Ellipsenrandpunkt $RP^{3D}$ auf dem Sensor abbildet, ist gleich der Richtung des Knotenpunktstrahls $vKS$ im virtuellen Kamerasystem, welcher den gleichen Pupillenrandpunkt als Ellipsenrandpunkt $RP^{3D}$ auf dem virtuellen Sensor abbildet. Die Knotenpunktstrahlen der Ellipsenrandpunkte in Fig. 8b und Fig. 8c veranschaulichen dies. Somit haben die beiden Strahlen $KS$ und $vKS$ den gleichen Richtungsvektor, welcher sich aus Gleichung (A15) ergibt. Für den Ortsvektor $vKS_0$ des virtuellen sensorseitigen Knotenpunktstrahls $vKS$ gilt immer $vKS_0 = VH_2$.

$$vKS_{\tilde{n}} = KS_{\tilde{n}} = \frac{RP^{3D} - H_2}{\left| RP^{3D} - H_2 \right|}$$

$$(A15)$$

Der virtuelle Knotenpunktstrahl und die virtuelle Sensorebene, welche der x-y-Ebene der virtuellen Kamera vK entspricht, werden in Gleichung (A16) gleichgesetzt, wobei sich durch Auflösen nach $s_2$ und $t_2$ die Parameter ihres Schnittpunktes ergeben. Mit diesen kann durch Gleichung (A17) der Ellipsenrandpunkt in Pixelkoordinaten im Bild der virtuellen Kamera berechnet werden.

$$vKS_0 + r_2 \cdot vKS_{\tilde{n}} = K_0 + s_2 \cdot K_{\tilde{x}} + t_2 \cdot K_{\tilde{y}}$$

$$(A16)$$

$$vRP^{2D} = \begin{bmatrix} s_2 \\ t_2 \end{bmatrix} \cdot \frac{1}{S_{PxGr}} + \left( \frac{1}{2} S_{res} - S_{offset} \right)$$

$$(A17)$$

Anschließend können aus mehreren virtuellen Randpunkten $vRP^{2D}$ mittels Ellipsenfitting, z. B. mit dem "Direct least square fitting of ellipses" Algorithmus nach Fitzgibbon et al., die Parameter der in Fig. 8c dargestellten virtuellen Ellipse $vE$ berechnet werden. Dazu werden mindestens sechs virtuelle Randpunkte $vRP^{2D}$ benötigt, welche durch Einsetzen unterschiedlicher $\omega$ in Gleichung (A11) mit dem oben beschriebenen Weg berechnet werden können.

Die Form der so ermittelten virtuellen Ellipse vE ist nur noch von der Ausrichtung der Pupille abhängig. Außerdem liegt ihr Mittelpunkt immer im Mittelpunkt des virtuellen Sensors und bildet zusammen mit der Sensornormalen, welche der Kameranormalen $vK_{\tilde{n}}$ entspricht, eine entlang der optischen Achse verlaufende Gerade durch den Pupillenmittelpunkt $P_{MP}$. Somit sind die Voraussetzungen erfüllt, um aufbauend auf dem in der Patentschrift DE 10 2004 046 617 A1 vorgestellten Ansatz nachfolgend die Blickrichtung zu berechnen. Dabei ist es mit diesem Ansatz nun auch möglich durch die Nutzung des oben beschriebenen virtuellen Kamerasystems die Blickrichtung zu bestimmen, wenn der Pupillenmittelpunkt außerhalb der optischen Achse des realen Kamerasystems liegt, was in realen Anwendungen nahezu immer der Fall ist.

Wie in Fig. 8e dargestellt, wird die zuvor berechnete virtuelle Ellipse *vE* nun in der virtuellen Hauptebene 1 angenommen. Da der Mittelpunkt von vE im Mittelpunkt des virtuellen Sensors und somit in der optischen Achse liegt, entspricht der 3-D-Ellipsemittelpunkt $vE'_{MP}$ dem virtuellen Hauptpunkt 1. Er ist auch gleichzeitig der Lotfußpunkt des Pupillenmittelpunktes $P_{MP}$ in der virtuellen Hauptebene 1. Nachfolgend werden nur noch das Achsenverhältnis und der Rotationswinkel der Ellipse *vE* genutzt. Diese Formparameter von *vE* können dabei auch bezogen auf die Hauptebene 1 unverändert genutzt werden, da die Ausrichtungen der x- und y-Achse der 2-D-Sensorebene, auf welche sie sich beziehen, der Ausrichtung der 3-D-Sensorebene entsprechen und somit auch der Ausrichtung der Hauptebene 1.

Jede Abbildung der Pupille 806a in einem Kamerabild kann durch zwei verschiedene Ausrichtungen der Pupille entstehen. Bei der Auswertung der Pupillenform ergeben sich daher, wie Fig. 8e zeigt, aus den Ergebnissen jeder Kamera zwei virtuelle Schnittpunkte *vS* der zwei möglichen Blickgeraden mit der virtuellen Hauptebene 1. Entsprechend der geometrischen Verhältnisse in Fig. 8e können die beiden möglichen Blickrichtungen $P_{\vec{n},1}$ und $P_{\vec{n},2}$ folgendermaßen bestimmt werden.

Der Abstand A zwischen dem bekannten Pupillenmittelpunkt und dem Ellipsenmittelpunkt $vE'_{MP}$ ist:

$$A = \left| vH_1 - P_{MP} \right|$$

$$(A18)$$

Daraus lässt sich *r* mit Gleichung A19 bestimmen.

$$r = \frac{\sqrt{a^2 - b^2}}{b} \cdot A$$

$$(A19)$$

Die beiden Richtungsvektoren $\vec{r}_{\vec{n},1}$ sowie $\vec{r}_{\vec{n},2}$, welche von $vH_1$ aus auf $vS_1$ sowie $vS_2$ gerichtet sind, werden analog zu den Gleichungen

$$M_\varphi = \begin{bmatrix} 1 & 0 & 0 \\ 0 & \cos(\varphi) & -\sin(\varphi) \\ 0 & \sin(\varphi) & \cos(\varphi) \end{bmatrix}$$

$$M_\theta = \begin{bmatrix} \cos(\theta) & 0 & \sin(\theta) \\ 0 & 1 & 0 \\ -\sin(\theta) & 0 & \cos(\theta) \end{bmatrix}$$

$$M_\psi = \begin{bmatrix} \cos(\psi) & -\sin(\psi) & 0 \\ \sin(\psi) & \cos(\varphi) & 0 \\ 0 & 0 & 1 \end{bmatrix}$$

$$\vec{v}' = M_\theta \cdot M_\varphi \cdot M_\psi \cdot \vec{v}$$

aus $vK\theta$, $vK\varphi$, $vK_\psi$ und $vE_\alpha$ berechnet:

$$r_{\vec{n},1} = M_{\theta=vK_0} \cdot M_{\varphi=vK_\varphi} \cdot M_{\psi=vK_\psi-90°-vE_\alpha} \cdot [1,0,0]^T$$

$$(A20)$$

$$r_{\vec{n},2} = M_{\theta=vK_0} \cdot M_{\varphi=vK_\varphi} \cdot M_{\psi=vK_\psi+90°-vE_\alpha} \cdot [1,0,0]^T \qquad (A21)$$

Anschließend können die beiden virtuellen Schnittpunkte $vS_1$ sowie $vS_2$ und daraus die möglichen Blickrichtungen $P_{\vec{n},1}$ sowie $P_{\vec{n},2}$ ermittelt werden.

$$vS_1 = vH_1 + r \cdot r_{\vec{n},1}$$

$$(A22)$$

$$vS_2 = vH_1 + r \cdot r_{\vec{n},2}$$

$$(A23)$$

$$P_{\vec{n},1} = \frac{vS_1 - P_{MP}}{|vS_1 - P_{MP}|}$$

$$(A24)$$

$$P_{\vec{n},2} = \frac{vS_2 - P_{MP}}{|vS_2 - P_{MP}|}$$

$$(A25)$$

Um die tatsächliche Blickrichtung zu bestimmen, werden die möglichen Blickrichtungen der Kamera 1 ( $P_{\vec{n},1}^{K1}$ sowie $P_{\vec{n},2}^{K1}$ ) und der Kamera 2 ( $P_{\vec{n},1}^{K2}$ sowie $P_{\vec{n},2}^{K2}$ ) benötigt. Von diesen vier Vektoren gibt jeweils einer von jeder Kamera die tatsächliche Blickrichtung an, wobei diese beiden normierten Vektoren im Idealfall identisch sind. Um sie zu identifizieren, werden für alle vier möglichen Kombinationen aus einem Vektor der einen Kamera und einem Vektor der anderen Kamera die Differenzen der jeweils ausgewählten möglichen Blickrichtungsvektoren gebildet. Die Kombination, bei welcher sich die geringste Differenz ergibt, enthält die gesuchten Vektoren. Diese ergeben gemittelt den zu bestimmenden Blickrichtungsvektor $P_{\vec{n}}$. Bei Mittelung muss von einer nahezu zeitgleichen Bildaufnahme ausgegangen werden, damit von beiden Kameras die gleiche Pupillenlage sowie die gleiche -ausrichtung und somit die gleiche Blickrichtung erfasst wurde.

Als Maß für die Genauigkeit des berechneten Blickrichtungsvektor kann zusätzlich der Winkel $w_{diff}$ zwischen den beiden gemittelten Vektoren $P_{\vec{n}}^{K1}$ und $P_{\vec{n}}^{K2}$ , welche die tatsächliche Blickrichtung angeben, berechnet werden. Je geringer $w_{diff}$ ist, desto genauer waren die Modellparameter und Ellipsenmittelpunkte, welche für die bisherigen Berechnungen genutzt wurden.

$$w_{diff} = \arccos\left(\frac{P_{\vec{n}}^{K1} \circ P_{\vec{n}}^{K2}}{\left|P_{\vec{n}}^{K1}\right| \cdot \left|P_{\vec{n}}^{K2}\right|}\right) \qquad (A26)$$

Die Blickwinkel $\theta_{BW}$ und $\varphi_{BW}$ gegenüber der Normallage der Pupille ($P_{\vec{n}}$ liegt parallel zur z-Achse des Eyetracker-Koordinatensystems) können mit den Gleichungen

$$\varphi_{BW} = \arcsin\left(-P_{\vec{n}}^{y}\right)$$

und

$$\theta_{BW} = \begin{cases} 0° & wenn & (z=0) \wedge (x=0) \\ 90° & wenn & (z=0) \wedge (x<0) \\ -90° & wenn & (z=0) \wedge (x>0) \\ \tan\left(\frac{P_{\vec{n}}^{x}}{P_{\vec{n}}^{z}}\right) - 180° & wenn & (z<0) \wedge (x<0) \\ \tan\left(\frac{P_{\vec{n}}^{x}}{P_{\vec{n}}^{z}}\right) + 180° & wenn & (z<0) \wedge (x \geq 0) \\ \tan\left(\frac{P_{\vec{n}}^{x}}{P_{\vec{n}}^{z}}\right) & sonst \end{cases}$$

berechnet werden.

Falls eine systematische Abweichung der Blickrichtung von der optischen Achse des Auges bzw. von der Pupillennormale berücksichtigt werden soll, können die entsprechenden Winkel zu den ermittelten Blickwinkeln $\theta_{BW}$ und $\varphi_{BW}$ hinzuaddiert werden. Der neue Blickrichtungsvektor muss dann mittels Gleichung

$$P_{\vec{n}}' = M_{\theta=\theta_{BW}'} \cdot M_{\varphi=\varphi_{BW}'} \cdot M_{\psi=0} \cdot \vec{z}$$

aus den neuen Blickwinkeln $\theta_{BW}'$ und $\varphi_{BW}'$ und $\vec{z} = [0,0,1]^T$ berechnet werden.

Mit dem Blickrichtungsvektor $P_{\vec{n}}$ ist (neben dem Pupillemittelpunkt $P_{MP}$ aus Gleichung A6) auch der zweite Parameter der vom 3D-Bildanalysator zu bestimmenden Blickgeraden (LoS) bekannt. Diese ergibt sich entsprechend folgender Gleichung

$$LoS(t) = P_{MP} + t \cdot P_{\vec{n}}.$$

Die Implementierung des oben vorgestellten Verfahrens ist plattformunabhängig, so dass das oben vorgestellte Verfahren auf verschiedenen Hardwareplattformen, wie z.B. einem PC ausgeführt werden kann.

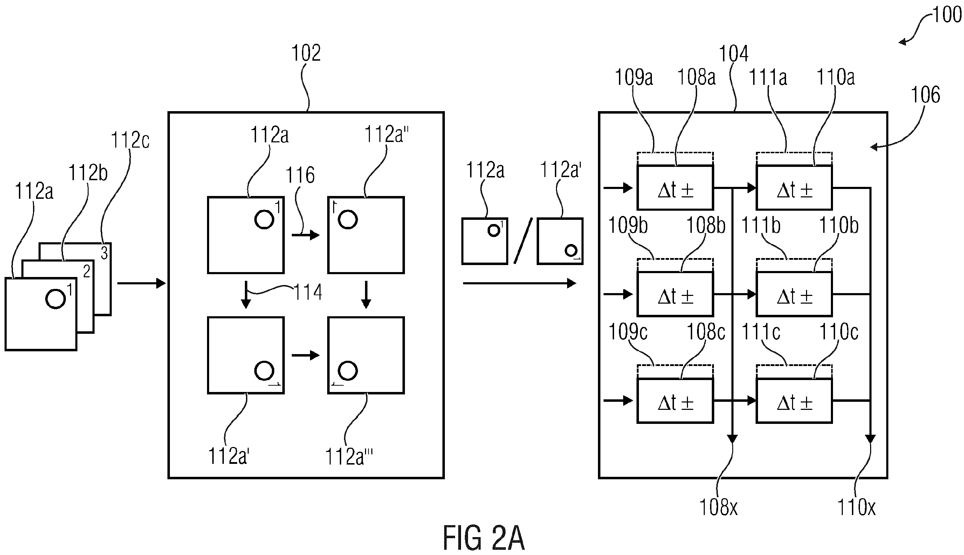

Fig. 2a zeigt einen Hough-Prozessor 100 mit einem Pre-Prozessor 102 und einer Hough-Transformationseinrichtung 104. Der Pre-Prozessor 102 stellt die erste Signalverarbeitungsstufe dar und ist informatorisch an die Hough-Transformationseinrichtung 104 gekoppelt. Die Hough-Transformationseinrichtung 104 weist einen Verzögerungsfilter 106 auf, der mindestens ein, bevorzugt aber eine Vielzahl von Verzögerungselementen 108a, 108b, 108c, 110a, 110b und 110c umfassen kann. Die Verzögerungselemente 108a bis 108c und 110a bis 110c des Verzögerungsfilters 106 sind typischerweise als Matrix, also in Spalten 108 und 110 und Zeilen a bis c angeordnet und signaltechnisch miteinander gekoppelt. Entsprechend dem Ausführungsbeispiel aus Fig. 2a weist zumindest eines der Verzögerungsglieder 108a bis 108c bzw. 110a bis 110c eine einstellbare Verzögerungszeit auf, hier symbolisiert anhand des "+/-"-Symbols. Zur Ansteuerung der Verzögerungselemente 108a bis 108c und 110a bis 110c bzw. zur Steuerung derselben kann eine separate Ansteuerlogik bzw. ein Ansteuerregister (nicht dargestellt) vorgesehen sein. Diese Steuerlogik steuert die Verzögerungszeit der einzelnen Verzögerungselemente 108a bis 108c bzw. 110a bis 110c über optionale schaltbare Elemente 109a bis 109c bzw. 111a bis 111c, die beispielsweise einen Multiplexer und einen Bypass umfassen können. Die Hough-Transformationseinrichtung 104 kann ein zusätzliches Konfigurationsregister (nicht dargestellt) zur initialen Konfiguration der einzelnen Verzögerungselemente 108a bis 108c und 110a bis 110c umfassen.

Der Pre-Prozessor 102 hat die Aufgabe, die einzelnen Samples 112a, 112b und 112c so aufzubereiten, dass diese durch die Hough-Transformationseinrichtung 104 effizient verarbeitet werden können. Hierzu empfängt der Pre-Prozessor 102 die Bilddatei bzw. die mehreren Samples 112a, 112b und 112c und führt eine Vorverarbeitung, z.B. in Form einer Drehung und/oder in Form einer Spiegelung durch, um die mehreren Versionen (vgl. 112a und 112a') an die Hough-Transformationseinrichtung 104 auszugeben. Die Ausgabe kann seriell erfolgen, wenn die Hough-Transformationseinrichtung 104 einen Hough-Kern 106 aufweist, oder auch parallel, wenn mehrerer Hough-Kerne vorgesehen sind. D.h. also, dass je nach Umsetzung die n Versionen des Bildes entweder vollständig parallel, semi-parallel (also nur zum Teil parallel) oder seriell ausgegeben und bearbeitet werden. Die Vorverarbeitung im Pre-Prozessor 102, die dem Zweck dient, mit einem Suchmuster bzw. einer Hough-Kernkonfiguration mehrere ähnliche Muster (steigende und fallende Gerade) zu detektieren, wird nachfolgend anhand des ersten Samples 112a erläutert.

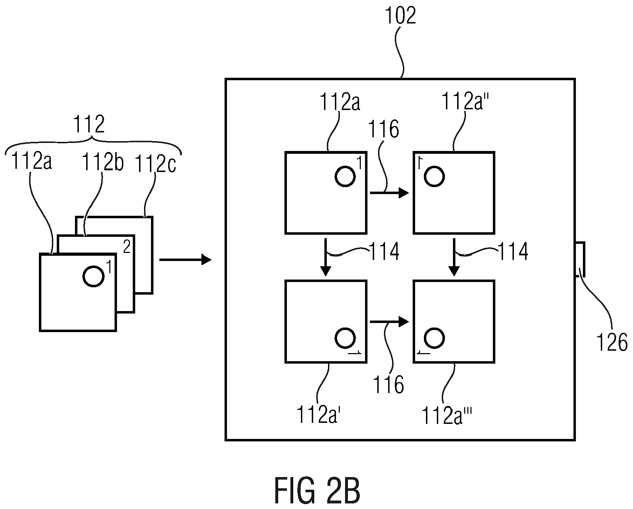

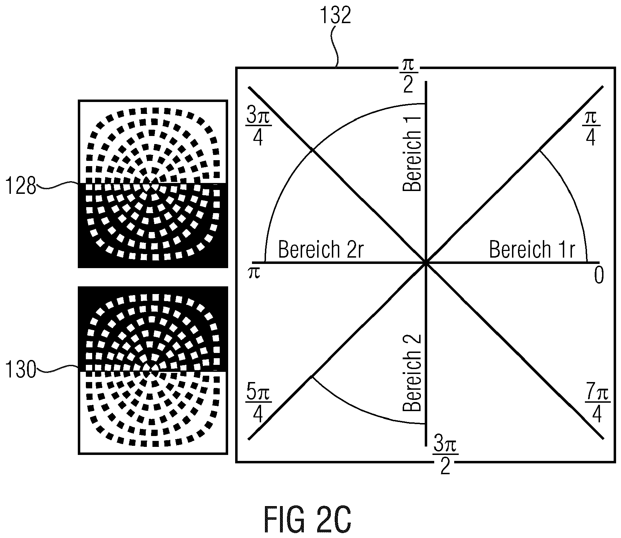

Dieses Sample kann beispielsweise gedreht, z.B. um 90° gedreht, werden, um die gedrehte Version 112a' zu erhalten. Dieser Vorgang des Drehens ist mit dem Bezugzeichen 114 versehen. Hierbei kann die Drehung entweder um 90°, aber auch um 180° oder 270° bzw. allgemein um 360°/n erfolgen, wobei angemerkt sei, dass je nach nachgelagerter Hough-Transformation (vgl. Hough-Transformationseinrichtung 104) sehr effizient sein kann, nur eine 90°-Umdrehung durchzuführen. Auf diese Unteraspekte wird Bezug nehmend auf Fig. 2b und 2c eingegangen. Ferner kann das Bild 112a auch gespiegelt werden, um die gespiegelte Version 112a" zu erhalten. Der Vorgang des Spiegelns ist mit dem Bezugzeichen 116 versehen. Das Spiegeln 116 entspricht einem rückwärtigen Auslesen des Speichers. Sowohl ausgehend von der gespiegelten Version 112a" als auch von der gedrehten Version 112a' kann eine vierte Version durch eine gedrehte und gespiegelte Version 112a'" erhalten werden, indem entweder der Vorgang 114 oder 116 durchgeführt wird. Auf Basis der Spiegelung 116 können dann zwei ähnliche Muster (z.B. nach rechts geöffneter Halbkreis und nach links geöffneter Halbkreis) mit derselben Hough-Kernkonfiguration, wie nachfolgenden beschrieben, detektiert werden.

Die Hough-Transformationseinrichtung 104 ist dazu ausgebildet, um in der durch den Pre-Prozessor 102 zur Verfügung gestellten Version 112a bzw. 112a' (oder 112a" bzw. 112a'") ein vorbestimmtes gesuchtes Muster, wie z.B. eine Ellipse oder ein Segment einer Ellipse, einen Kreis oder Segment eines Kreises, oder eine Gerade bzw. ein Grabensegment zu detektieren. Hierzu ist die Filteranordnung entsprechend dem gesuchten vorbestimmten Muster konfiguriert. Abhängig von der jeweiligen Konfiguration werden manche der Verzögerungselemente 108a bis 108c bzw. 110a bis 110c aktiviert oder gebypassed. Infolgedessen werden bei Anlegen eines Bildstreifens des zu untersuchenden Bildes 112a bzw. 112a' an die Transformationseinrichtung 104 durch die Verzögerungselemente 108a bis 108c einige Pixel selektiv verzögert, was einer Zwischenspeicherung entspricht, und andere direkt zur nächsten Spalte 110 weitergeleitet. Durch diesen Vorgang werden dann gekrümmte oder schräge Geometrien "geradegebogen". Abhängig von der eingelesenen Bilddatei 112a bzw. 112a', bzw., um genau zu sein, abhängig von der von der Bildstruktur der angelegten Zeile des Bildes 112a bzw. 112a' kommt es zu hohen Spaltensummen in einer der Spalten 108 oder 110, während die Spaltensummen in anderen Spalten niedriger sind. Die Spaltensumme wird über den Spaltensummenausgang 108x bzw. 110x ausgegeben, wobei hier optional ein Additionselement (nicht dargestellt) zur Bildung der Spaltensumme je Spalte 108 oder 110 vorgesehen sein kann. Bei einem Maximum einer der Spaltensummen kann auf das Vorhandensein einer gesuchten Bildstruktur oder eines Segments der gesuchten Bildstruktur oder zumindest auf das zugehörige Maß der Übereinstimmung mit der gesuchten Struktur geschlossen werden. Das heißt also, dass je Verarbeitungsschritt der Bildstreifen um ein Pixel bzw. um eine Spalte 108 oder 110 weitergeschoben wird, so dass bei jedem Verarbeitungsschritt anhand eines Ausgangshistogramms erkennbar ist, ob eine der gesuchten Strukturen detektiert ist oder nicht, oder ob die Wahrscheinlichkeit des Vorhandenseins der gesuchten Struktur entsprechend hoch ist. In anderen Worten ausgedrückt heißt das, dass das Überschreiten eines Schwellenwerts der jeweiligen Spaltensumme der Spalte 108 oder 110 die Detektion eines Segments der gesuchten Bildstruktur anzeigen, wobei jede Spalte 108 oder 110 einem gesuchten Muster bzw. einer Ausprägung eines gesuchten Musters (z.B. Winkel einer Geraden oder Radius eines Kreises) zugeordnet ist. Es sei an dieser Stelle angemerkt, dass für die jeweilige Struktur nicht nur das jeweilige Verzögerungselement 110a, 110b und 110c der jeweiligen Zeile 110 maßgeblich ist, sondern insbesondere die vorherigen Verzögerungselemente 108a, 108b und 108c in Kombination mit den nachfolgenden Verzögerungselementen 110a, 110b und 110c. Entsprechend dem Stand der Technik sind derartige Strukturen bzw. Aktivierungen von Verzögerungselementen bzw. Bypass von vornherein vorgegeben.

Über die variablen Verzögerungselemente 108a bis 108c bzw. 110a bis 110c (Verzögerungselemente) kann die gesuchte Ausprägung (also z.B. der Radius oder der Anstieg) im laufenden Betrieb angepasst werden. Da die einzelnen Spalten 108 und 110 miteinander gekoppelt sind, erfolgt bei Anpassen der Verzögerungszeit eines der Verzögerungselemente 108a bis 108c bzw. 110a bis 110c eine Veränderung der gesamten Filtercharakteristik des Filters 106. Durch die flexible Anpassung der Filtercharakteristik des Filters 106 der Hough-Transformationseinrichtung 104 ist es möglich, den Transformationskern 106 während der Laufzeit anzupassen, so dass beispielsweise dynamische Bildinhalte, wie z.B. für kleine und große Pupillen, mit demselben Hough-Kern 106 erfasst und getrackt werden können. Auf die genaue Implementierung, wie die Verzögerungszeit angepasst werden kann, wird in Fig. 3c eingegangen. Um nun dem Hough-Prozessor 100 bzw. der Transformationseinrichtung 104 mehr Flexibilität zu ermöglichen, sind bevorzugt alle Verzögerungselemente 108a, 108b, 108c, 110a, 110b und/oder 110c (oder zumindest eine der genannten) mit einer variablen oder diskret schaltbaren Verzögerungszeit ausgeführt, so dass während des Betriebes aktiv zwischen unterschiedlichen zu detektierenden Mustern bzw. zwischen unterschiedlichen Ausprägungen der zu detektierenden Muster hin- und hergeschaltet werden kann.

Entsprechend weiteren Ausführungsbeispielen ist die Größe des dargestellten Hough-Kerns 104 konfigurierbar (entweder im Betrieb oder vorab), so dass also zusätzliche Hough-Zellen aktiviert oder deaktiviert werden können.

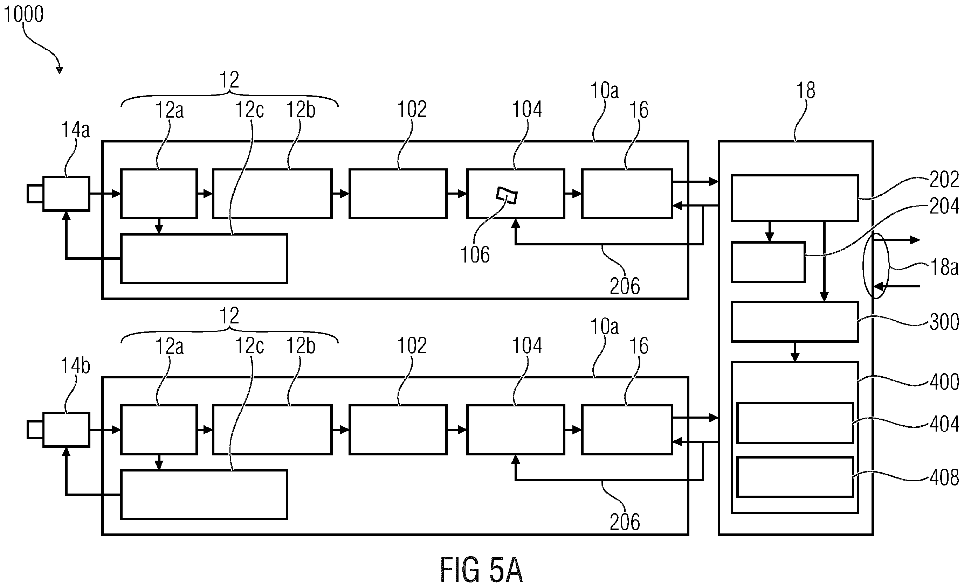

Entsprechend weiteren Ausführungsbeispielen kann die Transformationseinrichtung 104 mit Mitteln zur Einstellung derselben bzw., um genau zu sein, zur Einstellung der einzelnen Verzögerungselemente 108a bis 108c und 110a bis 110c, wie z.B. mit einem Controller (nicht dargestellt) verbunden sein. Der Controller ist beispielsweise in einer nachgeschalteten Verarbeitungseinrichtung angeordnet und dazu ausgebildet, um die Verzögerungscharakteristik des Filters 106 anzupassen, wenn kein Muster erkannt werden kann oder wenn die Erkennung nicht ausreichend gut ist (geringe Übereinstimmung des Bildinhaltes mit den gesuchten Mustern es Vorhandenseins des gesuchten Musters). Auf diesem Controller wird Bezug nehmend auf Fig. 5a eingegangen.

Das oben genannte Ausführungsbeispiel hat den Vorteil, dass dieses einfach und flexibel zu realisieren ist und insbesondere auch auf einem FPGA implementiert werden kann. Hintergrund hierzu ist, dass die oben beschriebene parallele Hough-Transformation ohne Regressionen auskommt und sozusagen vollständig parallelisiert ist. Deshalb beziehen sich weitere Ausführungsbeispiele auf FPGAs, die zumindest die Hough-Transformationseinrichtung 104 und/oder den Pre-Prozessor 102 aufweisen. Bei einer Implementierung der oben beschriebenen Vorrichtung auf einem FPGA, z.B. einen XILINX Spartan 3ADSP, konnte eine sehr hohe Frame-Rate, von beispielsweise 60 FPS bei einer Auflösung von 640x480, unter Nutzung von einer Taktfrequenz bei 96 MHz erzielt werden, da durch die oben beschriebene Struktur 104 mit der Vielzahl der Spalten 108 und 110 eine parallele Verarbeitung bzw. eine sogenannte parallele Hough-Transformation möglich ist.

An dieser Stelle sei daraufhingewiesen, dass bei obigen und nachfolgende Ausführungsbeispielen mit "Blickrichtung" bzw. "Blickvektor" in erster Linie die optische Achse des Auges gemeint ist. Diese optische Achse des Auges ist von der Sehachse des Auges zu unterscheiden, wobei die optische Achse des Auges aber als Schätzung für die Sehachse dienen kann, da diese Achsen typischerweise voneinander abhängig sind. So kann beispielsweise durch das Einbeziehen von Korrekturwinkeln aus der optischen Achse des Auges eine Richtung bzw. ein Richtungsvektor berechnet werden, der noch eine deutlich bessere Schätzung der Ausrichtung der tatsächlichen Sehachse des Auges ist.

Fig. 2a und 2b zeigen den Pre-Prozessor 102, der zur Vorverarbeitung des Videodatenstroms 112 mit den Frames 112a, 112b und 112c dient. Der Pre-Prozessor 102 ist dazu ausgebildet, die Samples 112 als binäre Kantenbilder oder auch als Gradientenbilder zu empfangen und auf Basis dieser die Rotation 114 bzw. die Spiegelung 116 durchzuführen, um die vier Versionen 112a, 112a', 112a" und 112a'" zu erhalten. Hintergrund hierzu ist, dass typischerweise die parallele Hough-Transformation, wie sie durch die Hough-Transformationseinrichtung ausgeführt wird, auf zwei oder vier jeweils vorverarbeiteten, z.B. um 90° versetzten, Versionen eines Bildes 112a aufbaut. Wie in Fig. 2b dargestellt ist, erfolgt zuerst eine 90°-Drehung (112a zu 112a'), bevor die zwei Versionen 112a und 112a' horizontal gespiegelt werden (vgl. 112a zu 112a" und 112a' zu 112a'"). Um die Spiegelung 116 und/oder die Rotation 114 durchzuführen, weist der Pre-Prozessor in entsprechenden Ausführungsbeispielen einen internen oder externen Speicher auf, der dazu dient, die empfangenen Bilddateien 112 vorzuhalten.

Die Verarbeitung Drehen 114 und/oder Spiegeln 116 des Pre-Prozessors 102 hängt von der nachgelagerten Hough-Transformationseinrichtung, der Anzahl der parallelen Hough-Kerne (Parallelisierungsgrad) und der Konfiguration derselben ab, wie insbesondere Bezug nehmend auf Fig. 2c beschrieben wird. Insofern kann der Pre-Prozessor 102 dazu ausgebildet sein, um den vorverarbeiteten Videostrom je nach Parallelisierungsgrad der nachgelagerten Hough-Transformationseinrichtung 104 entsprechend einer der drei folgenden Konstellationen über den Ausgang 126 auszugeben:

100% Parallelisierung: Simultane Ausgabe von vier Videodatenströmen, nämlich einer nicht-rotierten und nicht-gespiegelten Version 112a, einer um 90° rotierten Version 112a', und jeweils eine gespiegelte Version 112a" und 112a'".

50% Parallelisierung: Ausgabe von zwei Videodatenströmen, nämlich nicht-rotiert 112a und um 90% gespiegelt 112a' in einem ersten Schritt und Ausgabe der jeweils gespiegelten Varianten 112a" und 112a'" in einem zweiten Schritt.

25% Parallelisierung: jeweils Ausgabe eines Videodatenstroms, nämlich nicht-rotiert 112a, um 90° rotiert 112a', gespiegelt 112a" und gespiegelt und rotiert 112a'" sequenziell.

Alternativ zu obiger Variante wäre es auch denkbar, dass basierend auf der ersten Version drei weitere Versionen allein durch Drehung, also beispielsweise durch Drehung um 90°, 180° und 270°, erstellt werden, auf Basis derer die Hough-Transformation erfolgt.

Entsprechend weiteren Ausführungsbeispielen kann der Pre-Prozessor 102 dazu ausgebildet sein, auch weitere Bildverarbeitungsschritte, wie z.B. ein Up-Sampling, durchzuführen. Zusätzlich wäre es auch möglich, dass der Pre-Prozessor das Gradientenbild erzeugt. Für den Fall, dass die Gradientenbilderzeugung Teil der Bildvorverarbeitung wird, könnte das Grauwertbild (Ausgangsbild) im FPGA rotiert werden.

Fig. 2c zeigt zwei Hough-Kernkonfigurationen 128 und 130, z.B. für zwei parallele 31x31 Hough-Kerne, so konfiguriert, um eine Gerade bzw. einen geraden Abschnitt zu erkennen. Des Weiteren ist ein Einheitskreis 132 aufgetragen, um zu illustrieren, in welchen Winkelbereichen die Detektion möglich ist. Es sei an dieser Stelle angemerkt, dass die Hough-Kernkonfiguration 128 und 130 jeweils so zu sehen sind, dass die weißen Punkte die Verzögerungselemente illustrieren. Die Hough-Kernkonfiguration 128 entspricht einem sogenannte Typ 1 Hough-Kern, während die Hough-Kernkonfiguration 130 einem sogenannten Typ 2 Hough-Kern entspricht. Wie an dem Vergleich der zwei Hough-Kernkonfigurationen 128 und 130 zu erkennen ist, stellt der eine die Inverse des anderen dar. Mit der ersten Hough-Kernkonfiguration 128 kann eine Gerade in dem Bereich 1 zwischen $3\pi/4$ und $\pi/2$ detektiert werden, während eine Gerade in dem Bereich $3\pi/2$ und $5\pi/4$ (Bereich 2) mittels der Hough-Kernkonfiguration 130 detektierbar ist. Um in den weiteren Bereichen eine Detektion zu ermöglichen, wird, wie oben beschrieben, die Hough-Kernkonfiguration 128 und 130 auf die rotierte Version des jeweiligen Bildes angewendet. Folglich kann dann mittels der Hough-Kernkonfiguration 128 der Bereich 1r zwischen $\pi/4$ und null und mittels der Hough-Kernkonfiguration 130 der Bereich 2r zwischen $\pi$ und $3\pi/4$ erfasst werden.

Alternativ kann bei Einsatz nur eines Hough-Kerns (z.B. eines Typ 1 Hough-Kerns) eine Rotation des Bildes einmal um 90°, einmal um 180° und einmal um 270° sinnvoll sein, um die oben beschrieben Varianten der Geradenausrichtung zu erfassen. Andererseits kann durch die Flexibilität bei der Konfiguration des Hough-Kerns auch nur ein Hough-Kern-Typ eingesetzt werden, der während des laufenden Betriebs so umkonfiguriert wird bzw. bei dem die einzelne Verzögerungselemente zu- oder abgeschaltet werden können, dass der Hough-Kern dem invertierten Typ entspricht. In anderen Worten ausgedrückt heißt das also, dass bei Einsatz des Pre-Prozessors 102 (im 50% Parallelisierungs-Betrieb) und der konfigurierbaren Hough-Transformationseinrichtung 104 mit nur einem Hough-Kern und mit nur einer Bildrotation die vollständige Funktionalität abbildbar ist, die sonst nur mittels zwei parallelen Hough-Kern abgedeckt werden kann. Insofern wird klar, dass die jeweilige Hough-Kernkonfiguration bzw. die Wahl des Hough-Kern-Typs abhängig von dem Pre-Processing, welches durch den Pre-Prozessor 102 durchgeführt wird, ist.

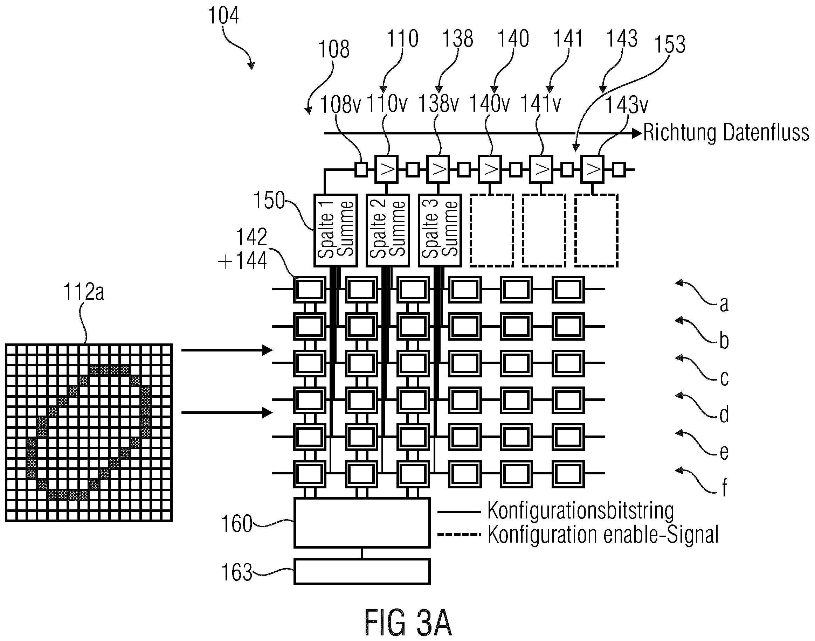

Fig. 3a zeigt einen Hough-Kern 104 mit m Spalten 108, 110, 138, 140, 141 und 143 und n Zeilen a, b, c, d, e und f, so dass m x n Zellen gebildet werden. Die Spalte 108, 110, 138, 140, 141 und 143 des Filters steht für eine bestimmte Ausprägung der gesuchten Struktur, z.B. für eine bestimmte Krümmung oder einen bestimmten geraden Anstieg.

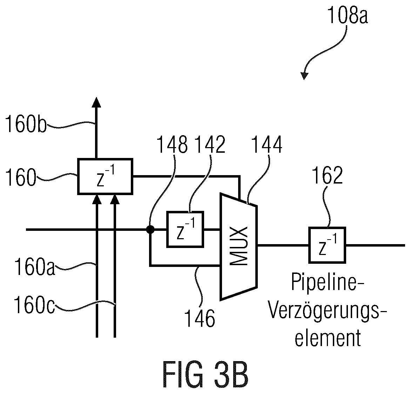

Jede Zelle umfasst ein hinsichtlich Verzögerungszeit einstellbares Verzögerungselement, wobei in diesem Ausführungsbeispiel der Einstellmechanismus dadurch realisiert ist, dass jeweils ein schaltbares Verzögerungselement mit einem Bypass vorgesehen ist. Nachfolgend wird anhand von Fig. 3b der Aufbau aller Zelle stellvertretend erläutert. Die Zelle (108a) aus Fig. 3b umfasst das Verzögerungselement 142, einen fernbedienbaren Schalter 144, wie z.B. einen Multiplexer, und einen Bypass 146. Mittels des fernbedienbaren Schalters 144 kann entweder das Zeilensignal über das Verzögerungselement 142 geleitet werden oder unverzögert zu dem Knotenpunkt 148 geführt werden. Der Knotenpunkt 148 ist einerseits mit dem Summenelement 150 für die Spalte (z.B. 108) verbunden, wobei andererseits über diesen Knotenpunkt 148 auch die nächste Zelle (z.B. 110a) angebunden ist.

Der Multiplexer 144 wird über ein sogenanntes Konfigurationsregister 160 konfiguriert (vgl. Fig. 3a). Es sei an dieser Stelle angemerkt, dass das hier dargestellte Bezugszeichen 160 sich nur auf einen Teil des Konfigurationsregisters 160 bezieht, welcher direkt mit dem Multiplexer 144 gekoppelt ist. Das Element des Konfigurationsregisters 160 ist dazu ausgebildet, den Multiplexer 144 zu steuern und erhält dazu über einen ersten Informationseingang 160a eine Konfigurationsinformation, die beispielsweise aus einer Konfigurationsmatrize stammt, welche im FPGA-internen BRAM 163 abgelegt ist. Diese Konfigurationsinformation kann ein spaltenweiser Bitstring sein und bezieht sich auf die Konfiguration mehrerer der (auch während der Transformation) konfigurierbaren Verzögerungs-Zellen (142+144). Deshalb kann die Konfigurationsinformation ferner über den Ausgang 160b weitergeleitet werden. Da die Umkonfiguration nicht zu jedem Zeitpunkt des Betriebes möglich ist, erhält das Konfigurationsregister 160 bzw. die Zelle des Konfigurationsregisters 160 ein sogenanntes Enablersignal über einen weiteren Signaleingang 160c, mittels welchem die Umkonfiguration veranlasst wird. Hintergrund hierzu ist, dass die Rekonfiguration des Hough-Kerns eine gewisse Zeit benötigt, die von der Anzahl der Verzögerungselemente bzw. insbesondere von der Größe einer Spalte abhängig ist. Dabei ist für jedes Spaltenelement ein Taktzyklus zugeordnet und es kommt zu einer Latenz von wenigen Taktzyklen durch den BRAM 163 bzw. die Konfigurationslogik 160. Die Gesamtlatenz zur Rekonfiguration ist für videobasierte Bildverarbeitungen typischerweise vernachlässigbar. Es sei davon ausgegangen, dass in dem vorliegenden Ausführungsbeispiel die mit einem CMOS-Sensor aufgezeichneten Videodatenströme ein horizontales und vertikales Blanking aufweisen, wobei das horizontale Blanking bzw. die horizontale Blanking-Zeit zur Rekonfiguration genutzt werden kann. Durch diesen Zusammenhang gibt die Größe der in dem FPGA implementierten Hough-Kern-Struktur die maximal mögliche Größe für Hough-Kernkonfigurationen vor. Werden beispielsweise kleinere Konfigurationen genutzt, sind diese vertikal zentriert und in horizontaler Richtung an Spalte 1 der Hough-Kern-Struktur ausgerichtet. Nicht genutzte Elemente der Hough-Kern-Struktur werden allesamt mit aktivierten Verzögerungselementen besetzt.

Die Auswertung der so mit den einzelnen Verzögerungszellen (142+144) bearbeitenden Datenströme erfolgt spaltenweise. Hierzu wird spaltenweise aufsummiert, um ein lokales Summenmaximum zu detektieren, welches eine erkannte gesuchte Struktur anzeigt. Die Summenbildung je Spalte 108, 110, 138, 140, 141 und 143 dient dazu, einen Wert, der repräsentativ für das Maß für die Übereinstimmung mit der gesuchten Struktur für eine der jeweiligen Spalte zugeordnete Ausprägung der Struktur zu ermitteln.. Zur Ermittlung der lokalen Maxima der Spaltensummen sind je Spalte 108, 110, 138. 140, 141 oder 143 sogenannte Vergleicher 108v, 110v, 138v, 140v, 141v bzw. 143v vorgesehen, die mit den jeweiligen Summengliedern 150 verbunden sind. Optional können zwischen den einzelnen Vergleichern 108v, 110v, 138v, 140v, 141v, 143v der unterschiedlichen Spalte 108, 110, 138. 140, 141 oder 143 auch noch weitere Verzögerungsglieder 153 vorgesehen sein, die zum Vergleich der Spaltensummen von nebeneinanderliegenden Spalten dienen. Im Detail wird bei Durchlauf des Filters immer die Spalte 108, 110, 138 oder 140 mit dem größten Maß der Übereinstimmung für eine Ausprägung des gesuchten Musters aus dem Filter herausgereicht. Bei Detektieren eines lokalen Maximums einer Spaltensumme (Vergleich vorherige, nachfolgende Spalte) kann auf das Vorliegen einer gesuchten Struktur geschlossen werden. Das Ergebnis des Vergleichs ist also einen Spaltennummer (ggf. inkl. Spaltensumme = Maß für Übereinstimmung), in welcher das lokale Maximum erkannt wurde bzw. die Ausprägung der gesuchten Struktur steht, z.B. Spalte 138. In bevorzugter Weise umfasst das Ergebnis einen sogenannten mehrdimensionalen Hough-Raum, der alle relevanten Parameter der gesuchten Struktur, wie z.B. Art des Musters (z.B. Gerade oder Halbkreis), Maß der Übereinstimmung des Musters, Ausprägung der Struktur (Stärke der Krümmung bei Kurvensegmenten bzw. Anstieg und Länge bei Geradensegmenten) und die Lage bzw. Orientierung des gesuchten Musters umfasst. Anders ausgedrückt heißt das, dass für jeden Punkt in dem Hough-Raum die Grauwerte der korrespondierenden Strukturen im Bildbereich aufaddiert werden. Infolgedessen bilden sich Maxima aus, mittels welchen die gesuchte Struktur im Hough-Raum einfach lokalisiert und in den Bildbereich zurückgeführt werden kann.

Die Hough-Kern-Zelle aus Fig. 3b kann ein optionales Pipeline-Verzögerungselement 162 (Pipeline-Delay) aufweisen, das beispielsweise am Ausgang der Zelle angeordnet ist und dazu ausgebildet ist, sowohl das mittels des Verzögerungselements 142 verzögerte Signal und das mittels des Bypasses 146 nicht verzögerte Signal zu verzögern.

Wie Bezug nehmend auf Fig. 1 angedeutet, kann eine derartige Zelle auch ein Verzögerungselement mit einer Variabilität aufweisen bzw. eine Vielzahl von miteinander geschalteten und gebypassten Verzögerungselementen umfassen, so dass die Verzögerungszeit in mehreren Stufen einstellbar ist. Insofern wären weitere Implementierungen über die in Fig. 3b dargestellte Implementierung der Hough-Kern-Zelle alternativ denkbar.

Nachfolgend wird Bezug nehmend Fig. 5a eine Anwendung der oben beschriebenen Vorrichtung erläutert in einem Bildverarbeitungs-System 1000. Fig. 5a zeigt einen FPGA implementierten Bildprozessor 10a mit einem Pre-Prozessor 102 und einer Hough-Transformationseinrichtung 104. Vor dem Pre-Prozessor 102 kann ferner eine Eingangsstufe 12 in den Bildprozessor 10a implementiert sein, die dazu ausgebildet ist, um Bilddaten oder Bildsample von einer Kamera 14a zu empfangen. Hierzu kann die Eingangsstufe 12 beispielsweise eine Bildübernahmeschnittstelle 12a, einen Segmentations- und Kantendetektor 12b und Mittel zur Kamerasteuerung 12c umfassen. Die Mittel zur Kamerasteuerung 12c sind mit der Bildschnittstelle 12a und der Kamera 14 verbunden und dienen dazu Faktoren wie Verstärkung und/oder Belichtung zu steuern.

Der Bildprozessor 10a umfasst des Weiteren einen sogenannten Hough-Feature-Extraktor 16, der dazu ausgebildet ist, den mehrdimensionalen Hough-Raum, der durch die Hough-Transformationseinrichtung 104 ausgegeben wird und alle relevanten Informationen für die Mustererkennung umfasst, zu analysieren und auf Basis des Analyseergebnisses eine Zusammenstellung aller Hough-Features auszugeben. Im Detail erfolgt hier eine Glättung der Hough-Feature-Räume, d.h. also eine räumliche Glättung mittels eines lokalen Filters bzw. eine Ausdünnung des Hough-Raums (Unterdrückung nicht relevanter Informationen für die Mustererkennung). Diese Ausdünnung erfolgt unter Berücksichtigung der Art des Musters und der Ausprägung der Struktur, so dass Nicht-Maxima im Hough-Wahrscheinlichkeitsraum ausgeblendet werden. Ferner können für die Ausdünnung auch Schwellwerte definiert sein, so dass beispielsweise minimal oder maximal zulässige Ausprägungen einer Struktur, wie z.B. eine minimale oder maximale Krümmung oder ein kleinster oder größter Anstieg, im Vorfeld bestimmt werden kann. Mittels dieser schwellenbasierten Unterdrückung kann auch eine Rauschunterdrückung im Hough-Wahrscheinlichkeitsraum erfolgen.

Die analytische Rücktransformation der Parameter aller verbleibenden Punkte in dem Originalbildbereich ergibt z.B. folgende Hough-Features: Für die gebogene Struktur können Lage (x- und y-Koordinate), Auftrittswahrscheinlichkeit, Radius und Winkel, der angibt, in welche Richtung der Bogen geöffnet ist, weitergeleitet werden. Für eine Gerade können Parameter wie Lage (x- und y-Koordinate), Auftrittswahrscheinlichkeit, Winkel der die Steigung der Gerade angibt, und Länge des repräsentativen geraden Abschnitts ermittelt werden. Dieser ausgedünnte Hough-Raum wird durch den Hough-Feature-Extraktor 16 bzw. allgemein durch den Bildprozessor 10a zur Weiterverarbeitung an eine Nachverarbeitungseinrichtung 18 ausgegeben.

Ein weiteres Ausführungsbeispiel umfasst des Einsatz eines 3D-Bildanalysators 400 (Fig. 5a) innerhalb eines Bildverarbeitungssystems zusammen mit einem vorgeschalteten Bildprozessor 10a (Fig. 5a) bzw. vorgeschalteten Hough-Prozessor, wobei der Hough-Prozessors und insbesondere die Komponenten der Nachverarbeitungseinrichtung 18 für die Detektion von als Ellipse abgebildeten Pupillen oder Iris angepasst sind.

Die Nachverarbeitungseinrichtung des Hough-Prozessors kann beispielsweise als eingebetteter Prozessor realisiert sein und je nach Anwendung unterschiedliche Untereinheiten aufweisen, die nachfolgend exemplarisch erläutert werden. Die Nachverarbeitungseinrichtung 18 (Fig. 5a) kann einen Hough-Feature-nach-Geometrieumwandler 202 umfassen. Dieser Geometrieumwandler 202 ist dazu ausgebildet, ein oder mehrere vordefinierte gesuchte Muster, die durch den Hough-Feature-Extraktor ausgegeben werden, zu analysieren und die Geometrie beschreibende Parameter je Sample auszugeben. So kann der Geometrieumwandler 202 beispielsweise ausgebildet sein, auf Basis der detektierten Hough-Features Geometrieparameter, wie z.B. erster Durchmesser, zweiter Durchmesser, Kippung und Position des Mittelpunkts bei einer Ellipse (Pupille) oder eines Kreises, auszugeben. Entsprechend einem bevorzugten Ausführungsbeispiel dient der Geometrieumwandler 202 dazu, um eine Pupille anhand von 3 bis 4 Hough-Features (z.B. Krümmungen) zu detektieren und auszuwählen. Dabei fließen Kriterien, wie das Maß der Übereinstimmung mit der gesuchten Struktur bzw. der Hough-Features, die Krümmung der Hough-Features bzw. das vorbestimmte zu detektierende Muster, die Lage und Orientierung der Hough-Features ein. Die ausgewählten Hough-Feature-Kombinationen werden sortiert, wobei in der ersten Linie die Sortierung entsprechend der Anzahl der erhaltenen Hough-Features und in zweiter Linie nach dem Maß der Übereinstimmung mit der gesuchten Struktur erfolgt. Nach dem Sortieren wird die an der ersten Stelle stehende Hough-Feature-Kombination ausgewählt und daraus die Ellipse gefittet, welche am ehesten die Pupille im Kamerabild repräsentiert.

Des Weiteren umfasst die Nachverarbeitungseinrichtung 18 (Fig. 5a) einen optionalen Controller 204, der dazu ausgebildet ist, ein Steuersignal zurück an den Bildprozessor 10a (vgl. Steuerkanal 206) bzw., um genau zu sein, zurück an die Hough-Transformationseinrichtung 104 auszugeben, auf Basis dessen die Filtercharakteristik des Filters 106 anpassbar ist. Zur dynamischen Anpassung des Filterkerns 106 ist der Controller 204 typischerweise mit dem Geometrieumwandler 202 verbunden, um die Geometrieparameter der erkannten Geometrie zu analysieren und um den Hough-Kern in definierten Grenzen derart nachzuführen, dass eine genauere Erkennung der Geometrie möglich ist. Dieser Vorgang ist ein sukzessiver Vorgang, der beispielsweise mit der letzten Hough-Kernkonfiguration (Größe des zuletzt genutzten Hough-Kerns) beginnt und nachgeführt wird, sobald die Erkennung 202 unzureichende Ergebnisse liefert. Am oben diskutierten Beispiel der Pupillen bzw. Ellipsendetektion kann also der Controller 204 die Ellipsengröße anpassen, die z.B. von dem Abstand zwischen dem aufzunehmenden Objekt und der Kamera 14a abhängig ist, wenn die zugehörige Person sich der Kamera 14a nährt. Die Steuerung der Filtercharakteristik erfolgt hierbei auf Basis der letzten Einstellungen und auf Basis der Geometrieparameter der Ellipse.

Entsprechend weiterer Ausführungsbeispielen kann die Nachverarbeitungseinrichtung 18 einen Selektiv-adaptiven Datenprozessor 300 aufweisen. Der Datenprozessor hat den Zweck Ausreißer und Aussetzer innerhalb der Datenreihe nachzubearbeiten, um so beispielsweise eine Glättung der Datenreihe durzuführen. Deshalb ist der Selektiv-adaptive Datenprozessor 300 ausgebildet, um mehrere Sätze von Werten, die durch den Geometrieumwandler 202 ausgegeben werden, zu empfangen, wobei jeder Satz einem jeweiligen Sample zugewiesen ist. Der Filterprozessor des Datenprozessors 300 führt auf Basis der mehreren Sätze eine Selektion von Werten in der Art durch, dass die Datenwerte unplausible Sätze (z. B. Ausreißer oder Aussetzer) durch intern ermittelte Datenwerte (Ersatzwerte) ersetzt werden und die Datenwerte der übrigen Sätze unverändert weiterverwendet werden. Im Detail werden die Datenwerte plausibler Sätze (die keine Ausreißer oder Aussetzer enthalten) weitergeleitet und die Datenwerte unplausibler Sätze (die Ausreißer oder Aussetzer enthalten) durch Datenwerte eines plausiblen Satzes, z. B. den vorherigen Datenwert oder eine Mittelung aus mehreren vorherigen Datenwerten, ersetzt. Die sich ergebende Datenreihe aus weitergeleiteten Werten und ggf. Ersatzwerten wird dabei fortlaufend geglättet. D.h. also, dass eine adaptive zeitliche Glättung der Datenreihe (z. B. einer ermittelten Ellipsenmittelpunktskoordinate), z. B. nach dem Prinzip der exponentiellen Glättung, erfolgt, wobei Aussetzer oder Ausreißer (z. B. infolge Falschdetektion bei der Pupillendetektion) in der zu glättenden Datenreihe nicht zu Schwankungen der geglätteten Daten führen. Im Detail kann der Datenprozessor über den Datenwert eines neu eingegangenen Satzes glätten, wenn er nicht in eine der folgenden Kriterien fällt:

- Entsprechend dem dazu gehörigen Maß der Übereinstimmung, die durch einen der Zusatzwertes des Satzes quantifiziert ist, mit der gesuchten Struktur handelt es sich um einen Aussetzer in der Datenreihe.

- Entsprechend der zugehörigen Größenparameter oder Geometrieparameter handelt es sich um einen Aussetzer, wenn z. B. die Größe des aktuellen Objekts zu stark von der Größe des vorherigen Objekts abweicht.

- Entsprechend eines Vergleichs des aktuellen Datenwertes mit Schwellwerten, die basierend auf den vorhergehenden Datenwerten ermittelt wurden, handelt es sich um einen Ausreißer, wenn der aktuelle Datenwert (z. B. der aktuelle Positionswert) nicht zwischen den Schwellwerten liegt. Ein anschauliches Beispiel dafür ist, wenn z. B. die aktuelle Positionskoordinate (Datenwert des Satzes) eines Objektes zu stark von der zuvor vom selektiv adaptiven Datenprozessor ermittelten Positionskoordinate abweicht.

Ist eines dieser Kriterien erfüllt, wird weiterhin der vorherige Wert ausgegeben oder zumindest zur Glättung des aktuellen Werts herangezogen. Um eine möglichst geringe Verzögerung bei der Glättung zu erhalten, werden optional die aktuellen Werte stärker gewichtet als vergangene Werte. So kann bei Anwendung einer exponentiellen Glättung der aktuelle Wert anhand folgender Formel bestimmt werden:

$$\text{Aktuell geglätteter Wert} = \text{aktueller Wert} \times \text{Glättungskoeffizient} + \text{letzter geglätteter Wert} \times (1 - \text{Glättungskoeffizient})$$

Der Glättungskoeffizient wird in definierten Grenzen dynamisch an den Trend der zu glättenden Daten angepasst, z.B. Verringerung bei eher konstanten Werteverläufen oder Erhöhung bei aufsteigenden oder abfallenden Werteverläufen. Wenn langfristig ein größerer Sprung bei den zu glättenden Geometrieparametern (Ellipsenparametern) vorkommt, passen sich der Datenprozessor und somit auch der geglättete Werteverlauf an den neuen Wert an. Grundsätzlich kann der Selektiv-adaptive Datenprozessor 300 auch mittels Parameter, z.B. bei der Initialisierung konfiguriert werden, wobei über diese Parameter das Glättungsverhalten, z. B. maximale Dauer eines Aussetzers oder maximaler Glättungsfaktor, festgelegt werden.

So kann der Selektiv-adaptive Datenprozessor 300 oder allgemein die Nachverarbeitungsvorrichtung 18 plausible, die Position und Geometrie eines zu erkennenden Musters beschreibende Werte mit hoher Genauigkeit ausgeben. Hierzu weist die Nachverarbeitungsvorrichtung eine Schnittstelle 18a auf, über die optional auch Steuerbefehle von extern empfangen werden können. Sollen mehrere Datenreihen geglättet werden, ist es sowohl denkbar, für jede Datenreihe einen separaten selektiv-adaptiven Datenprozessor zu benutzen oder den selektiv-adaptiven Datenprozessor so anzupassen, dass je Satz Datenwerte unterschiedlicher Datenreihen verarbeitete werden können.

Nachfolgend werden die oben anhand von einem konkreten Ausführungsbeispiel erläuterten Eigenschaften des selektiv-adaptiven Datenprozessor 300 allgemein beschrieben:
Der Datenprozessor 300 kann z. B. zwei oder mehr Eingänge sowie einen Ausgang aufweisen. Einer der Eingänge (empfängt den Datenwert und) ist für die Datenreihe die verarbeitet werden soll. Der Ausgang ist eine geglättete Reihe basierend auf selektierten Daten. Zur Selektion werden die weiteren Eingänge (die Zusatzwerte zur genaueren Beurteilung des Datenwertes empfangen) herangezogen und/oder die Datenreihe selbst. Bei der Verarbeitung innerhalb des Datenprozessor 300 erfolgt eine Veränderung der Datenreihe, wobei zwischen der Behandlung von Ausreißern und der Behandlung von Aussetzern innerhalb der Datenreihe unterschieden wird.

Ausreißer: Bei der Selektion werden Ausreißer (innerhalb der zu verarbeitenden Datenreihe) aussortiert und durch andere (intern ermittelte) Werte ersetzt.

Aussetzer: Zur Beurteilung der Güte der zu verarbeitenden Datenreihe werden ein oder mehrere weitere Eingangssignale (Zusatzwerte) herangezogen. Die Beurteilung erfolgt anhand eines oder mehrerer Schwellwerte, wodurch die Daten in "hohe" und "geringe" Güte unterteilt werden. Daten geringer Güte werden als Aussetzer bewertet und durch andere (intern ermittelte) Werte ersetzt.

Im nächsten Schritt erfolgt beispielsweise eine Glättung der Datenreihe (z.B. exponentielle Glättung einer Zeitreihe). Zur Glättung wird die von Aussetzern und Ausreißern bereinigte Datenreihe herangezogen. Die Glättung kann durch einen variablen (adaptiven) Koeffizienten erfolgen. Der Glättungskoeffizient wird an die Differenz des Pegels der zu verarbeitenden Daten angepasst.

Entsprechend weiterer Ausführungsbeispielen ist es auch möglich, dass die Nachverarbeitungsvorrichtung 18 einen Bildanalysator, wie z.B. einen 3D-Bildanalysator 400 umfasst. Im Falle eines 3D-Bildanalysators 400 kann mit der Nachverarbeitungsvorrichtung 18 auch eine weitere Bilderfassungseinrichtung, bestehend aus Bildprozessor 10b und Kamera 14b, vorgesehen sein. Also bilden die zwei Kameras 14a und 14b sowie die Bildprozessoren 10a und 10b eine stereoskopische Kameraanordnung, wobei vorzugsweise der Bildprozessor 10b identisch mit dem Bildprozessor 10a ist.

Der 3D-Bildanalysator 400 ist entsprechend einem Basisausführungsbeispiel dazu ausgebildet, um zumindest einen ersten Satz von Bilddaten, der auf Basis eines ersten Bildes (vgl. Kamera 14a) bestimmt wird, und einen zweiten Satz von Bilddaten, der auf Basis eines zweiten Bildes (vgl. Kamera 14b) bestimmt wird, zu empfangen, wobei das erste und das zweite Bild ein Muster aus unterschiedlichen Perspektiven abbilden, und um auf Basis dessen einen Blickwinkel bzw. einen 3D-Blickvektor zu berechnen. Hierzu umfasst der 3D-Bildanalysator 400 eine Positionsberechnungseinrichtung 404 und eine Ausrichtungsberechnungseinrichtung 408. Die Positionsberechnungseinrichtung 404 ist dazu ausgebildet, um eine Position des Musters in einem dreidimensionalen Raum zu berechnen, basierend auf dem ersten Satz, dem zweiten Satz und einer geometrischen Beziehung zwischen den Perspektiven bzw. der ersten und der zweiten Kamera 14a und 14b. Der Ausrichtungsberechner 408 ist dazu ausgebildet, um einen 3D-Blickvektor, z.B. eine Blickrichtung, zu berechnen, gemäß dem das erkannte Muster in dem dreidimensionalen Raum ausgerichtet ist, wobei die Berechnung auf dem ersten Satz, dem zweiten Satz und der berechneten Position (vgl. Positionsberechner 404) basiert.

Andere Ausführungsbeispiele können auch mit den Bilddaten einer Kamera und einem weiteren Satz an Informationen arbeiten (z. B. relative oder absolute Positionen charakteristischer Punkte im Gesicht oder Auge), der zur Berechnung der Position des Musters (z. B. Pupillen- oder Irismittelpunkt) und zur Auswahl des tatsächlichen Blickrichtungsvektors dient.

Hierzu kann beispielsweise ein sogenanntes 3D-Kamerasystemmodell hinzugezogen werden, das beispielsweise in einer Konfigurationsdatei alle Modellparameter, wie Lageparameter, optische Parameter (vgl. Kamera 14a und 14b) gespeichert hat.

Nachfolgend wird nun ausgehend von dem Beispiel der Pupillenerkennung die Gesamtfunktionalität des 3D-Bildanalysators 400 im Detail beschrieben. Das in dem 3D-Bildanalysator 400 gespeicherte oder eingelesene Modell umfasst Daten hinsichtlich der Kameraeinheit, d.h. hinsichtlich des Kamerasensors (z.B. Pixelgröße, Sensorgröße und Auflösung) und verwendeter Objektive (z.B. Brennweite und Objektivverzeichnung), Daten bzw. Charakteristiken des zu erkennenden Objekts (z.B. Charakteristika eines Auges) und Daten hinsichtlich weitere relevanter Objekte (z.B. eines Displays im Falle der Nutzung des Systems 1000 als Eingabegerät).

Der 3D-Positionsberechner 404 berechnet die Augenposition bzw. den Pupillenmittelpunkt auf Basis der zwei oder auch mehreren Kamerabilder (vgl. 14a und 14b) durch Triangulation. Hierzu bekommt er 2D-Koordinaten eines Punktes in den zwei Kamerabildern (vgl. 14 a und 14b) über die Prozesskette aus Bildprozessoren 10a und 10b, Geometrieumwandler 202 und Selektiv-adaptiver Datenprozessor 300 zur Verfügung gestellt. Aus den übergebenen 2D-Koordinaten werden mithilfe des 3D-Kameramodells insbesondere unter Berücksichtigung der optischen Parameter für beide Kameras 14a und 14b die Lichtstrahlen berechnet, die den 3D-Punkt als 2D-Punkt auf dem Sensor abgebildet haben. Der Punkt der zwei Geraden mit dem geringsten Abstand zueinander (im Idealfall der Schnittpunkt der Geraden) wird als Position des gesuchten 3D-Punktes angenommen. Diese 3D-Position wird zusammen mit einem Fehlermaß, das die Genauigkeit der übergebenen 2D-Koordinaten in der Verbindung mit den Modellparametern beschreibt, entweder über die Schnittstelle 18a als Ergebnis ausgegeben oder an den Blickrichtungsberechner 408 übergeben.

Auf Basis der Position im 3D-Raum kann der Blickwinkelberechner 408 die Blickrichtung aus zwei ellipsenförmigen Projektionen der Pupille auf die Kamerasensoren ohne Kalibrierung und ohne Kenntnis über den Abstand zwischen den Augen und Kamerasystem bestimmen. Hierzu nutzt der Blickrichtungsberechner 408 neben den 3D-Lageparameter der Bildsensoren die Ellipsenparameter, die mittels des Geometrieanalysators 202 ermittelt worden sind und die mittels des Positionsberechners 404 bestimmte Position. Aus der 3D-Position des Pupillenmittelpunkts und der Lage der Bildsensoren werden durch Drehung der realen Kameraeinheiten virtuelle Kameraeinheiten berechnet, deren optische Achse durch den 3D-Pupillenmittelpunkt verläuft. Anschließend werden jeweils aus den Projektionen der Pupille auf den realen Sensoren Projektionen der Pupille auf die virtuellen Sensoren berechnet, so dass zwei virtuelle Ellipsen entstehen. Aus den Parametern der virtuellen Ellipsen auf den beiden virtuellen Bildsensoren können je Bildsensor zwei Blickpunkte des Auges auf einer beliebigen zur jeweiligen virtuellen Sensorebene parallelen Ebene berechnet werden. Mit den vier Blickpunkten und den 3D-Pupillenmittelpunkten lassen sich vier Blickrichtungsvektoren berechnen, also jeweils zwei Vektoren pro Kamera. Von diesen vier möglichen Blickrichtungsvektoren ist immer genau einer der einen Kamera mit einem der anderen Kamera annähernd identisch. Die beiden identischen Vektoren geben die gesuchte Blickrichtung des Auges (gaze direction) an, die dann vom Blickrichtungsberechner 404 über die Schnittstelle 18a ausgegeben wird.

Ein besonderer Vorteil in dieser 3D-Berechnung liegt darin, dass eine berührungslose und vollständige kalibrierungsfreie Ermittlung der 3D-Augenposition der 3D-Blickrichtung und der Pupillengröße unabhängig von der Kenntnis über die Lage des Auges zu der Kamera möglich ist. Eine analytische Bestimmung der 3D-Augenposition und 3D-Blickrichtung unter Einbeziehung eines 3D-Raummodells ermöglicht eine beliebige Kameraanzahl (größer 1) und beliebige Kameraposition im 3D-Raum. Die kurze Latenzzeit mit der gleichzeitig hohen Frame-Rate ermöglicht eine Echtzeitfähigkeit des beschriebenen Systems 1000. Ferner können, optionaler, aber nicht notwendiger Weise, auch die sogenannten Zeitregime fest sein, so dass die Zeitdifferenzen zwischen aufeinanderfolgenden Ergebnissen konstant sind. Dies ist z. B. in sicherheitskritischen Anwendungen vorteilhaft bei denen die Ergebnisse innerhalb festgelegten Zeitabständen vorliegen müssen und kann z. B. durch den Einsatz von FPGAs zur Berechnung erreicht werden.

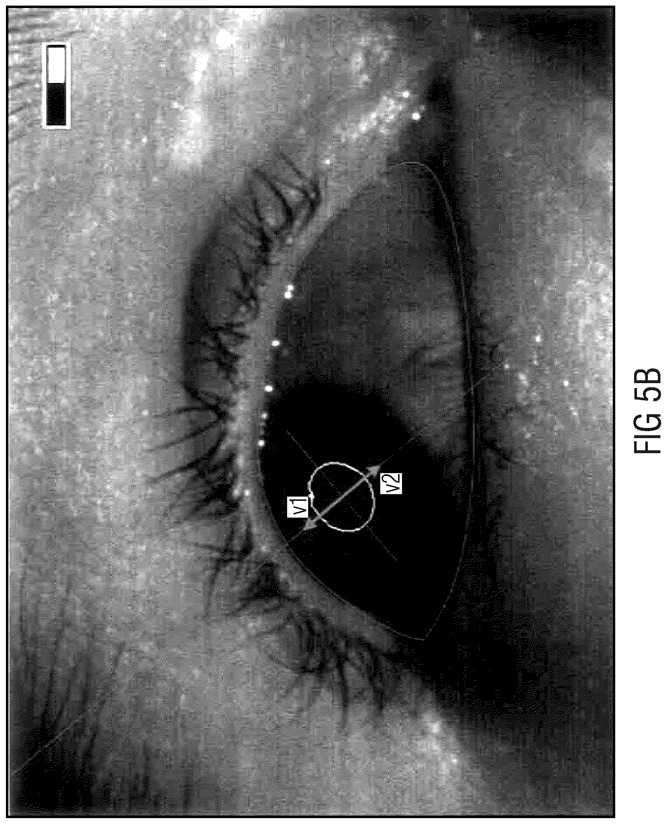

Entsprechend einer alternativen Variante ist es auch möglich mit nur einer Kamera ebenfalls eine Blickrichtungsbestimmung durchzuführen. Dazu ist es einerseits erforderlich, den 3D-Pupillenmittelpunkt basierend auf den Bilddaten einer Kamera und ggf. einem Satz zusätzlicher Informationen zu berechnen und andererseits muss aus den zwei möglichen Blickrichtungsvektoren, welche pro Kamera berechnet werden können der tatsächliche Blickrichtungsvektor ausgewählt werden, wie später anhand von Fig. 5b erläutert wird.

Zur Ermittlung des 3D-Pupillenmittelpunktes gibt es mehrere Möglichkeiten. Eine davon basiert auf der Auswertung von Relationen zwischen charakteristischen Punkten im ersten Kamerabild. Dabei wird ausgehend von dem Pupillenmittelpunkt im ersten Kamerabild unter Berücksichtigung des optischen Systems der Kamera, wie oben beschrieben, eine Gerade berechnet, die durch den 3D-Pupillenmittelpunkt führt, wobei aber noch nicht bekannt ist, wo auf dieser Geraden sich der gesuchte Pupillenmittelpunkt befindet. Dazu wird der Abstand zwischen Kamera bzw. genauer Hauptpunkt 1 der Kamera ($H_1K_1$ in Fig. 8a) benötigt. Diese Information lässt sich schätzen, wenn mindestens zwei charakteristische Merkmale im ersten Kamerabild (z. B. die Pupillenmittelpunkte) ermittelte werden und deren Abstände zueinander als statistisch ermittelter Wert, z. B. über eine große Personengruppe, bekannt ist. Dann kann der Abstand zwischen Kamera und 3D-Pupillenmittelpunkt geschätzt werden, indem der ermittelte Abstand (z. B. in Pixeln) zwischen den charakteristischen Merkmalen ins Verhältnis gesetzt wird zu dem als statistische Größe bekannten Abstand (z. B. in Pixeln) der Merkmale in einem bekannten Abstand zur Kamera.

Eine weitere Variante um den 3D-Pupillenmittelpunktes zu erhalten ist, das dessen Position oder dessen Abstand zur Kamera dem 3D-Bildanalysator innerhalb des zweiten Satzes an Informationen geliefert wird (z. B. von einem vorgelagerten Modul zur 3D-Gesichtsdetektion, bei dem die Positionen charakteristischer Punkte des Gesichts oder der Augenpartie im 3D-Raum ermittelt werden).

Um den tatsächlichen Blickrichtungsvektor zu ermitteln, wurden in der bisherigen Beschreibung zum "3D-Bildanalysator", welche das Verfahren zum kalibrationsfreien Eyetracking umfasst, bisher mindestens 2 Kamerabilder aus unterschiedlichen Perspektiven vorausgesetzt. Bei der Berechnung der Blickrichtung gibt es eine Stelle, an der pro Kamerabild genau 2 mögliche Blickrichtungsvektoren ermittelt werden, wobei jeweils der zweite Vektor einer Spiegelung des ersten Vektors an der Verbindungslinie zwischen virtuellem Kamerasensormittelpunkt und 3D-Pupillenmittelpunkt entspricht. Von den beiden Vektoren, die sich aus dem anderen Kamerabild ergeben, stimmt genau ein Vektor nahezu mit einem aus dem ersten Kamerabild berechneten Vektor überein. Diese übereinstimmenden Vektoren geben die zu ermittelnde Blickrichtung an.

Um das kalibrationsfreie Eyetracking auch mit einer Kamera durchführen zu können, muss von den beiden möglichen Blickrichtungsvektoren, im Folgenden als "v1" und "v2" bezeichnet, die aus dem Kamerabild ermittelt werden, der tatsächliche Blickrichtungsvektor (im Folgenden als "vb" bezeichnet) ausgewählt werden.

Dieser Vorgang wird beispielhaft anhand von Fig. 5b erläutert. Fig. 5b zeigt eine Abbildung des sichtbarer Teils des Augapfels (grün umrandet) mit der Pupille und den beiden ins Bild projizierten möglichen Blickrichtungen v1 und v2.

Zur Auswahl der Blickrichtung "vb" gibt es mehrere Möglichkeiten, die einzeln oder auch in Kombination genutzt werden können, um den tatsächlichen Blickrichtungsvektor auszuwählen. Typischerweise erfolgt die Auswahl des korrekten 3D-Blickvektors aus zwei möglichen 3D-Blickvektoren, wobei beispielsweise entsprechend einem Ausführungsbeispiel nur ein einziges Kamerabild (+ Zusatzinformationen) genutzt wird. Einige dieser Möglichkeiten (die Auflistung ist nicht abschließend) werden nachfolgend erläutert, wobei davon ausgegangen wird, dass v1 und v2 (vgl. Fig. 5a) zum Zeitpunkt dieser Auswahl bereits ermittelt worden sind:

Entsprechend einer ersten Möglichkeit kann eine Auswertung basierend auf der Sklera (die weiße Lederhaut um die Iris) im Kamerabild erfolgen. Es werden 2 Strahlen (beginnen beim Pupillenmittelpunkt und sind unendlich lang) definiert, einer in Richtung von v1 und einer in Richtung von v2. Die beiden Strahlen werden in das Kamerabild des Auges projiziert und verlaufen dort jeweils vom Pupillenmittelpunkt zum Bildrand. Der Strahl, der weniger zur Sklera gehörende Pixel überstreicht, gehört zum tatsächlichen Blickrichtungsvektor vb. Die Pixel der Sklera unterscheiden sich durch ihren Grauwert von denen der an sie grenzenden Iris und von denen der Augenlieder. Diese Methode stößt an ihre Grenzen, wenn das zum aufgenommenen Auge gehörende Gesicht zu weit von der Kamera abgewendet ist (also der Winkel zwischen optischer Achse der Kamer und dem senkrecht auf der Gesichtsebene stehenden Vektor zu groß wird).

Entsprechend einer zweiten Möglichkeit kann eine Auswertung der Lage des Pupillenmittelpunktes innerhalb der Augenöffnung erfolgen. Die Lage des Pupillenmittelpunktes innerhalb des sichtbaren Teils des Augapfels bzw. innerhalb der Augenöffnung kann zur Auswahl des tatsächlichen Blickrichtungsvektors genutzt werden. Eine Möglichkeit dazu ist, 2 Strahlen (beginnen beim Pupillenmittelpunkt und sind unendlich lang) zu definieren, einer in Richtung von v1 und einer in Richtung von v2. Die beiden Strahlen werden in das Kamerabild des Auges projiziert und verlaufen dort jeweils vom Pupillenmittelpunkt zum Bildrand.

Entlang beider Strahlen im Kamerabild wird jeweils die Distanz zwischen Pupillenmittelpunkt und dem Rand der Augenöffnung (in Fig. 5b grün eingezeichnet) ermittelt. Der Strahl, für den sich die kürzere Distanz ergibt, gehört zum tatsächlichen Blickrichtungsvektor. Diese Methode stößt an ihre Grenzen, wenn das zum aufgenommenen Auge gehörende Gesicht zu weit von der Kamera abgewendet ist (also der Winkel zwischen optischer Achse der Kamer und dem senkrecht auf der Gesichtsebene stehenden Vektor zu groß wird).

Entsprechend einer dritten Möglichkeit kann eine Auswertung der Lage des Pupillenmittelpunktes zu einem Referenzpupillenmittelpunkt erfolgen. Die Lage des im Kamerabild ermittelten Pupillenmittelpunktes innerhalb des sichtbaren Teils des Augapfels bzw. innerhalb der Augenöffnung kann zusammen mit einem Referenzpupillenmittelpunkt zur Auswahl des tatsächlichen Blickrichtungsvektors genutzt werden. Eine Möglichkeit dazu ist, 2 Strahlen (beginnen beim Pupillenmittelpunkt und sind unendlich lang) zu definieren, einer in Richtung von v1 und einer in Richtung von v2. Die beiden Strahlen werden in das Kamerabild des Auges projiziert und verlaufen dort jeweils vom Pupillenmittelpunkt zum Bildrand. Der Referenzpupillenmittelpunkt innerhalb der Augenöffnung entspricht dem Pupillenmittelpunkt, in dem Moment in dem das Auge direkt in Richtung der zur Bildaufnahme eingesetzten Kamera schaut (genauer ausgedrückt in Richtung des ersten Hauptpunktes der Kamera). Derjenige in das Kamerabild projizierte Strahl, welcher im Bild den größeren Abstand zum Referenzpupillenmittelpunkt hat, gehört zum tatsächlichen Blickrichtungsvektor. Zur Ermittlung des Referenzpupillenmittelpunktes gibt es mehrere Möglichkeiten, von denen einige im Folgenden beschrieben werden:

Möglichkeit 1 (spezieller Anwendungsfall): Der Referenzpupillenmittelpunkt ergibt sich aus dem ermittelten Pupillenmittelpunkt, in dem Fall, in dem das Auge direkt in Richtung des Kamerasensormittelpunktes schaut. Dies ist gegeben, wenn die Pupillenkontur auf der virtuellen Sensorebene (siehe Beschreibung zur Blickrichtungsberechnung) einen Kreis beschreibt.

Möglichkeit 2 (allgemeiner Anwendungsfall): Als grobe Schätzung der Position des Referenzpupillenmittelpunktes kann der Schwerpunkt der Fläche der Augenöffnung genutzt werden. Diese Methode der Schätzung stößt an ihre Grenzen, wenn die Ebene, in der das Gesicht liegt, nicht parallel zur Sensorebene der Kamera liegt. Diese Einschränkung kann kompensiert werden, wenn die Neigung der Gesichtsebene zur Kamerasensorebene bekannt ist (z. B. durch eine vorher ausgeführte Bestimmung der Kopfposition und -ausrichtung) und diese zur Korrektur der Position des geschätzten Referenzpupillenmittelpunktes genutzt wird. Diese Methode erfordert außerdem, dass der Abstand zwischen 3D-Pupillenmittelpunkt und optischer Achse des virtuellen Sensors sehr viel geringer ist, als der Abstand zwischen 3D-Pupillenmittelpunkt und Kamera.

Möglichkeit 3 (allgemeiner Anwendungsfall): Wenn die 3D-Position des Augenmittelpunktes zur Verfügung steht, kann eine Gerade zwischen 3D-Augenmittelpunkt und virtuellem Sensormittelpunkt bestimmt werden und der Schnittpunkt dieser Geraden mit der Oberfläche des Augapfels. Der Referenzpupillenmittelpunkt ergibt sich aus der ins Kamerabild umgerechneten Position dieses Schnittpunktes.

Entsprechend weiteren Ausführungsbeispielen kann im Hinblick auf den Einsatz des Hough-Prozessors anstelle des FPGAs 10a und 10b ein ASIC (anwendungsspezifischer Chip) eingesetzt werden, der sich besonders bei hohen Stückzahlen mit sehr geringen Stückkosten realisieren lässt. In Summe lässt sich jedoch feststellen, dass unabhängig von Implementierung des Hough-Prozessors 10a und 10b ein geringer Energieverbrauch durch die sehr effiziente Verarbeitung und den damit verbundenen geringen Systemtaktbedarf erzielt werden kann.

Trotz dieser Merkmale bleibt der hier eingesetzte Hough-Prozessor bzw. das auf dem Hough-Prozessor ausgeführte Verfahren sehr robust und störunanfällig. Es sei an dieser Stelle angemerkt, dass der in Fig. 2a erläuterte Hough-Prozessor 100 in unterschiedlichen Kombinationen mit unterschiedlich insbesondere in Hinblick auf Fig. 5 vorgestellten Merkmalen eingesetzt werden kann.

Anwendungen des Hough-Prozessors gemäß Fig. 2a sind z.B. Sekundenschlafwarner bzw. Müdigkeitsdetektoren als Fahrassistenzsysteme im automobilen Bereich (bzw. allgemein bei sicherheitsrelevanten Menschmaschineschnittstellen). Hierbei kann durch Auswertung der Augen (z.B. Verdeckung der Pupille als Maß für den Öffnungsgrad) und unter Berücksichtigung der Blickpunkte und des Fokus ein bestimmtes Müdigkeitsmuster detektiert werden. Weiter kann der Hough-Prozessor bei Eingabegeräten bzw. Eingabeschnittstellen für technische Geräte zum Einsatz kommen; hier werden dann Augenposition und Blickrichtung als Inputparameter genutzt. Konkrete Anwendungen wären hierbei die Analyse oder Unterstützung des Nutzers beim Anschauen von Bildschirminhalten, z.B. beim Hervorheben von bestimmten fokussierten Bereichen. Derartige Anwendungen sind im Bereich des assisted living, bei Computerspielen, bei Optimierung von 3D-Visualisierung durch Einbeziehung der Blickrichtung, bei Markt- und Medienforschung oder bei ophthalmologischen Diagnostiken und Therapien besonders interessant.

Wie oben bereits angedeutet, ist die Implementierung des oben vorgestellten Verfahrens plattformunabhängig, so dass das oben vorgestellte Verfahren auch auf anderen Hardwareplattformen, wie z.B. einem PC ausgeführt werden kann. Also bezieht sich ein weiteres Ausführungsbeispiel auf ein Verfahren für die Hough-Verarbeitung mit den Schritten Verarbeiten einer Mehrzahl von Samples, die jeweils ein Bild aufweisen, unter Verwendung eines Pre-Prozessors, wobei das Bild des jeweiligen Samples gedreht und/oder gespiegelt wird, so dass eine Mehrzahl von Versionen des Bildes des jeweiligen Samples für jedes Sample ausgegeben wird und des Erfassens vorbestimmten Musters in der Mehrzahl von Sampeln auf Basis der Mehrzahl von Versionen unter Verwendung einer Hough-Transformationseinrichtung, die einen Verzögerungsfilter mit einer Filtercharakteristik aufweist, dessen Filtercharakteristik abhängig von dem ausgewählten vorbestimmten Mustersatz eingestellt wird.

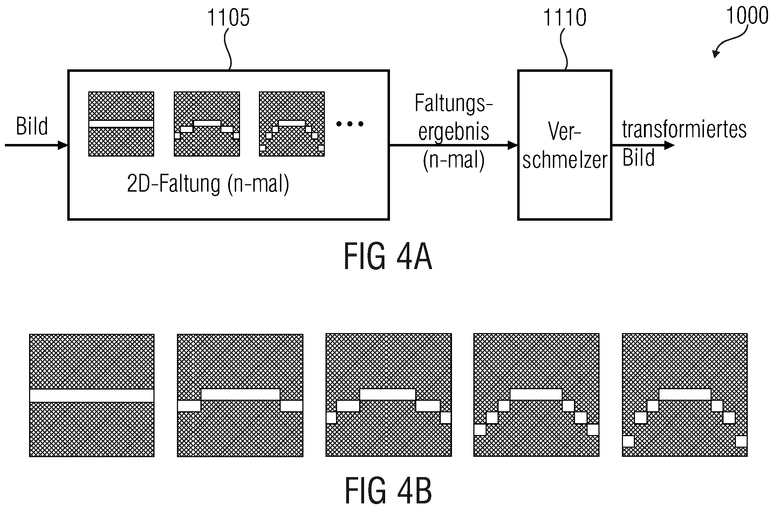

Auch wenn der obigen Ausführungen im Zusammenhang mit der anpassbaren Charakteristik immer von einer Filtercharakteristik gesprochen wurde, sei an dieser Stelle angemerkt, dass entsprechend weiteren Ausführungsbeispielen die anpassbare Charakteristik sich auch auf die Nachverarbeitungsscharakteristik (Biegungs- oder Verzerrungscharakteristik) bei einer schnellen 2D Korrelation beziehen kann. Diese Implementierung wird anhand von Fig. 4a bis Fig. 4d erläutert.

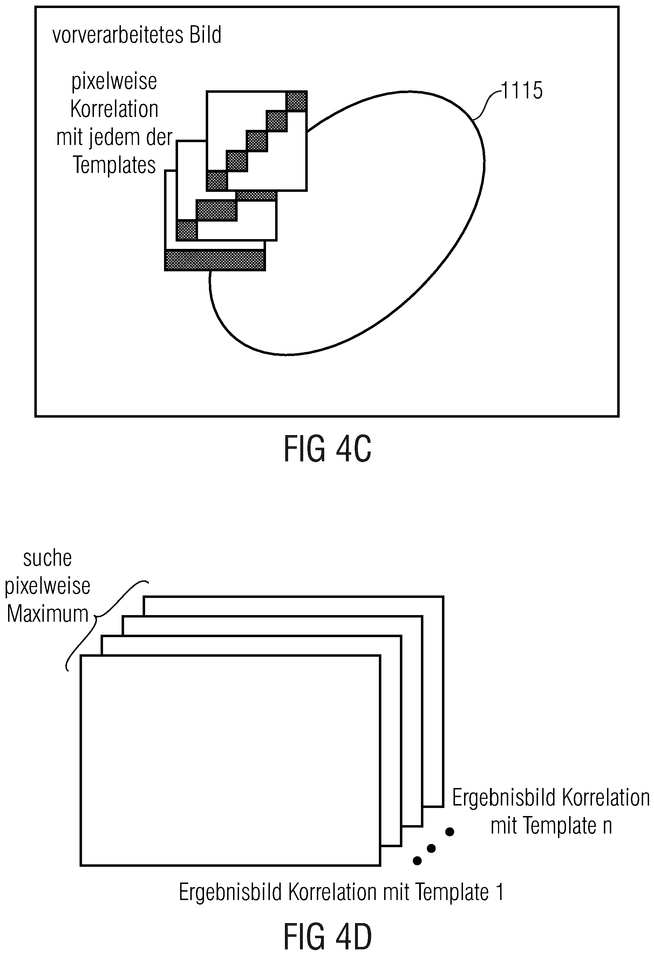

Fig. 4a zeigt eine Verarbeitungskette 1000 einer schnellen 2D Korrelation. Die Verarbeitungskette der 2D Korrelation umfasst zumindest die Funktionsblöcke 1105 zur 2D-Biegung und 1110 zur Verschmelzung. Das Vorgehen bei der 2D-Biegung ist in Fig. 4b illustriert. Fig. 4b ziert exemplarische Zusammenstellung an Templates. Wie auf Basis dieser Verarbeitungskette 1000 ein Hough-Feature extrahiert werden kann, wird anhand von Fig. 4c zusammen mit Fig. 4d deutlich. Fig. 4c zeigt die pixelweise Korrelation mit n Templates veranschaulicht (in diesem Falle beispielsweise für Geraden unterschiedlicher Steigung) zur Erkennung der Ellipse 1115, während Fig. 4d das Ergebnis der pixelweisen Korrelation zeigt, wobei typischerweise über die n Ergebnisbilder noch eine Maximumsuche erfolgt. Jedes Ergebnisbild enthält pro Pixel ein Houghfeature. Nachfolgend wird diese Hough-Verarbeitung im Gesamtkontext erläutert.

Im Gegensatz zur Umsetzung mit einem Verzögerungsfilter mit anpassbarer Charakteristik (Implementierung optimiert für parallele FPGA Strukturen) würde bei der hier dargestellten Hough-Verarbeitung, welche insbesondere für eine PC-basierte Umsetzung prädestiniert ist, ein Teil der Verarbeitung durch eine andere Vorgehensweise ausgetauscht werden.

Bisher war es so, dass quasi jede Spalte des Verzögerungsfilters für eine gesuchte Struktur steht (z. B. Geradenabschnitte unterschiedlicher Steigung). Beim durchlaufen des Filters ist die Spaltennummer mit dem höchsten Summenwert maßgeblich. Dabei steht die Spaltennummer für eine Ausprägung der gesuchten Struktur und der Summenwert gibt ein Maß für die Übereinstimmung mit der gesuchten Struktur an.

Bei der PC-basierten Umsetzung wird der Verzögerungsfilter durch schnelle 2D Korrelation ersetzt. Der bisherige Verzögerungsfilter ist je nach Größe in der Lage n Ausprägungen eines bestimmten Musters abzubilden. Diese n Ausprägungen werden als Template im Speicher hinterlegt. Anschließend wird das vorverarbeitete Bild (z. B. binäres Kantenbild oder Gradientenbild) pixelweise durchlaufen. An jeder Pixelposition werden jeweils alle abgelegten Templates mit dem darunterliegenden Bildinhalt (entsprechend einer Nachverarbeitungscharakteristik) abgeglichen (es wird sozusagen die Umgebung der Pixelposition (in Größe des Templates) ausgewertet). Dieses Vorgehen wird in der digitalen Bildverarbeitung auch als Korrelation bezeichnet. Man erhält also für jedes Template einen Korrelationswert - also ein Maß für die Übereinstimmung - mit dem darunterliegenden Bildinhalt. Diese entsprechen sozusagen den Spaltensummen aus dem bisherigen Verzögerungsfilter. Nun entscheidet man sich (pro Pixel) für das Template mit dem höchsten Korrelationswert und merkt sich dessen Templatenummer (die Templatenummer beschreibt die Ausprägung der gesuchten Struktur, z. B. Steigung des Geradenabschnitts).

Man erhält also pro Pixel einen Korrelationswert und eine Templatenummer. Dadurch lässt sich ein Houghfeature, wie es bereits erläutert, vollständig beschreiben.

Es sei noch angemerkt, dass die Korrelation der einzelnen Templates mit dem Bildinhalt sowohl im Orts- als auch im Frequenzbereich durchgeführt werden kann. Das heißt, dass das Eingangsbild zunächst jeweils mit allen n Templates korreliert wird. Man erhält n Ergebnisbilder. Legt man diese Ergebnisbilder übereinander (wie einen Quader) würde man pro Pixel nach dem höchsten Korrelationswert suchen (über alle Ebenen). Dabei stehen dann einzelne Ebenen innerhalb des Quaders für einzelne Templates. Als Ergebnis erhält man wieder ein einzelnes Bild, das dann pro Pixel ein Korrelationsmaß und eine Templatenummer enthält - also pro Pixel ein Houghfeature.

Auch wenn obige Aspekte immer im Zusammenhang mit der "Pupillenerkennung" erläutert wurden, sind die oben beschriebenen Aspekte auch für weitere Anwendungen nutzbar. Hier ist beispielsweise die Anwendungen "Sekundenschlafwarnung" zu nennen, auf die nachfolgend näher eingegangen wird.

Der Sekundenschlafwarner ist ein System, dass zumindest aus einer Bilderfassungseinrichtung, einer Beleuchtungseinheit, einer Verarbeitungseinheit und einer akustischen und/oder optischen Signalisierungseinrichtung besteht. Durch Auswertung eines vom Nutzer aufgezeichneten Bildes ist das Gerät in der Lage eintretenden Sekundenschlaf oder Müdigkeit oder Abgelenktheit des Nutzers zu erkennen und den Nutzer zu warnen.

Das System kann z. B. in der Form ausgestaltet sein, dass man einen CMOS Bildsensor nutzt und die Szene im Infraroten Bereich ausleuchtet. Das hat den Vorteil, dass das Gerät unabhängig vom Umgebungslicht arbeitet und insbesondere den Nutzer nicht blendet. Als Verarbeitungseinheit wird ein eingebettetes Prozessorsystem genutzt, dass einen Softwarecode auf einem darunterliegenden Betriebssystem ausführt. Die Signalisierungseinrichtung kann z. B. aus einem Multifrequenzbuzzer und einer RGB-LED bestehen.

Die Auswertung des aufgezeichneten Bildes kann in der Form erfolgen, dass in einer ersten Verarbeitungsstufe eine Gesichts- und eine Augendetektion und Augenanalyse mit einem Klassifikator durchgeführt werden. Diese Verarbeitungsstufe liefert erste Anhaltspunkte für die Ausrichtung des Gesichtes, die Augenpositionen und den Lidschlussgrad.

Aufbauend darauf kann im darauffolgenden Schritt eine modellbasierte Augenfeinanalyse durchgeführt werden. Ein dazu genutztes Augenmodell kann z. B. bestehen aus: einer Pupillen- und/oder Irisposition, einer Pupillen- und/oder Irisgröße, einer Beschreibung der Augenlider und der Augeneckpunkte. Dabei ist es ausreichend, wenn zu jedem Zeitpunkt einige dieser Bestandteile gefunden und ausgewertet werden. Die einzelnen Bestandteile können auch über mehrere Bilder hinweg getrackt werden, sodass sie nicht in jedem Bild vollständig neu gesucht werden müssen.

Hough-Features können genutzt werden um die Gesichtsdetektion oder die Augendetektion oder die Augenanalyse oder die Augenfeinanalyse durchzuführen. Ein 2D-Bildanalysator kann zur Gesichtsdetektion oder zur Augendetektion oder zur Augenanalyse genutzt werden. Zur Glättung der bei der Gesichtsdetektion oder Augendetektion oder Augenanalyse oder Augenfeinanalyse ermittelten Ergebniswerte oder Zwischenergebnisse bzw. Werteverläufe kann der beschriebene Adaptiv-selektive Datenprozessor genutzt werden.

Eine zeitliche Auswertung des Lidschlussgrades und/oder der Ergebnisse der Augenfeinanalyse kann zur Ermittlung des Sekundenschlafs oder der Müdigkeit oder Abgelenktheit des Nutzers genutzt werden. Zusätzlich kann auch die im Zusammenhang mit dem 3D-Bildanalysator beschriebene kalibrationsfreie Blickrichtungsbestimmung genutzt werden um bessere Ergebnisse bei der Ermittlung des Sekundenschlafs oder der Müdigkeit oder Abgelenktheit des Nutzers zu erhalten. Zur Stabilisierung dieser Ergebnisse kann außerdem der selektiv- adaptive Datenprozessor genutzt werden.

Entsprechend einem Ausführungsbeispiel kann der Hough-Prozessor in der Bildeingangsstufe eine Einrichtung zur Kamerasteuerung umfassen.

Entsprechend einem Ausführungsbeispiel kann ausgehend von einer bestimmten Blickrichtung ein sogenannter Blickpunkt (Schnittpunkt der Blickgeraden mit einer weiteren Ebene), z.B. zur Steuerung eines PCs, bestimmt werden.

Wie oben bereits angedeutet, ist die Implementierung des oben vorgestellten Verfahrens plattformunabhängig, so dass das oben vorgestellte Verfahren auch auf anderen Hardwareplattformen, wie z.B. einem PC ausgeführt werden kann

Obwohl manche Aspekte im Zusammenhang mit einer Vorrichtung beschrieben wurden, versteht es sich, dass diese Aspekte auch eine Beschreibung des entsprechenden Verfahrens darstellen, so dass ein Block oder ein Bauelement einer Vorrichtung auch als ein entsprechender Verfahrensschritt oder ein Merkmal eines Verfahrensschritts zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar. Einige oder alle Verfahrensschritte können durch einen Apparat (unter Verwendung eines Hardwareapparats), wie z.B. eines Mikroprozessors, eines programmierbaren Computer oder einer elektronischen Schaltung ausgeführt werden. Bei einigen Ausführungsbeispielen können einige oder mehrere der wichtigen Verfahrensschritte durch einen solchen Apparat ausgeführt werden.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einem programmierbaren Computersystem derart zusammenwirken können oder zusammenwirken, dass das jeweilige Verfahren durchgeführt wird. Des-halb kann das digitale Speichermedium computerlesbar sein.

Manche Ausführungsbeispiele gemäß der Erfindung umfassen also einen Datenträger, der elektronisch lesbare Steuersignale aufweist, die in der Lage sind, mit einem programmierbaren Computersystem derart zusammenzuwirken, dass eines der hierin beschriebenen Verfahren durchgeführt wird.

Allgemein können Ausführungsbeispiele der vorliegenden Erfindung als Computerprogrammprodukt mit einem Programmcode implementiert sein, wobei der Programmcode dahin gehend wirksam ist, eines der Verfahren durchzuführen, wenn das Computerprogrammprodukt auf einem Computer abläuft.

Der Programmcode kann beispielsweise auch auf einem maschinenlesbaren Träger gespeichert sein.

Andere Ausführungsbeispiele umfassen das Computerprogramm zum Durchführen eines der hierin beschriebenen Verfahren, wobei das Computerprogramm auf einem maschinen-lesbaren Träger gespeichert ist.

Mit anderen Worten ist ein Ausführungsbeispiel des erfindungsgemäßen Verfahrens somit ein Computerprogramm, das einen Programmcode zum Durchführen eines der hierin beschriebenen Verfahren aufweist, wenn das Computerprogramm auf einem Computer abläuft.

Ein weiteres Ausführungsbeispiel der erfindungsgemäßen Verfahren ist somit ein Datenträger (oder ein digitales Speichermedium oder ein computerlesbares Medium), auf dem das Computerprogramm zum Durchführen eines der hierin beschriebenen Verfahren auf-gezeichnet ist.

Ein weiteres Ausführungsbeispiel des erfindungsgemäßen Verfahrens ist somit ein Datenstrom oder eine Sequenz von Signalen, der bzw. die das Computerprogramm zum Durchführen eines der hierin beschriebenen Verfahren darstellt bzw. darstellen. Der Datenstrom oder die Sequenz von Signalen kann bzw. können beispielsweise dahin gehend konfiguriert sein, über eine Datenkommunikationsverbindung, beispielsweise über das Internet, transferiert zu werden.

Ein weiteres Ausführungsbeispiel umfasst eine Verarbeitungseinrichtung, beispielsweise einen Computer oder ein programmierbares Logikbauelement, die dahin gehend konfiguriert oder angepasst ist, eines der hierin beschriebenen Verfahren durchzuführen.

Ein weiteres Ausführungsbeispiel umfasst einen Computer, auf dem das Computerprogramm zum Durchführen eines der hierin beschriebenen Verfahren installiert ist.

Ein weiteres Ausführungsbeispiel gemäß der Erfindung umfasst eine Vorrichtung oder ein System, die bzw. das ausgelegt ist, um ein Computerprogramm zur Durchführung zumindest eines der hierin beschriebenen Verfahren zu einem Empfänger zu übertragen. Die Übertragung kann beispielsweise elektronisch oder optisch erfolgen. Der Empfänger kann beispielsweise ein Computer, ein Mobilgerät, ein Speichergerät oder eine ähnliche Vor-richtung sein. Die Vorrichtung oder das System kann beispielsweise einen Datei-Server zur Übertragung des Computerprogramms zu dem Empfänger umfassen.

Bei manchen Ausführungsbeispielen kann ein programmierbares Logikbauelement (beispielsweise ein feldprogrammierbares Gatterarray, ein FPGA) dazu verwendet werden, manche oder alle Funktionalitäten der hierin beschriebenen Verfahren durchzuführen. Bei manchen Ausführungsbeispielen kann ein feldprogrammierbares Gatterarray mit einem Mikroprozessor zusammenwirken, um eines der hierin beschriebenen Verfahren durchzuführen. Allgemein werden die Verfahren bei einigen Ausführungsbeispielen seitens einer beliebigen Hardwarevorrichtung durchgeführt. Diese kann eine universell einsetzbare Hardware wie ein Computerprozessor (CPU) sein oder für das Verfahren spezifische Hardware, wie beispielsweise ein ASIC.

Nachfolgend werden die oben beschriebenen Erfindungen bzw. die Aspekte der Erfindungen aus zwei weiteren Blickwinkeln mit anderen Worten beschrieben:

Integrated Eyetracker

Der "Integrated Eyetracker" umfasst eine Zusammenstellung an FPGA-optimierten Algorithmen, die dazu geeignet sind (Ellipsen-)Merkmale (Hough-Features) mittels einer parallelen Hough-Transformation aus einem Kamera-Livebild zu extrahieren und daraus eine Blickrichtung zu berechnen. Durch Auswertung der extrahierten Merkmale kann die Pupillenellipse bestimmt werden. Bei Einsatz mehrerer Kameras mit zueinander bekannter Lage und Ausrichtung können die 3D Position des Pupillenmittelpunktes sowie die 3D Blickrichtung und der Pupillendurchmesser ermittelt werden. Zur Berechnung werden die Lage und Form der Ellipsen in den Kamerabildern herangezogen. Es ist keine Kalibration des Systems für den jeweiligen Nutzer erforderlich und keine Kenntnis über den Abstand zwischen den Kameras und dem analysierten Auge.

Die genutzten Bildverarbeitungsalgorithmen sind insbesondere dadurch gekennzeichnet, dass Sie für die Verarbeitung auf einem FPGA (field programmable gate array) optimiert sind. Die Algorithmen ermöglichen eine sehr schnelle Bildverarbeitung mit konstanter Bildwiederholrate, minimalen Latenzzeiten und minimalem Ressourcenverbrauch im FPGA. Damit sind diese Module prädestiniert für zeit-/latenz-/sicherheitskritische Anwendungen (z. B. Fahrerassistenzsysteme), medizinische Diagnosesysteme (z. B. Perimeter) sowie Anwendungen wie Human machine interfaces (z. B. für mobile devices), die ein geringes Bauvolumen erfordern.

Problemstellung

- Robuste Detektion von 3D-Augenpositionen und 3D-Blickrichtungen im 3D-Raum in mehreren (Live-) Kamerabildern sowie Detektion der Pupillengrößen
- Sehr kurze Reaktionszeit (bzw. Verarbeitungszeit)
- Kleine Bauform
- autonome Funktionsweise (Unabhängigkeit vom PC) durch integrierte Lösung

Stand der Technik

- Eyetracker-Systeme

    ◦ Steffen Markert: Blickrichtungserfassung des menschlichen Auges in Echtzeit (Diplomarbeit und Patent DE 10 2004 046 617 A1)
    ◦ Andrew T. Duchowski: Eye Tracking Methodology: Theory and Practice

- Parallele-Hough Transformation

    ◦ Johannes Katzmann: Eine Echtzeit-Implementierung für die Ellipsen-Hough-Transformation (Diplomarbeit und Patent DE 10 2005 047 160 B4)
    ◦ Christian Holland-Nell: Implementierung eines Pupillen-Detektionsalgorithmus basierend auf der Hough-Transformation für Kreise (Diplomarbeit und Patent DE 10 2005 047 160 B4)

Nachteile des aktuellen Standes der Technik

- Eyetracker-Systeme
  ◦ Nachteile:

    ▪ Eyetracking-Systeme erfordern im Allgemeinen eine (aufwändige) Kalibrierung vor der Nutzung
    ▪ Das System nach Markert (Patent DE 10 2004 046 617 A1) ist kalibrationsfrei, funktioniert aber nur unter ganz bestimmten Voraussetzungen:

      1. Abstand zwischen Kameras und Pupillenmittelpunkt müssen bekannt und im System hinterlegt sein
      2. Das Verfahren funktioniert nur für den Fall, dass der 3D Pupillenmittelpunkt in den optischen Achsen der Kameras liegt

    ▪ Die gesamte Verarbeitung ist für PC Hardware optimiert und somit auch deren Nachteilen unterworfen (kein festes Zeitregime bei der Verarbeitung möglich)
    ▪ leistungsstarke Systeme werden benötigt, da die Algorithmen einen sehr hohen Ressourcenverbrauch aufweisen
    ▪ lange Verarbeitungsdauer und damit lange Verzögerungszeit bis Ergebnis vorliegt (z. T. abhängig von der auszuwertenden Bildgröße)

- Parallele-Hough Transformation
  ◦ Nachteile:

    ▪ Es können nur binäre Kantenbilder transformiert werden
    ▪ Transformation liefert nur ein binäres Ergebnis bezogen auf eine Bildkoordinate (Position der Struktur wurde gefunden, aber nicht: Trefferwahrscheinlichkeit und weitere Strukturmerkmale)
    ▪ Keine flexible Anpassung des Transformationskernes während der Laufzeit und damit nur unzureichende Eignung für dynamische Bildinhalte (z.B. kleine und große Pupillen)
    ▪ Keine Rekonfiguration des Transformationskernes auf andere Strukturen während der Laufzeit möglich und damit begrenzte Eignung für Objekterkennung

Umsetzung

Das Gesamtsystem ermittelt aus zwei oder mehr Kamerabildern in denen dasselbe Auge abgebildet ist jeweils eine Liste von mehrdimensionalen Hough-Merkmalen und berechnet jeweils auf deren Basis die Lage und Form der Pupillenellipse. Aus den Parametern dieser beiden Ellipsen sowie allein aus der Lage und Ausrichtung der Kameras zueinander können die 3D Position des Pupillenmittelpunktes sowie die 3D Blickrichtung und der Pupillendurchmesser vollständig kalibrationsfrei ermittelt werden. Als Hardwareplattform wir eine Kombination aus mindestens zwei Bildsensoren, FPGA und/oder nachgeschaltetem Mikroprozessorsystem (ohne dass ein PC zwingend benötigt wird).
"Hough preprocessing", "Parallel hough transform", "Hough feature extractor", "Hough feature to ellipse converter" "'Coresize control", "Temporal smart smoothing filter", "3D camera system model", "3D position calculation" und "3D gaze direction calculation" betreffen einzelne Funktionsmodule des Integrated Eyetrackers. Sie ordnen sich in die Bildverarbeitungskette des Integrated Eyetrackers wie folgt ein:

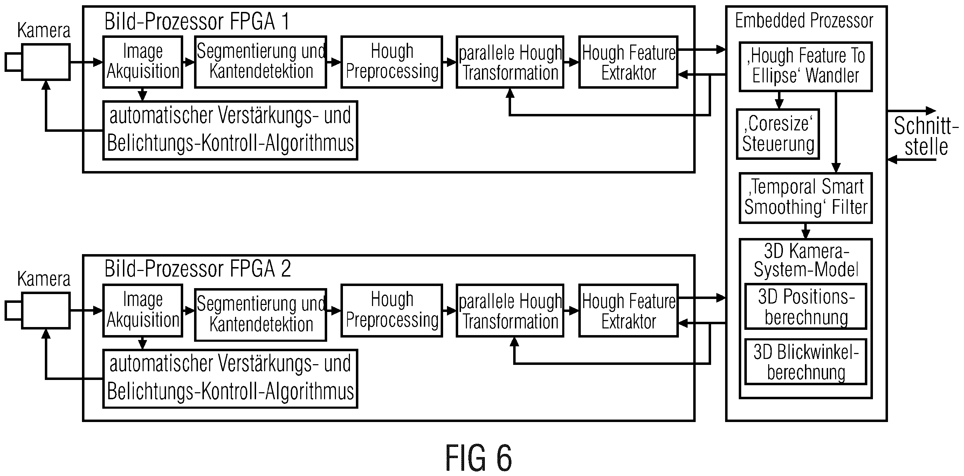

Fig. 6 zeigt ein Blockschaltbild der einzelnen Funktionsmodule im Integrated Eyetracker. Das Blockschaltbild zeigt die einzelnen Verarbeitungsstufen des Integrated Eyetrackers. Im Folgenden wird eine detaillierte Beschreibung der Module gegeben.

• "Hough preprocessing"

  ◦ Funktion

    ▪ Aufbereitung eines Videodatenstromes für das Modul "Parallel Hough Transform", insbesondere durch Bildrotation und Up-sampling des zu transformierenden Bildes je nach Parallelisierungsgrad des Moduls "Parallel Hough Transform"

  ◦ Input

- Binäres Kantenbild oder Gradientenbild

○ Output

- Je nach Parallelisierungsgrad des nachfolgenden Moduls ein oder mehrere Videodatenströme mit aufbereiteten Pixeldaten aus dem Input

○ Detaillierte Beschreibung

- Prinzip bedingt kann die parallele Hough-Transformation aus vier um jeweils 90° versetzten Hauptrichtungen auf den Bildinhalt angewendet werden
- Dazu erfolgt im Preprocessing eine Bildrotation um 90°
- Die beiden verbleibenden Richtungen werden dadurch abgedeckt, dass jeweils das rotierte und nicht rotierte Bild horizontal gespiegelt werden (durch umgekehrtes Auslesen der im Speicher abgelegten Bildmatrix)
- Je nach Parallelisierungsgrad des Moduls ergeben sich die folgenden drei Konstellationen für den Output:

  - 100% Parallelisierung: simultane Ausgabe von vier Videodatenströmen: um 90° rotiert, nicht rotiert sowie jeweils gespiegelt
  - 50% Parallelisierung: Ausgabe von zwei Videodatenströmen: um 90° rotiert und nicht rotiert, die Ausgabe der jeweils gespiegelten Varianten erfolgt sequentiell
  - 25% Parallelisierung: Ausgabe eines Videodatenstromes: um 90° rotiert und nicht rotiert und jeweils deren gespiegelte Varianten werden sequentiell ausgegeben

- "Parallel hough transform"

  ○ Funktion

  - Parallele Erkennung einfacher Muster (Geraden mit unterschiedlichen Größen und Anstiegen und Krümmungen mit verschiedenen Radien und Orientierungen) und deren Auftrittswahrscheinlichkeit in einem binären Kanten- oder Gradientenbild

  ○ Input

  - Für die parallele Hough Transformation aufbereitetes Kanten bzw. Gradientenbild (Output des "Hough preprocessing" Moduls)

  ○ Output

  - Mehrdimensionaler Houghraum, der alle relevanten Parameter der gesuchten Struktur enthält

  ○ Detaillierte Beschreibung

  - Verarbeitung des Input durch ein komplexes delaybasiertes lokales Filter, das eine definierte "Durchlaufrichtung" für Pixeldaten hat und durch folgende Eigenschaften geprägt ist:

    - Filterkern mit variabler Größe bestehend aus Delayelementen
    - Zur adaptiven Anpassung des Filters an die gesuchten Muster können Delayelemente während der Laufzeit zu- und abgeschaltet werden
    - Jede Spalte des Filters steht für eine bestimmte Ausprägung der gesuchten Struktur (Krümmung oder Geradenanstieg)
    - Summenbildung über die Filterspalten liefert Auftrittswahrscheinlichkeiten für die Ausprägung der Struktur, die durch die jeweilige Spalte repräsentiert wird
    - Beim Durchlaufen des Filters wird immer die Spalte mit der größten Auftrittswahrscheinlichkeit für eine Ausprägung des gesuchten Musters aus dem Filter herausgereicht

  - Für jedes Bildpixel liefert das Filter einen Punkt im Houghraum der die folgenden Informationen enthält:

- Art des Musters (z.B. Gerade oder Halbkreis)
- Auftrittswahrscheinlichkeit für das Muster
- Ausprägung der Struktur (Stärke der Krümmung bzw. bei Geraden: Anstieg und Länge)
- Lage bzw. Orientierung der Struktur im Bild

■ Als Transformationsergebnis entsteht ein mehrdimensionales Bild, das im folgenden als Houghraum bezeichnet wird

- "Houghfeature extractor"

  ○ Funktion

  ■ Extraktion von Features aus dem Houghraum, die relevante Informationen für die Mustererkennung enthalten

  ○ Input

  ■ Mehrdimensionaler Houghraum (Output des "Parallel hough transform" Moduls)

  ○ Output

  ■ Liste von Hough-Features die relevante Informationen für die Mustererkennung enthalten

  ○ Detaillierte Beschreibung

  ■ Glättung der Hough-Feature-Räume (Räumliche Korrektur mittels lokaler Filterung)
  ■ "Ausdünnen" des Houghraumes (Unterdrückung nicht relevanter Informationen für die Mustererkennung) durch eine abgewandelte "non-maximum -suppression":

  - Ausblenden von für die Weiterverarbeitung nicht relevanten Punkten ("Nicht-Maxima" im Hough-Wahrscheinlichkeitsraum) unter Berücksichtigung der Art des Musters und der Ausprägung der Struktur
  - Weitere Ausdünnung der Houghraumpunkte mit Hilfe geeigneter Schwellen:

    ○ Rauschunterdrückung durch Schwellwert im Hough-Wahrscheinlichkeitsraum
    ○ Angabe eines Intervalls für minimal und maximal zulässige Ausprägung der Struktur (z.B. minimale/maximale Krümmung bei gebogenen Strukturen oder kleinster/größter Anstieg bei Geraden)

  ■ Analytische Rücktransformation der Parameter aller verbleibenden Punkte in den Originalbildbereich ergibt folgende Hough-Features:

  - Gebogene Strukturen mit den Parametern:

    ○ Lage (x- und y-Bildkoordinate)
    ○ Auftrittswahrscheinlichkeit des Hough-Features
    ○ Radius des Bogens
    ○ Winkel, der angibt, in welche Richtung der Bogen geöffnet ist

  - Geraden mit den Parametern:

    ○ Lage (x- und y-Bildkoordinate)
    ○ Auftrittswahrscheinlichkeit des Hough-Features
    ○ Winkel, der die Steigung der Geraden angibt
    ○ Länge des repräsentierten Geradenabschnittes

- "Hough feature to ellipse converter"

  ○ Funktion

- Auswahl der 3 bis 4 Hough-Features (Krümmungen), die im Kamerabild am wahrscheinlichsten den Pupillenrand (Ellipse) beschreiben, und Verrechnung zu einer Ellipse

  ◦ Input

  - Liste aller in einem Kamerabild detektierten Hough-Features (Krümmungen)

  ◦ Output

  - Parameter der Ellipse, die am wahrscheinlichsten die Pupille repräsentiert

  ◦ Detaillierte Beschreibung

  - Aus der Liste aller Hough-Features (Krümmungen) werden Kombinationen aus 3 bis 4 Hough-Features gebildet, die auf Grund ihrer Parameter die horizontalen und vertikalen Extrempunkte eine Ellipse beschreiben könnten
  - Dabei fließen folgende Kriterien in die Auswahl der Hough-Features ein:

    • Scores (Wahrscheinlichkeiten) der Hough-Features
    • Krümmung der Hough-Features
    • Lage und Orientierung der Hough-Features zueinander

  - Die ausgewählten Hough-Feature Kombinationen werden sortiert:

    • Primär nach der Anzahl der enthaltenen Hough-Features
    • Sekundär nach der kombinierten Wahrscheinlichkeit der enthaltenen Hough-Features

  - Nach dem Sortieren wird die an erster Stelle stehende Hough-Feature Kombination ausgewählt und daraus die Ellipse gefittet, welche am wahrscheinlichsten die Pupille im Kamerabild repräsentiert

- "Coresize control"

  ◦ Funktion

  - Dynamische Anpassung des Filterkernes (Hough-Core) der Parallelen Hough-Transformation an die aktuelle Ellipsengröße

  ◦ Input

  - Zuletzt genutzte Hough-Core Größe
  - Parameter der Ellipse, welche die Pupille im entsprechenden Kamerabild repräsentiert

  ◦ Output

  - Aktualisierte Hough-Core Größe

  ◦ Detaillierte Beschreibung

  - In Abhängigkeit der Größe (Länge der Halbachsen) der vom "Hough feature to ellipse converter" berechneten Ellipse, wird die Hough-Core Größe in definierten Grenzen nachgeführt um die Genauigkeit der Hough-Transformationsergebnisse bei der Detektion der Ellipsenextrempunkte zu erhöhen

- "Temporal smart smoothing filter"

  ◦ Funktion

  - Adaptive zeitliche Glättung einer Datenreihe (z. B. einer ermittelten Ellipsenmittelpunktkoordinate) nach dem Prinzip der exponentiellen Glättung, wobei Aussetzer oder extreme Ausreißer in der zu glättenden Datenreihe NICHT zu Schwankungen der geglätteten Daten führen

- Input

  - Zu jedem Aufrufzeitpunkt des Moduls jeweils ein Wert der Datenreihe und die dazugehörigen Gütekriterien (z. B. Auftrittswahrscheinlichkeit einer gefitteten Ellipse)

- Output

  - Geglätteter Datenwert (z. B. Ellipsenmittelpunktkoordinate)

- Detaillierte Beschreibung

  - Über einen Satz von Filterparametern kann beim Initialisieren des Filters dessen Verhalten festgelegt werden
  - Der aktuelle Input-Wert wird für die Glättung verwendet, wenn er nicht in eine der folgenden Kategorien fällt:

    - Entsprechend der dazugehörigen Auftrittswahrscheinlichkeit handelt es sich um einen Aussetzer in der Datenreihe

    - Entsprechend der dazugehörigen Ellipsenparameter handelt es sich um einen Ausreißer

      - Wenn die Größe der aktuellen Ellipse sich zu stark von der Größe der vorhergehenden Ellipse unterscheidet

      - Bei einer zu großen Differenz der aktuellen Position zur letzten Position der Ellipse

  - Ist eines dieser Kriterien erfüllt, wird weiterhin der zuvor ermittelte geglättete Wert ausgegeben, andernfalls wird der aktuelle Wert zur Glättung herangezogen
  - Um eine möglichst geringe Verzögerung bei der Glättung zu erhalten werden aktuelle Werte stärker gewichtet als vergangene:

    - aktueller geglättete Wert = aktueller Wert * Glättungskoeffizient + letzter geglätteter Wert * (1 - Glättungskoeffizient)
    - der Glättungskoeffizient wird in definierten Grenzen dynamisch an den Trend der zu glättenden Daten angepasst:

      - Verringerung bei eher konstantem Werteverlauf der Datenreihe
      - Erhöhung bei aufsteigendem oder abfallendem Werteverlauf der Datenreihe

  - Wenn langfristig ein größerer Sprung bei den zu glättenden Ellipsenparametern vorkommt, passt sich das Filter und somit auch der geglättete Werteverlauf an den neuen Wert an

- "3D camera system model"

  - Funktion

    - Modellierung des 3D-Raumes in dem sich mehrere Kameras, der Nutzer (bzw. dessen Augen) und ggf. ein Bildschirm befinden

  - Input

    - Konfigurationsdatei, welche die Modellparameter (Lageparameter, optische Parameter, u. a.) aller Elemente des Modells beinhaltet

  - Output

- Stellt ein Zahlengerüst und Funktionen für Berechnungen innerhalb dieses Modells zur Verfügung

  ○ Detaillierte Beschreibung

  - Modellierung der räumlichen Lage (Position und Drehwinkel) aller Elemente des Modells sowie deren geometrische (z. B. Pixelgröße, Sensorgröße, Auflösung) und optische (z. B. Brennweite, Objektivverzeichnung) Eigenschaften
  - Das Modell umfasst zum jetzigen Zeitpunkt folgende Elemente:

    • Kameraeinheiten, bestehend aus:

      ○ Kamerasensoren
      ○ Objektiven

    • Augen
    • Display

  - Es werden neben den Eigenschaften aller Elemente des Modells insbesondere die nachfolgend beschriebenen Funktionen "3D position calculation" (zur Berechnung der Augenposition) und "3D gaze direction calculation" (zur Berechnung der Blickrichtung) zur Verfügung gestellt
  - Mit Hilfe dieses Modells kann u. a. die 3D-Blickgerade (bestehend aus Pupillenmittelpunkt und Blickrichtungsvektor (entsprechend der Biologie und Physiologie des menschlichen Auges korrigiert)) berechnet werden
  - Optional kann auch der Blickpunkt eines Betrachters auf einem anderen Objekt im 3D-Modell (z. B. auf einem Display) berechnet werden sowie der fokussierte Bereich des Betrachters

• "3D position calculation"

  ○ Funktion

  - Berechnung der räumlichen Position (3D-Koordinaten) eines Punktes, der von zwei oder mehr Kameras erfasst wird (z. B. Pupillenmittelpunkt) durch Triangulation

  ○ Input

  - 2D-Koordinaten eines Punktes in zwei Kamerabildern

  ○ Output

  - 3D-Koordinaten des Punktes
  - Fehlermaß: beschreibt die Genauigkeit der übergebenen 2D-Koordinaten in Verbindung mit den Modellparametern

  ○ Detaillierte Beschreibung

  - Aus den übergebenen 2D-Koordinaten werden mit Hilfe des "3D camera system model" (insbesondere unter Berücksichtigung der optischen Parameter) für beide Kameras die Lichtstrahlen berechnet, die den 3D-Punkt als 2D-Punkte auf den Sensoren abgebildet haben
  - Diese Lichtstrahlen werden als Geraden im 3D-Raum des Modells beschrieben
  - Der Punkt von dem beide Geraden den geringsten Abstand haben (im Idealfall der Schnittpunkt der Geraden) wird als Position des gesuchten 3D-Punktes angenommen

• "3D gaze direction calculation"

  ○ Funktion

  - Bestimmung der Blickrichtung aus zwei ellipsenförmigen Projektionen der Pupille auf die Kamerasensoren ohne Kalibration und ohne Kenntnis über den Abstand zwischen Auge und Kamerasystem

∘ Input

- 3D-Lageparameter der Bildsensoren
- Ellipsenparameter der auf die beiden Bildsensoren projizierten Pupille
- 3D-Positionen der Ellipsenmittelpunkte auf den beiden Bildsensoren ▪ 3D-Position des Pupillenmittelpunktes

∘ Output

- 3D-Blickrichtung in Vektor- und Winkeldarstellung

∘ Detaillierte Beschreibung

- Aus der 3D-Position des Pupillenmittelpunktes und der Lage der Bildsensoren, werden durch Drehung der realen Kameraeinheiten virtuelle Kameraeinheiten berechnet, deren optische Achse durch den 3D-Pupillenmittelpunkt verläuft
- Anschließend werden jeweils aus den Projektionen der Pupille auf die realen Sensoren Projektionen der Pupille auf die virtuellen Sensoren berechnet, es entstehen sozusagen zwei virtuelle Ellipsen
- Aus den Parametern der virtuellen Ellipsen können für beide Sensoren jeweils zwei Blickpunkte des Auges auf einer beliebigen zur jeweiligen virtuellen Sensorebene parallelen Ebene berechnet werden
- Mit den vier Blickpunkten und dem 3D-Pupillenmittelpunkt lassen sich vier Blickrichtungsvektoren berechnen (jeweils zwei Vektoren aus den Ergebnissen jeder Kamera)
- Von diesen vier Blickrichtungsvektoren, ist immer genau einer der einen Kamera mit einem der anderen Kamera (annähernd) identisch
- Die beiden identischen Vektoren geben die gesuchte Blickrichtung des Auges (gaze direction) an, die dann vom Modul "3D gaze direction calculation" als Ergebnis geliefert wird

4. a) Vorteile

- Berührungslose und vollständig kalibrationsfreie Ermittlung der 3D-Augenpositionen, 3D-Blickrichtung und Pupillengröße unabhängig von der Kenntnis über die Lage des Auges zu den Kameras
- Analytische Bestimmung der 3D Augenposition und 3D Blickrichtung (unter Einbeziehung eines 3D-Raum Modells) ermöglicht eine beliebige Kameraanzahl (>2) und beliebige Kamerapositionen im 3D-Raum
- Vermessung der auf die Kamera projizierten Pupille und damit genaue Bestimmung der Pupillengröße
- Hohe Frameraten (z.B. 60 FPS @ 640x480 auf einem XILINX Spartan 3A DSP @ 96 MHz) und kurze Latenzzeiten durch vollständig parallele Verarbeitung ohne Rekursionen in der Verarbeitungskette
- Einsatz von FPGA-Hardware und Algorithmen, die für die parallelen FPGA-Strukturen entwickelt wurden
- Einsatz der Hough-Transformation (in der beschriebenen angepassten Form für FPGA-Hardware) zur robusten Merkmalsextraktion zur Objekterkennung (hier: Merkmale der Pupillenellipse)
- Algorithmen zur Nachverarbeitung der Houghtransformationsergebnisse sind optimiert auf parallele Verarbeitung in FPGAs
- Festes Zeitregime (konstante Zeitdifferenz zwischen aufeinanderfolgenden Ergebnissen)
- Minimaler Bauraum, da vollständig auf Chip integriert
- geringer Energieverbrauch
- Möglichkeit zur direkten Portierung der Verarbeitung vom FPGA auf einen ASIC → sehr kostengünstige Lösung bei hohen Stückzahlen durch Ausnutzung von Skaleneffekten

Anwendung

- In einem (Live-) Kamerabilddatenstrom werden 3D-Augenpositionen und 3D-Blickrichtungen detektiert, die für folgende Anwendungen genutzt werden können:

  ∘ Sicherheitsrelevante Bereiche

- z. B. Sekundenschlafwarner bzw. Müdigkeitsdetektor als Fahrassistenzsystem im Automotive Bereich, durch Auswertung der Augen (z. B. Verdeckung der Pupille als Maß für den Öffnungsgrad) und unter Berücksichtigung der Blickpunkte und des Fokus

- Mensch-Maschine-Schnittstellen

  - als Eingabeschnittstellen für technische Geräte (Augenpositionen und Blickrichtung können als Inputparameter genutzt werden)
  - Unterstützung des Nutzers beim Anschauen von Bildschirminhalten (z.B. hervorheben von Bereichen, die angeschaut werden)
  - z. B.

    • im Bereich Assisted Living
    • für Computerspiele
    • Blickrichtungsgestützte Eingabe für Head Mounted Devices
    • Optimierung von 3D-Visualisierungen durch Einbeziehen der Blickrichtung

  - Markt- und Medienforschung

    - z.B. Attraktivität von Werbung bewerten durch Auswertung der räumlichen Blickrichtung und des Blickpunktes der Testperson

  - Ophthalmologische Diagnostik (z. B. objektive Perimetrie) und Therapie

FPGA-Facetracker

Ein Aspekt der Erfindung betrifft ein autonomes (PC-unabhängiges) System, das insbesondere FPGA-optimierte Algorithmen nutzt, und dazu geeignet ist ein Gesicht in einem Kamera-Livebild zu detektieren und dessen (räumliche) Position zu ermitteln. Die genutzten Algorithmen sind insbesondere dadurch gekennzeichnet, dass Sie für die Verarbeitung auf einem FPGA (field programmable gate array) optimiert sind und im Vergleich zu den bestehenden Verfahren ohne Rekursionen in der Verarbeitung auskommen. Die Algorithmen ermöglichen eine sehr schnelle Bildverarbeitung mit konstanter Bildwiederholrate, minimalen Latenzzeiten und minimalem Ressourcenverbrauch im FPGA. Damit sind diese Module prädestiniert für zeit-/latenz-/sicherheitskritische Anwendungen (z.B. Fahrerassistenzsysteme) oder Anwendungen wie Human machine interfaces (z.B. für mobile devices), die ein geringes Bauvolumen erfordern. Darüber hinaus kann unter Einsatz einer zweiten Kamera die räumliche Position des Nutzers für bestimmte Punkte im Bild hochgenau, kalibrationsfrei und berührungslos ermittelt werden.

Problemstellung

Robuste und hardwarebasierte Gesichtsdetektion in einem (Live-) Kamerabild

- Detektion von Gesichts und Augenposition im 3D-Raum durch Verwendung eines stereoskopischen Kamerasystems
- Sehr kurze Reaktionszeit (bzw. Verarbeitungszeit)
- Kleine Bauform
- autonome Funktionsweise (Unabhängigkeit vom PC) durch integrierte Lösung

Stand der Technik

- Literatur:

  - Christian Küblbeck, Andreas Ernst: Face detection and tracking in video sequences using the modified census transformation
  - Paul Viola, Michael Jones: Robust Real-time Object Detection

Nachteile aktueller Facetracker Systeme

- Die gesamte Verarbeitung ist für PC-Systeme (allgemeiner: general purpose processors) optimiert und somit auch deren Nachteilen unterworfen (z.B. kein festes Zeitregime bei der Verarbeitung möglich (Beispiel: in Abhängigkeit des Bildinhaltes z.B. Hintergrund dauert das Tracking unter Umständen länger))
- Sequentielle Abarbeitung; das Eingangsbild wird sukzessive in verschiedene Skalierungsstufen gebracht (bis die kleinste Skalierungsstufe erreicht ist) und jeweils mit einem mehrstufigen Klassifikator nach Gesichtern durchsucht
  ◦ Je nachdem wie viele Skalierungsstufen berechnet werden müssen bzw. wie viele Stufen des Klassifikators berechnet werden müssen schwankt die Verarbeitungsdauer und damit die Verzögerungszeit bis das Ergebnis vorliegt
- Um hohe Frameraten zu erreichen werden leistungsstarke Systeme benötigt (höhere Taktraten, unter Umständen Multicore-Systeme), da die bereits auf PC-Hardware optimierten Algorithmen trotzdem einen sehr hohen Ressourcenverbrauch aufweisen (insbesondere bei embedded Prozessorsystemen)
- Ausgehend von der detektierten Gesichtsposition liefern Klassifikatoren nur ungenaue Augenpositionen (die Position der Augen - insbesondere der Pupillenmittelpunkt - wird nicht analytisch ermittelt (bzw. vermessen) und ist dadurch hohen Ungenauigkeiten unterworfen)
- Die ermittelten Gesichts- und Augenpositionen liegen nur in 2D-Bildkoordinaten vor, nicht in 3D

Umsetzung

Das Gesamtsystem ermittelt aus einem Kamerabild (in dem ein Gesicht abgebildet ist) die Gesichtsposition und ermittelt unter Nutzung dieser Position die Positionen der Pupillenmittelpunkte des linken und rechten Auges. Werden zwei oder mehr Kameras mit einer bekannten Ausrichtung zueinander verwendet, können diese beiden Punkte für den 3-dimensionalen Raum angegeben werden. Die beiden ermittelten Augenpositionen können in Systemen, welche den "Integrated Eyetracker" nutzen, weiterverarbeitet werden. Der "Parallel image scaler", "Parallel face finder", "Parallel eye analyzer", "Parallel pupil analyzer", "Temporal smart smoothing filter", "3D camera system model" und "3D position calculation" betreffen einzelne Funktionsmodule des Gesamtsystems (FPGA-Facetracker). Sie ordnen sich in die Bildverarbeitungskette des FPGA-Facetrackers wie folgt ein:

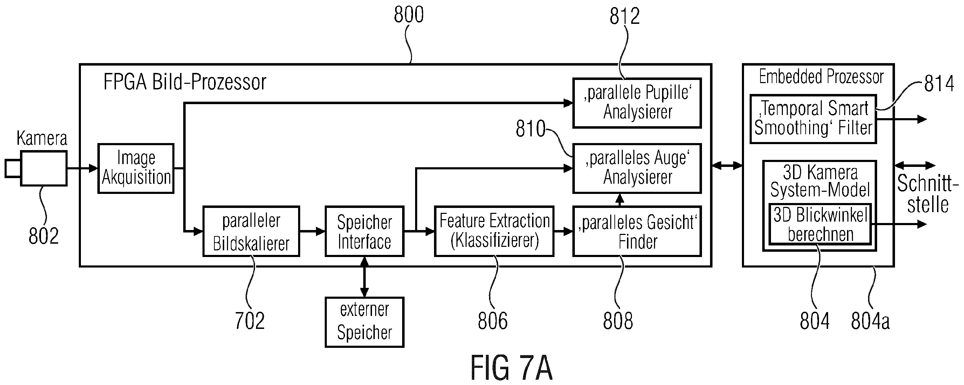

Fig. 7a zeigt ein Blockschaltbild der einzelnen Funktionsmodule im FPGA-Facetracker. Die Funktionsmodule "3D camera system model" und "3D position calculation" sind für das Facetracking nicht zwingend erforderlich, werden aber bei Verwendung eines stereoskopen Kamerasystems und Verrechnung geeigneter Punkte auf beiden Kameras zur Bestimmung räumlicher Positionen genutzt (beispielsweise zur Bestimmung der 3D-Kopfposition bei Verrechung der 2D-Gesichtsmittelpunkte in beiden Kamerabildern). Das Modul "Feature extraction (classification)" des FPGA-Facetrackers baut auf der Merkmalsextraktion und Klassifikation von Küblbeck/Ernst vom Fraunhofer IIS (Erlangen) auf und nutzt eine angepasste Variante ihrer Klassifikation auf Basis von Census Merkmalen. Das Blockschaltbild zeigt die einzelnen Verarbeitungsstufen des FPGA-Facetracking Systems. Im Folgenden wird eine detaillierte Beschreibung der Module gegeben.

- "Parallel image scaler"

  ◦ Funktion

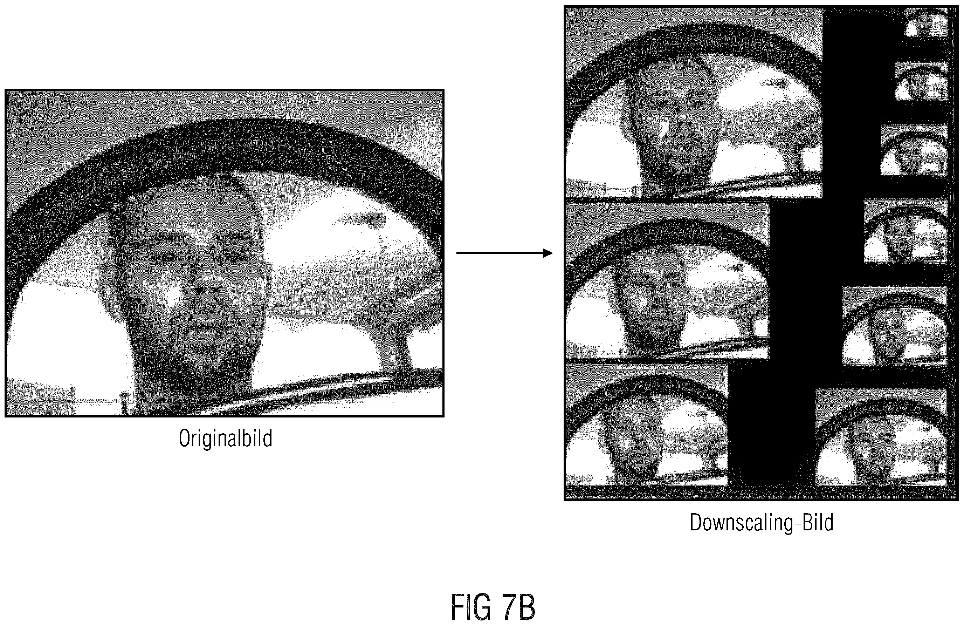

    ▪ Parallele Berechnung der Skalierungsstufen des Ausgangsbildes und Anordnung der berechneten Skalierungsstufen in einer neuen Bildmatrix um den nachfolgenden Bildverarbeitungsmodulen eine simultane Analyse aller Skalierungsstufen zu ermöglichen
    Fig. 7b zeigt die Ausgangsbild (Originalbild) und Ergebnis (Downscaling-Bild) des Parallel image-scaler.

  ◦ Input

    ▪ Ausgangsbild in Originalauflösung

  ◦ Output

    ▪ Neue Bildmatrix die mehrere skalierte Varianten des Ausgangsbildes in einer für die nachfolgenden Facetracking-Module geeigneten Anordnung beinhaltet

  ◦ Detaillierte Beschreibung

- Aufbau einer Bildpyramide durch parallele Berechnung der verschiedenen Skalierungsstufen des Ausgangsbildes
- Um eine definierte Anordnung der zuvor berechneten Skalierungsstufen in der Zielmatrix gewährleisten zu können erfolgt eine Transformation der Bildkoordinaten der jeweiligen Skalierungsstufe in das Bildkoordinatensystem der Zielmatrix anhand verschiedener Kriterien:

  - Definierter Mindestabstand zwischen den Skalierungsstufen um ein übersprechen von Analyseergebnissen in benachbarte Stufen zu unterdrücken
  - Definierter Abstand zu den Rändern der Zielmatrix um die Analyse zum Teil aus dem Bild herausragender Gesichter gewährleisten zu können

- "Parallel face finder"

  ◦ Funktion

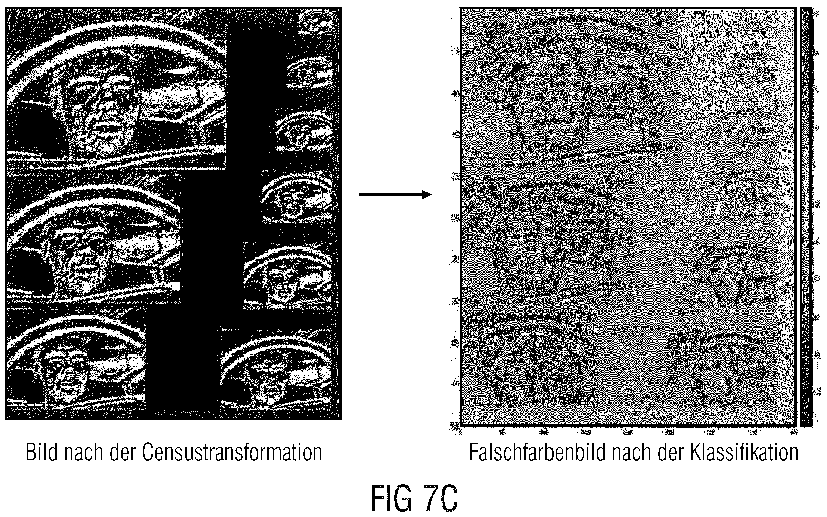

  - Detektiert ein Gesicht aus Klassifikationsergebnissen mehrerer Skalierungsstufen, die gemeinsam in einer Matrix angeordnet sind
  Wie in Fig. 7c gezeigt, stellt das Ergebnis der Klassifikation (rechts) den Input für den Parallel face finder dar.

  ◦ Input

  - Klassifizierte Bildmatrix die mehrere Skalierungsstufen des Ausgangsbildes enthält

  ◦ Output

  - Position, an der sich mit der höchsten Wahrscheinlichkeit ein Gesicht befindet (unter Berücksichtigung mehrerer Kriterien)

  ◦ Detaillierte Beschreibung

  - Rauschunterdrückung zum Eingrenzen der Klassifikationsergebnisse
  - Räumliche Korrektur der Klassifikationsergebnisse innerhalb der Skalierungsstufen mittels einer Kombination aus lokalen Summen- und Maximumfilter
  - Orientierung an der höchsten Auftrittswahrscheinlichkeit für ein Gesicht optional an der Gesichtsgröße über alle Skalierungsstufen hinweg
  - Räumliche Mittelung der Ergebnispositionen über ausgewählte Skalierungsstufen hinweg

    - Auswahl der in die Mittelung einbezogener Skalierungsstufen erfolgt unter Berücksichtigung der folgenden Kriterien:

      ◦ Differenz der Mittelpunkte des ausgewählten Gesichts in den betrachteten Skalierungsstufen
      ◦ Dynamische ermittelte Abweichung vom höchsten Ergebnis des Summenfilters
      ◦ Unterdrückung von Skalierungsstufen ohne Klassifikationsergebnis

  - Schwellwertbasierte Einstellung der Detektionsleistung des "parallel face finder"

- "Parallel eye analyzer"

  ◦ Funktion

  - Detektiert während der Gesichtsdetektion parallel die Position der Augen im entsprechenden Gesicht (diese ist vor allem bei nicht ideal frontal aufgenommenen und verdrehten Gesichtern wichtig)

  ◦ Input

  - Bildmatrix, die mehrere Skalierungsstufen des Ausgangsbildes enthält (aus dem "Parallel image scaler" Modul) sowie die jeweils aktuelle Position an der sich höchstwahrscheinlich das gesuchte Gesicht befindet (aus dem "Parallel face finder" Modul)

■ Position der Augen und ein dazugehöriger Wahrscheinlichkeitswert im aktuell vom "Parallel face finder" gefundenen Gesicht

○ Detaillierte Beschreibung

■ Basierend auf dem herunter skalierten Ausgangsbild wird in einem definierten Bereich (Augenbereich) innerhalb der vom "Parallel face finder" gelieferten Gesichtsregion die im folgenden beschriebene Augensuche für jedes Auge durchgeführt:

• Definieren des Augenbereichs aus empirisch ermittelten Normalpositionen der Augen innerhalb der Gesichtsregion
• Mit einem speziell geformten korrelationsbasierten lokalen Filter werden innerhalb des Augenbereichs Wahrscheinlichkeiten für das Vorhandensein eines Auges ermittelt (das Auge wird in diesem Bildbereich vereinfacht ausgedrückt als eine kleine dunkle Fläche mit heller Umgebung beschrieben)
• Die genaue Augenposition inklusive ihrer Wahrscheinlichkeit ergibt sich durch eine Maximumsuche in dem zuvor berechneten Wahrscheinlichkeitsgebirge

• "Parallel pupil analyzer"

○ Funktion

■ Detektiert ausgehend von einer zuvor ermittelten Augenposition die Position der Pupillenmittelpunkte innerhalb der detektierten Augen (dadurch erhöht sich die Genauigkeit der Augenposition, was für Vermessungen oder das Anschließende Auswerten der Pupille wichtig ist)

○ Input

■ Ausgangsbild in Originalauflösung sowie die ermittelten Augenpositionen und Gesichtsgröße (aus dem "Parallel eye analyzer" bzw. "Parallel face finder")

○ Output

■ Position der Pupille innerhalb des ausgewerteten Bildes sowie ein Status, der aussagt, ob eine Pupille gefunden wurde oder nicht

○ Detaillierte Beschreibung

■ Basierend auf den ermittelten Augenpositionen und der Gesichtsgröße wird ein zu bearbeitender Bildausschnitt um das Auge herum festgelegt
■ Über diese Bildmatrix hinweg wird ein Vektor aufgebaut, der die Minima der Bildspalten enthält, sowie ein Vektor, der die Minima der Bildzeilen enthält
■ Innerhalb dieser Vektoren (aus minimalen Grauwerten) wird wie nachfolgend erklärt separat der Pupillenmittelpunkt in horizontaler und in vertikaler Richtung detektiert:

• Detektion des Minimums des jeweiligen Vektors (als Position innerhalb der Pupille)
• Ausgehend von diesem Minimum innerhalb des Vektors wird in positiver und negativer Richtung die Position ermittelt, an der ein einstellbarer prozentual auf den Dynamikbereich aller Vektorelemente bezogener Schwellwert überschritten wird
• Die Mittelpunkte dieser Bereiche in den Beiden Vektoren bilden zusammen den Mittelpunkt der Pupille im analysierten Bild

• "Temporal smart smoothing filter"

○ Funktion

■ Adaptive zeitliche Glättung einer Datenreihe (z. B. einer ermittelten Gesichtskoordinate), wobei Aussetzer, unsinnige Werte oder extreme Ausreißer in der zu glättenden Datenreihe NICHT zu Schwankungen der geglätteten Daten führen

○ Input

■ Zu jedem Aufrufzeitpunkt des Moduls jeweils ein Wert der Datenreihe und die dazugehörigen Gütekriterien (beim Facetracking: Gesichtsscore und Downscalingstufe in der das Gesicht gefunden wurde)

○ Output

■ Geglätteter Datenwert (z. B. Gesichtskoordinate)

○ Detaillierte Beschreibung

■ Über einen Satz von Filterparametern kann beim Initialisieren des Filters dessen Verhalten festgelegt werden
■ Der aktuelle Input-Wert wird für die Glättung verwendet, wenn er nicht in eine der folgenden Kategorien fällt:

• Entsprechend dem dazugehörigen Score handelt es sich um einen Aussetzer in der Datenreihe
• Entsprechend der dazugehörigen Downscalingstufe handelt es sich um einen unsinnigen Wert (Wert, der in einer zu weit entfernten Downscalingstufe ermittelt wurde)
• Entsprechend der zu großen Differenz zum letzten für die Glättung verwendeten Wert handelt es sich um einen Ausreißer

■ Ist eines dieser Kriterien erfüllt, wird weiterhin der zuvor ermittelte geglättete Wert ausgegeben, andernfalls wird der aktuelle Wert zur Glättung herangezogen
■ Um eine möglichst geringe Verzögerung bei der Glättung zu erhalten werden aktuelle Werte stärker gewichtet als vergangene:

• aktueller geglättete Wert = aktueller Wert * Glättungskoeffizient + letzter geglätteter Wert * (1 - Glättungskoeffizient)
• der Glättungskoeffizient wird in definierten Grenzen dynamisch an den Trend der zu glättenden Daten angepasst:

○ Verringerung bei eher konstantem Werteverlauf der Datenreihe
○ Erhöhung bei aufsteigendem oder abfallendem Werteverlauf der Datenreihe

■ Wenn langfristig ein größerer Sprung bei den zu glättenden Daten oder den dazugehörigen Downscalingstufen vorkommt, passt sich das Filter und somit auch der geglättete Werteverlauf an den neuen Wert an

• "3D camera system model"

○ Funktion

■ Modellierung des 3D-Raumes in dem sich mehrere Kameras, der Nutzer (bzw. dessen Augen) und ggf. ein Bildschirm befinden

○ Input

■ Konfigurationsdatei, welche die Modellparameter (Lageparameter, optische Parameter, u. a.) aller Elemente des Modells beinhaltet

○ Output

■ Stellt ein Zahlengerüst und Funktionen für Berechnungen innerhalb dieses Modells zur Verfügung

○ Detaillierte Beschreibung

- Modellierung der räumlichen Lage (Position und Drehwinkel) aller Elemente des Modells sowie deren geometrische (z. B. Pixelgröße, Sensorgröße, Auflösung) und optische (z. B. Brennweite, Objektivverzeichnung) Eigenschaften
- Das Modell umfasst zum jetzigen Zeitpunkt folgende Elemente:

  - Kameraeinheiten, bestehend aus:

    o Kamerasensoren
    o Objektiven

  - Augen
  - Display

- Es werden neben den Eigenschaften aller Elemente des Modells insbesondere die nachfolgend beschriebenen Funktionen "3D position calculation" (zur Berechnung der Augenposition) und "3D gaze direction calculation" (zur Berechnung der Blickrichtung) zur Verfügung gestellt
- In anderen Anwendungsfällen stehen auch folgende Funktionen zur Verfügung:

  - Mit Hilfe dieses Modells kann u. a. die 3D-Blickgerade (bestehend aus Pupillenmittelpunkt und Blickrichtungsvektor (entsprechend der Biologie und Physiologie des menschlichen Auges korrigiert)) berechnet werden
  - Optional kann auch der Blickpunkt eines Betrachters auf einem anderen Objekt im 3D-Modell (z. B. auf einem Display) berechnet werden sowie der fokussierte Bereich des Betrachters

- "3D position calculation"

  ◦ Funktion

    - Berechnung der räumlichen Position (3D-Koordinaten) eines Punktes, der von zwei oder mehr Kameras erfasst wird (z. B. Pupillenmittelpunkt)

  ◦ Input

    - 2D-Koordinaten eines Punktes in zwei Kamerabildern

  ◦ Output

    - 3D-Koordinaten des Punktes
    - Fehlermaß: beschreibt die Genauigkeit der übergebenen 2D-Koordinaten in Verbindung mit den Modellparametern

  ◦ Detaillierte Beschreibung

    - Aus den übergebenen 2D-Koordinaten werden mit Hilfe des "3D camera system model" (insbesondere unter Berücksichtigung der optischen Parameter) für beide Kameras die Lichtstrahlen berechnet, die den 3D-Punkt als 2D-Punkte auf den Sensoren abgebildet haben
    - Diese Lichtstrahlen werden als Geraden im 3D-Raum des Models beschrieben
    - Der Punkt von dem beide Geraden den geringsten Abstand haben (im Idealfall der Schnittpunkt der Geraden) wird als Position des gesuchten 3D-Punktes angenommen

Vorteile

Ermittlung der Gesichtsposition und der Augenpositionen in einem (Live-) Kamerabild in 2D und durch Rückrechnung in den 3D-Raum in 3D (durch Einbeziehen eines 3D-Raum Modells)

- Die unter 3. Vorgestellten Algorithmen sind optimiert auf echtzeitfähige und parallele Verarbeitung in FPGAs

- Hohe Frameraten (60 FPS @ 640x480 auf einem XILINX Spartan 3A DSP @ 48 MHz) und kurze Latenzzeiten durch vollständig parallele Verarbeitung ohne Rekursionen in der Verarbeitungskette → sehr schnelle Bildverarbeitung und verzögerzugsarme Ausgabe der Ergebnisse
- Minimaler Bauraum, da die gesamte Funktionalität mit einem Bauteil (FPGA) erreicht werden kann
- geringer Energieverbrauch
- Festes Zeitregime (konstante Zeitdifferenz zwischen aufeinanderfolgenden Ergebnissen) und damit prädestiniert für den Einsatz in sicherheitskritischen Anwendungen
- Möglichkeit zur direkten Portierung der Verarbeitung vom FPGA auf einen ASIC (application specific integrated circuit) → sehr kostengünstige Lösung bei hohen Stückzahlen durch Ausnutzung von Skaleneffekten

Anwendung

- Vorteile bei der Anwendung im Vergleich zur Softwarelösung

  ◦ autonome Funktionsweise (System on Chip)
  ◦ Möglichkeit der einfachen Überführung in einen ASIC
  ◦ platzsparende Integration in bestehende Systeme/Schaltungen

- Anwendungsbereiche ähnlich denen einer Softwarelösung (In einem (Live-) Kamerabilddatenstrom werden Gesichtsposition und die entsprechenden Augenpositionen detektiert, die für die unten aufgeführten Anwendungen genutzt werden können)

  ◦ Sicherheitsanwendungen

    ▪ z.B. Sekundenschlafwarner im Automotive Bereich, durch Auswertung der Augen (Öffnungsgrad) und der Augen- und Kopfbewegung

  ◦ Mensch-Maschine-Kommunikation

    ▪ z.B. Eingabeschnittstellen für technische Geräte (Kopf- bzw. Augenposition als Inputparameter)

  ◦ Gaze-Tracking

    ▪ z.B. Gesichts- und Augenpositionen als Vorstufe zur Blickrichtungsbestimmung (in Kombination mit "Integrated Eyetracker")

  ◦ Marketing

    ▪ z.B. Attraktivität von Werbung bewerten durch Auswertung von Kopf- und Augenparametern (u. a. Position)

Nachfolgend wird weiteres Hintergrundwissen zu den oben beschrieben Aspekten der Erfindungen offenbart.

Hough-Merkmalsextraktion

Das Ziel der vorliegenden nachfolgenden Ausführungen ist es, auf Basis der parallelen Hough-Transformation und ein robustes Verfahren zur Merkmalsextraktion zu entwickeln. Dazu wird der Houghcore überarbeitet und ein Verfahren zur Merkmalsextraktion vorgestellt, das die Ergebnisse der Transformation reduziert und auf wenige "Merkmalsvektoren" pro Bild herunterbricht. Anschließend wird das neu entwickelte Verfahren in einer Matlab-Toolbox implementiert und getestet. Es wird schließlich eine FPGA-Implementierung des neuen Verfahrens vorgestellt.

Parallele Hough-Transformation für Geraden und Kreise

Die parallele Hough-Transformation nutzt Houghcores unterschiedlicher Größe, die mit Hilfe von Konfigurationsmatrizen für den jeweiligen Anwendungsfall konfiguriert werden müssen. Die mathematischen Zusammenhänge und Verfahren zur Erstellung solcher Konfigurationsmatrizen sind nachfolgend dargestellt. Das Matlab-Skript *alc_config_lines_curvatures.m* greift auf diese Verfahren zurück und erstellt Konfigurationsmatrizen für Geraden und Halbkreise in verschiedenen Größen.

Zur Erstellung der Konfigurationsmatrizen ist es zunächst erforderlich Kurvenscharen in diskreter Darstellung und für unterschiedliche Houghcore-Größen zu berechnen. Die Anforderungen (Bildungsvorschriften) an die Kurvenscharen wurden bereits aufgezeigt. Unter Berücksichtigung dieser Bildungsvorschriften sind insbesondere Geraden und Halbkreise zur Konfiguration der Houghcores geeignet. Für die Blickrichtungsbestimmung werden Houghcores mit Konfigurationen für Halbkreise (bzw. Krümmungen) eingesetzt. Aus Gründen der Vollständigkeit werden hier auch die Konfigurationen für Geraden (bzw. Geradenabschnitte) hergeleitet. Die mathematischen Zusammenhänge zur Bestimmung der Kurvenscharen für Geraden sind veranschaulicht.

Ausgangspunkt für die Berechnung der Kurvenscharen für Geraden bildet die lineare Geradengleichung in (B1).

$$y = m \cdot x + n$$

$$(B1)$$

Die Kurvenscharen können durch Variation des Anstiegs m generiert werden. Dazu wird die Geradensteigung von 0° bis 45° in gleichgroße Intervalle zerlegt. Die Anzahl der Intervalle ist von der Houghcore-Größe abhängig und entspricht der Anzahl an Houghcore-Zeilen. Der Anstieg kann über die Laufvariable $Y_{core}$ von 0 bis $core_{heigt}$ durchgestimmt werden.

$$m = \frac{1}{core_{heigt}} \cdot y_{core}$$

$$(B2)$$

Die Funktionswerte der Kurvenscharen errechnen sich durch Variation der Laufvariablen (in (B3) durch $x_{core}$ ersetzt), deren Werte von 0 bis *core* width laufen.

$$y = \frac{1}{core_{heigt}} \cdot y_{core} \cdot x_{core}$$

$$(B3)$$

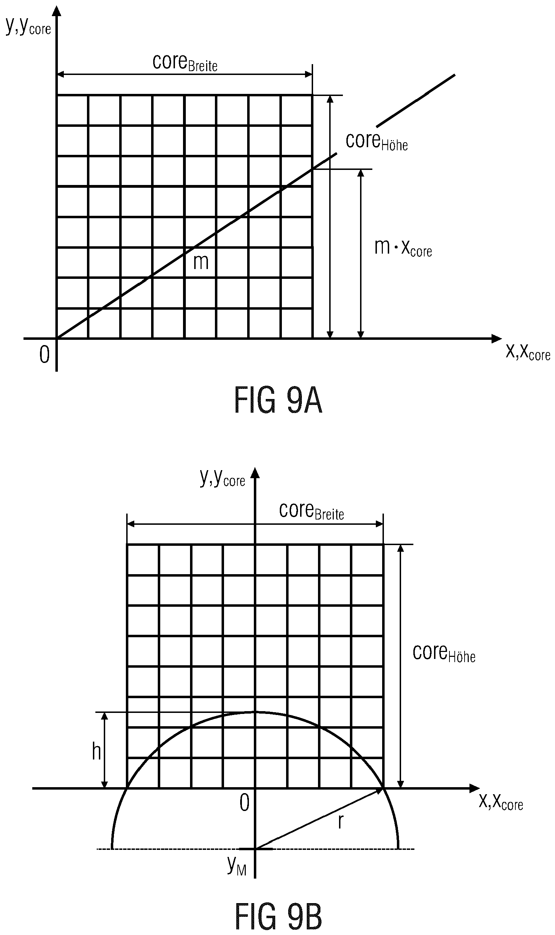

Für eine diskrete Darstellung im 2D-Plot müssen die Funktionswerte auf ganze Zahlen gerundet werden. Die Berechnung der Kurvenscharen für Halbkreise orientiert sich an (Katzmann 2005, S. 37-38) und ist in Fig. 9b veranschaulicht.

Ausgangspunkt für die Berechnung der Kurvenscharen ist die Kreisgleichung in Koordinatenform.

$$r^2 = \left(x - x_M\right)^2 + \left(y - y_M\right)^2$$

$$(B4)$$

Mit $x_M = 0$ (Lage des Kreismittelpunktes auf der y-Achse), $x = x_{core}$ und umstellen nach y folgt für die Funktionswerte der Kurvenscharen (B5).

$$y = \sqrt{r^2 - x_{core}^2 + y_M}$$

$$(B5)$$

Da $y_M$ und $r$ nicht bekannt sind, müssen sie ersetzt werden. Dazu können die mathematischen
Zusammenhänge in (B6) und (B7) aus Fig. 9b hergeleitet werden.

$$y_M = h - r$$

(B6)

$$r_2 = y_M^2 + \left( \frac{core_{width}}{2} \right)^2$$

(B7)

Durch Umstellen von (B7) nach $y_M$ und der Bedingung das $y_M$ immer negativ sein muss (s. Fig. 9b) erhält man (B8).

$$y_M = \sqrt{r^2 - \left( \frac{core_{width}}{2} \right)^2 \cdot (-1)}$$

(B8)

Einsetzen von (B8) in (B5) führt zu (B9).

$$y = \sqrt{r^2 - x_{core}^2 + \sqrt{r^2 - \left( \frac{core_{width}}{2} \right)^2 \cdot (-1)}}$$

(B9)

Aus Fig. 9b wird deutlich, dass der Houghcore mittenzentriert in der y-Achse des Kreiskoordinatensystems liegt. Die Variable $x_{core}$ läuft normalerweise von 0 bis corewidth — 1 und muss somit um $-\dfrac{core_{width}}{2}$ korrigiert werden.

$$y = \sqrt{r^2 - x_{core}^2 - \left( \frac{core_{width}}{2} \right)^2} + \sqrt{r^2 - \left( \frac{core_{width}}{2} \right)^2 \cdot (-1)}$$

(B10)

Es fehlt noch der Radius, den man durch einsetzen von (B6) in (B7) und durch weitere Umformungen erhält.

$$r^2 = (h - r)^2 + \left( \frac{core_{width}}{2} \right)^2$$

(B11)

$$r^2 = h^2 - 2hr + r^2 + \left( \frac{core_{width}}{2} \right)^2$$

(B12)

$$r = \frac{h2 + \left(\dfrac{core_{width}}{2}\right)^2}{2 \cdot h}$$

$$(B13)$$

Zum Erzeugen der Kurvenscharen muss schließlich die Variable h von 0 bis $\dfrac{core_{height}}{2}$ variiert werden. Dies geschieht über die Laufvariable $y_{core}$ die von 0 bis $core_{height}$ läuft.

$$r = \frac{\left(\dfrac{y_{core}}{2}\right)^2 + \left(\dfrac{core_{width}}{2}\right)^2}{2 \cdot \dfrac{y_{core}}{2}}$$

$$(B14)$$

Wie bereits bei den Geraden müssen die y-Werte für eine diskrete Darstellung im 2D-Plot gerundet werden. Die Kurvenscharen für Houghcores vom Typ 2 können ganz einfach über Gleichung (B15) ermittelt werden.

$$y_{Typ\_2} = core_{heigt} - y_{Typ\_1} \qquad (B15)$$

Ausgehend von den Kurvenscharen können für alle Houghcore-Größen jeweils zwei Konfigurationen (Typ 1 und Typ 2) für Geraden und Kreise ermittelt werden. Die Konfigurationen werden dabei direkt aus den Kurvenscharen bestimmt, vgl. (Katzmann 2005, S. 35-36). Konfigurationsmatrizen können entweder mit Nullen oder mit Einsen besetzt sein. Eine Eins steht dabei für ein genutztes Delayelement im Houghcore. Zunächst wird die Konfigurationsmatrix in den Dimensionen des Houghcores mit Nullwerten initialisiert. Danach werden folgende Schritte durchlaufen:

1. Beginne mit der ersten Kurve der Kurvenschar und prüfe den y-Wert der ersten x-Indexnummer. Ist der y-Wert größer als Null, dann besetze in der gleichen Zeile (gleicher y-Index) an genau derselben Stelle (gleicher x-Index) das Element der Konfigurationsmatrix mit Eins.
2. Modifiziere die y-Werte mit gleichem x-Index über alle Kurven der Kurvenschar. Wurde im ersten Schritt das Element mit Eins besetzt, dann ziehe von allen y-Werten Eins ab. Wurde im ersten Schritt das Element nicht besetzt, dann tue nichts.
3. Durchlaufe Schritt 1 und 2 so lange, bis alle Elemente der Konfigurationsmatrix angesprochen wurden.

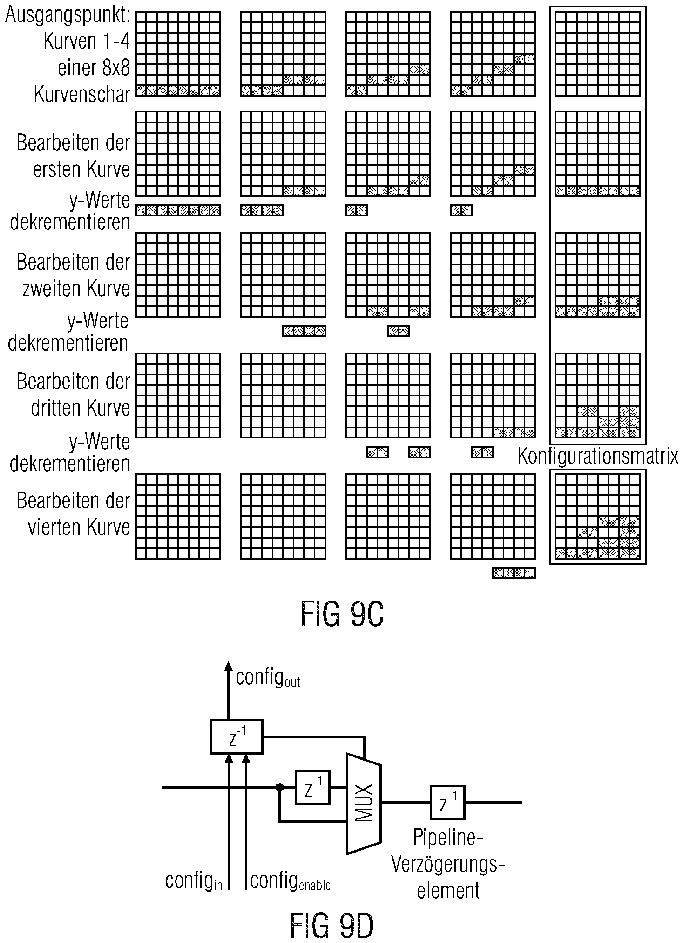

Die Konfigurationsprozedur ist in Fig. 9c schrittweise veranschaulicht.

Abschließend möchte ich auf ein paar Eigenheiten der Houghcore-Konfigurationen eingehen. Die Konfigurationen für Geraden repräsentieren immer nur Geradenabschnitte in Abhängigkeit der Breite des Houghcores. Längere Geradenabschnitte im binären Kantenbild müssen gegebenenfalls aus mehreren detektierten Geradenabschnitten zusammengesetzt werden. Die Auflösung der Winkel (bzw. Steigung) der Geradenabschnitte ist von der Höhe des Houghcores abhängig.

Die Konfigurationen für Kreise repräsentieren immer Kreisbögen um den Scheitelpunkt des Halbkreises herum. Nur die größte y-Indexnummer der Kurvenschar (kleinster Radius) repräsentiert einen vollständigen Halbkreis. Die entwickelten Konfigurationen können für den neuen Houghcore genutzt werden.

Überarbeitung des Houghcores

Ein entscheidender Nachteil der FPGA-Implementierung von Holland-Nell ist die starre Konfiguration der Houghcores. Die Delaylines müssen vor der Synthese parametrisiert werden und sind danach fest in den Hardwarestrukturen abgelegt (Holland-Nell, S. 48-49). Änderungen während der Laufzeit (z. B. Houghcore-Größe) sind nicht mehr möglich. Das neue Verfahren soll an dieser Stelle flexibler werden. Der neue Houghcore soll sich auch während der Laufzeit im FPGA vollständig neu konfigurieren lassen. Das hat mehrere Vorteile. Zum einen müssen nicht zwei Houghcores (Typ 1 und Typ 2) parallel abgelegt werden und zum anderen können auch unterschiedliche Konfigurationen für Geraden und Halbkreise genutzt werden. Darüber hinaus lässt sich die Houghcore-Größe flexibel während der Laufzeit ändern.

Bisherige Houghcore-Struktur bestehen aus einem Delay und einem Bypass und es wird vor der FPGA-Synthese festgelegt welcher Pfad genutzt werden soll. Im Folgenden wird diese Struktur um einen Multiplexer, ein weiteres Register zur Konfiguration des Delayelements (Schalten des Multiplexers) und ein Pipelinedelay erweitert. Die Konfigurationsregister können während der Laufzeit modifiziert werden. Auf diese Weise können unterschiedliche Konfigurationsmatrizen in den Houghcore eingespielt werden. Durch setzten der Pipelinedelays hat das Synthesetool im FPGA mehr Freiheiten bei der Implementierung des Houghcore-Designs und es können höhere Taktraten erzielt werden. Pipelinedelays durchbrechen zeitkritische Pfade innerhalb der FPGA-Strukturen. In Fig. 9d ist das neue Design der Delayelemente veranschaulicht.

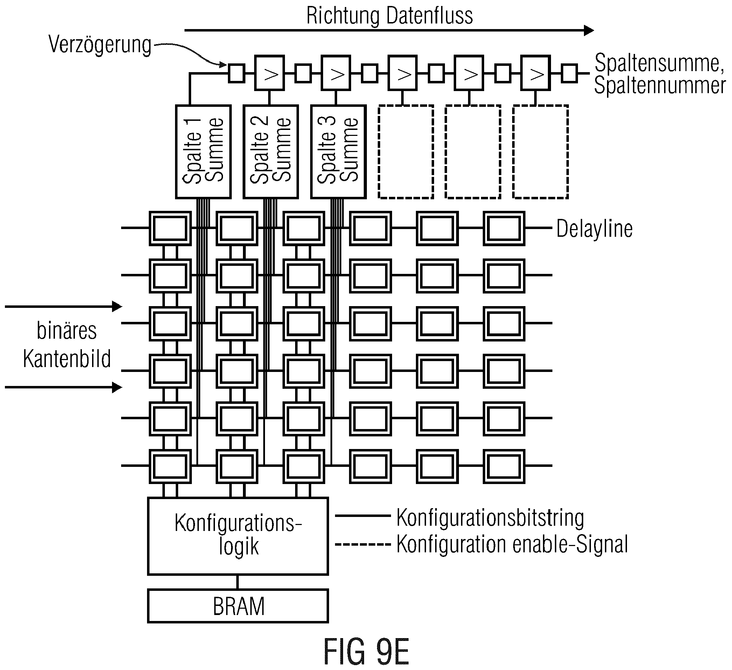

Im Vergleich zur bisherigen Umsetzung nach Katzmann und Holland-Nell sind die Delayelemente des neuen Houghcores etwas komplexer aufgebaut. Zur flexiblen Konfiguration des Delayelements wird ein zusätzliches Register benötigt und der Multiplexer belegt weitere Logikressourcen (muss im FPGA in einer LUT implementiert werden). Das Pipelinedelay ist optional. Neben der Überarbeitung der Delayelemente wurden auch Modifikationen am Design des Houghcores vorgenommen. Der neue Houghcore ist in Fig. 9e veranschaulicht.

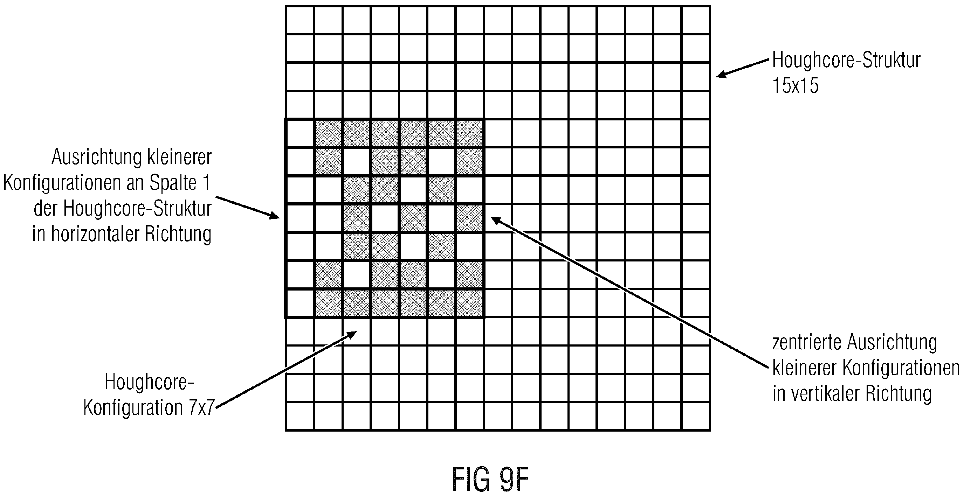

Im Unterschied zum bisherigen Houghcore soll zunächst eine neue Notation eingeführt werden. Aufgrund des um 90° rotierten Designs in Fig. 9e werden die ursprünglich als "Zeilensummen" bezeichneten Signale des Ausgangshistogramms ab sofort "Spaltensummen" genannt. Jede Spalte des Houghcores steht somit für eine Kurve der Kurvenschar. Der neue Houghcore kann außerdem während der Laufzeit mit neuen Konfigurationsmatrizen beaufschlagt werden. Die Konfigurationsmatrizen sind im FPGA-internen BRAM abgelegt und werden von einer Konfigurationslogik geladen. Diese lädt die Konfigurationen als spaltenweisen Bitstring in die verketteten Konfigurationsregister (s. Fig. 9d). Die Rekonfiguration des Houghcores benötigt eine gewisse Zeit und ist von der Länge der Spalten (bzw. der Anzahl der Delaylines) abhängig. Dabei benötigt jedes Spaltenelement einen Taktzyklus und es kommt eine Latenz von wenigen Taktzyklen durch den BRAM und die Konfigurationslogik hinzu. Die Gesamtlatenz zur Rekonfiguration ist zwar nachteilig, kann jedoch für die videobasierte Bildverarbeitung in Kauf genommen werden. Im Normalfall haben die mit einem CMOS-Sensor aufgezeichneten Videodatenströme ein horizontales und vertikales Blanking. Die Rekonfiguration kann somit problemlos in der horizontalen Blankingzeit stattfinden. Die Größe der im FPGA implementierten Houghcore-Struktur gibt auch die maximal mögliche Größe für Houghcore-Konfigurationen vor. Werden kleine Konfigurationen genutzt sind diese vertikal zentriert und in horizontaler Richtung an Spalte 1 der Houghcore-Struktur ausgerichtet (s. Fig. 9f). Nicht genutzte Elemente der Houghcore-Struktur werden allesamt mit Delays besetzt. Die korrekte Ausrichtung kleinerer Konfigurationen ist für die Korrektur der x- Koordinaten (s. Formeln (B17) bis (B19)) wichtig.

Der Houghcore wird wie bisher mit einem binären Kantenbild gespeist, das die konfigurierten Delaylines durchläuft. Mit jedem Verarbeitungsschritt werden die Spaltensummen über den gesamten Houghcore berechnet und jeweils mit dem Summensignal der vorhergehenden Spalte verglichen. Liefert eine Spalte einen höheren Summenwert, wird der Summenwert der ursprünglichen Spalte überschrieben. Als Ausgangssignal liefert der neue Houghcore einen Spaltensummenwert und die dazugehörige Spaltennummer. Auf Basis dieser Werte kann später eine Aussage darüber getroffen werden, welche Struktur gefunden wurde (repräsentiert durch die Spaltennummer) und mit welcher Auftrittswahrscheinlichkeit diese detektiert wurde (repräsentiert durch den Summenwert). Das Ausgangssignal des Houghcores kann auch als Houghraum oder Akkumulatorraum bezeichnet werden. Im Gegensatz zur herkömmlichen Hough-Transformation liegt der Houghraum der parallelen Hough-Transformation im Bildkoordinatensystem vor. Das heißt, dass zu jeder Bildkoordinate ein Summenwert mit dazugehöriger Spaltennummer ausgegeben wird. Zur vollständigen Transformation des Ausgangsbildes muss jeweils ein Houghcore vom Typ 1 und Typ 2 vom nicht rotierten und rotierten Bild durchlaufen werden. Damit liegen nach der Transformation nicht nur Spaltensumme mit dazugehöriger Spaltennummer, sondern auch der Houghcore-Typ und die Ausrichtung des Ausgangsbildes (nicht rotiert oder rotiert) vor. Darüber hinaus können verschiedene Houghcore-Größen und Konfigurationen jeweils für Geraden und Halbkreise genutzt werden. Damit kann neben den genannten Ergebnissen noch der Kurventyp und die Houghcore-Größe angegeben werden. Zusammenfassend ist ein Ergebnisdatensatz des neuen Houghcores in nachfolgender Tabelle dargestellt. Bei der parallelen Hough-Transformation entsteht für jeden Bildpunkt des Ausgangsbildes ein solcher Datensatz.

| | Beschreibung |
|---|---|
| x-Koordinate | Wird entsprechend der Länge der Houghcore-Struktur verzögert. Eine genaue Korrektur der x-Koordinate kann erfolgen |

(fortgesetzt)

|  | Beschreibung |
|---|---|
| y-Koordinate | Wird entsprechend der Höhe der Houghcore-Struktur mit $$y_{neu} = y_{alt} + \left( \frac{Anzahl\, der\, Zeiten}{2} \right)$$ korrigiert. Bei einer geraden Anzahl von Zeilen kann nicht genau eine mittlere Zeile bestimmt werden. Bei einer ungeraden Anzahl von Zeilen muss aufgerundet werden, um die mittlere Zeile zu erhalten. |
| Spalten summe | Auftrittswahrscheinlichkeit für die gesuchte Struktur (Maximalwert = Größe der Spalte, hohe Werte stehen für eine hohe Auftrittswahrscheinlichkeit) |
| Spaltennummer | Zum Summenwert zugehörige Spaltennummer (repräsentiert die Krümmung des Halbkreises bzw. die Steigung der Geraden) |
| Houghcore- Typ | 0 wenn Typ 1 Houghcore-Konfiguration und 1 wenn Typ 2 Houghcore-Konfiguration |
| Bildrotation | 0 wenn Ausgangsbild nicht rotiert und 1 wenn Ausgangsbild rotiert |
| Houghcore- Größe | Größe des Houghcores, der für die Transformation genutzt wurde |
| Kurventyp | 0 wenn Geradenkonfiguration und 1 wenn Halbkreiskonfiguration |

Übersicht des Ergebnisdatensatzes der für jeden Bildpunkt des Ausgangsbildes bei der parallelen Hough-Transformation mit überarbeiteter Houghcore-Struktur entsteht.

Im Gegensatz zum binären und schwellwertbasierten Ausgang des Houghcores von Katzmann und Holland-Nell erzeugt die neue Houghcore-Struktur deutlich mehr Ausgangsdaten. Da solch eine Datenmenge nur schwer zu handhaben ist, wird ein Verfahren zur Merkmalsextraktion vorgestellt, das die Ergebnisdatenmenge deutlich verringert.

Typ 2 Houghcore und Bildrotation

Bei den Ausführungen zur parallelen Hough-Transformation wurde bereits die Notwendigkeit der Bildrotation und die Eigenheiten des Typ 2 Houghcores angeschnitten. Bei der parallelen Hough-Transformation muss das Ausgangsbild den Houghcore viermal durchlaufen. Das ist notwendig, damit Geraden und Halbkreise in unterschiedlichen Winkellagen detektiert werden können. Arbeitet man nur mit einem Typ 1 Houghcore, müsste man das Bild in Ausgangslage und rotiert um 90°, 180° und 270° verarbeiten. Durch Hinzunahme des Typ 2 Houghcores entfallen die Rotation um 180° und 270°. Wird das nicht rotierte Ausgangsbild mit einem Typ 2 Houghcore verarbeitet entspricht das einer Verarbeitung des um 180° rotierten Ausgangsbildes mit einem Typ 1 Houghcore. Ähnlich verhält es sich mit der Rotation um 270°. Diese kann durch Verarbeitung des um 90° rotierten Bildes mit einem Typ 2 Houghcore ersetzt werden. Für eine FPGA-Umsetzung wirkt sich der Wegfall zusätzlicher Rotationen positiv aus, da Bildrotationen im Normalfall nur mit Hilfe eines externen Speichers gelöst werden können. Je nach eingesetzter Hardware steht nur eine gewisse Bandbreite (maximal mögliche Datenrate) zwischen FPGA und Speicherbaustein zur Verfügung. Bei Verwendung eines Typ 2 Houghcores wird die Bandbreite des externen Speicherbausteins nur mit einer Rotation um 90° belegt. Bei der bisherigen Implementierung von Holland-Nell war es erforderlich einen Houghcore vom Typ 1 und einen Houghcore vom Typ 2 im FPGA abzulegen. Mit dem überarbeiteten Houghcore-Design ist es nun auch möglich die Houghcore-Struktur einmal im FPGA abzulegen und Konfigurationen vom Typ 1 oder Typ 2 zu laden. Durch diese neue Funktionalität kann mit nur einem Houghcore und bei nur einer Bildrotation das Ausgangsbild vollständig transformiert werden.

Es bleibt zu berücksichtigen, dass bei der Verarbeitung mit nur einem Houghcore auch die vierfache Datenrate im Houghcore anfällt. Bei einem Videodatenstrom mit 60fps und VGA-Auflösung beträgt die Pixeldatenrate 24Mhz. In diesem Fall müsste der Houghcore mit 96Mhz betrieben werden, was für einen FPGA der Spartan 3 Generation bereits eine hohe Taktrate darstellt. Zur Optimierung des Designs sollte verstärkt mit Pipelinedelays innerhalb der Houghcore-Struktur gearbeitet werden.

Merkmal sextraktion

Die Merkmalsextraktion arbeitet auf den Datensätzen aus vorheriger Tabelle. Diese Datensätze können in einem Merkmalsvektor (B16) zusammengefasst werden. Der Merkmalsvektor kann im Folgenden auch als Hough-Feature bezeichnet werden.

$$MV=[MV_X, MV_Y, MV_0, MV_{KS}, MV_H, MV_{G-1}, MV_A]$$

(B16)

Ein Merkmalsvektor besteht jeweils aus x- und y-Koordinate für das gefundene Feature ($MV_x$ und $MV_y$), der Orientierung $MV_0$, der Krümmungsstärke $MV_{KS}$, der Häufigkeit $MV_H$, der Houghcore-Größe $MV_{G-1}$ und die Art der gefundenen Struktur $MV_A$. Die detaillierte Bedeutung und der Wertebereich der einzelnen Elemente des Merkmalsvektors kann nachfolgender Tabelle entnommen werden.

| $MVx$ und $MVy$ | Beide Koordinaten laufen jeweils bis zur Größe des Ausgangsbildes |
|---|---|
| $MV_0$ | Die Orientierung steht für die Ausrichtung des Houghcores. Diese setzt sich aus der Bildrotation und dem eingesetzten Houghcore-Typ zusammen und lässt sich in vier Bereiche unterteilen. Die Umrechnung der vier Bereiche in deren jeweilige Orientierung ist in nachfolgender Tabelle veranschaulicht. |
| $MV_{KS}$ | Die Krümmungstärke läuft max. bis zur Größe des Houghcores und entspricht der Houghcore-Spalte mit der größten Spaltensumme (bzw. Häufigkeit $MV_H$). Zur Veranschaulichung kann auf Fig. 9e in Verbindung mit obiger Tabelle verwiesen werden. Bei Geraden-Konfiguration der Houghcores steht die Houghcore-Spalte für die Steigung bzw. den Winkel der Geraden. Werden Halbkreis-Konfigurationen eingesetzt, steht die Houghcore-Spalte für den Radius des Halbkreises |
| $MV_H$ | Die Häufigkeit ist ein Maß für die Korrelation des Bildinhaltes mit der gesuchten Struktur. Sie entspricht der Spaltensumme (s. Fig. 9e und obige Tabelle) und kann maximal die Größe des Houghcores (genauer die Größe einer Houghcore-Spalte bei nichtquadratischen Houghcores) erreichen. |
| $MV_{G-1}$ | Größe des für die Transformation eingesetzten Houghcores minus eins. |
| $MV_A$ | Steht für die Art der gefundenen Struktur je nachdem welche Houghcore-Konfiguration eingesetzt wurde (Konfiguration für Geraden = 0 bzw. Konfiguration für Kreise = 1). |

Elemente des Hough-Merkmalsvektors, deren Bedeutung und Wertebereich.

| Geraden | | | Kreise | | |
|---|---|---|---|---|---|
| Orientierung $MV_0$ | Bereich | Winkelbereich | Orientierung $MV_0$ | Bereich | Winkel |
| 0 | Bereich 1r | 0°-45° | 0 | Bereich 2 | 0° |
| 1 | Bereich 2 | 45°-90° | 1 | Bereich 1r | 90° |
| 2 | Bereich 1 | 90°-135° | 2 | Bereich 1 | 180° |
| 3 | Bereich 2r | 135°-180° | 3 | Bereich 2r | 270° |

Berechnung der Orientierung in Abhängigkeit der Bildrotation und des zur Transformation genutzten Houghcore-Typs.

Aus obigen Tabellen wird ersichtlich, dass die beiden Elemente $MV_0$ und $MV_{KS}$ bei Geraden und Halbkreisen unterschiedliche Bedeutungen haben. Bei Geraden bildet die Kombination aus Orientierung und Krümmungsstärke den Lagewinkel des detektierten Geradenabschnittes im Winkel von 0° bis 180°. Dabei adressiert die Orientierung einen Winkelbereich und die Krümmungsstärke steht für einen konkreten Winkel innerhalb dieses Bereiches. Je größer der Houghcore (genauer je mehr Houghcore-Spalten vorhanden sind), desto feiner ist die Winkelauflösung. Bei Halbkreisen steht die Orientierung für den Lagewinkel bzw. die Ausrichtung des Halbkreises. Halbkreise können prinzipbedingt nur in vier Ausrichtungen detektiert werden. Die Krümmungsstärke steht bei Halbkreiskonfigurationen für den Radius.

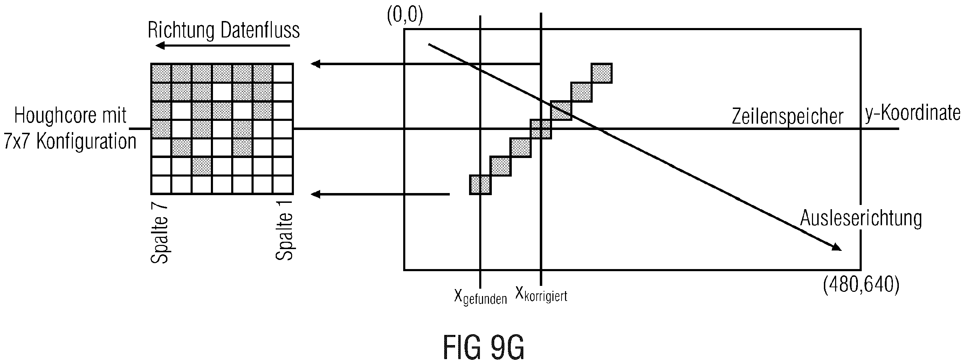

Neben der Orientierung $MV_0$ und der Krümmungsstärke $MV_{KS}$ ist bei den Koordinaten ($MVx$ und $MVy$) eine weitere Besonderheit zu beachten (s. Fig. 9g). Bei Geraden sollen die Koordinaten immer den Mittelpunkt und bei Halbkreisen bzw. Krümmungen immer den Scheitelpunkt repräsentieren. Mit dieser Vorgabe kann die y-Koordinate entsprechend der implementierten Houghcore-Struktur korrigiert werden und ist unabhängig von der Größe der zur Transformation genutzten Konfiguration (s. Fig. 9f). Ähnlich einem lokalen Filter wird die y-Koordinate vertikal zentriert angegeben. Für die x-Koordinate wird ein Zusammenhang über die Houghcore-Spalte hergestellt, die den Treffer geliefert hat (im Merkmalsvektor ist die Houghcore-Spalte unter der Bezeichnung $MV_{KS}$ abgelegt). In Abhängigkeit des Houghcore-Typs und der Bildrotation können Berechnungsvorschriften für drei verschiedene Fälle angegeben werden. Für einen Houghcore vom Typ 1 wird jeweils für das nichtrotierte und das rotierte Ausgangsbild auf Formel (B17) zurückgegriffen. Liegt ein Houghcore vom Typ 2 vor muss in Abhängigkeit der Bildrotation auf Formel (B18) bzw. Formel (B19) zurückgegriffen werden.

$$MV_{x_{korrigiert}} = MV_{x_{gefunden}} + floor\left(\frac{\left(MV_{KS+1}\right)}{2}\right)$$

(B17)

$$MV_{x_{korrigiert}} = Bildbreite_{nicht\_rotiert} - \left(MV_{x_{gefunden}} + floor\left(\frac{\left(MV_{KS+1}\right)}{2}\right)\right)$$

(B18)

$$MV_{x_{korrigiert}} = Bildbreite_{rotiert} - \left(MV_{x_{gefunden}} + floor\left(\frac{\left(MV_{KS+1}\right)}{2}\right)\right)$$

(B19)

Mit der Anweisung floor wird die gebrochen rationale Zahl abgerundet. Im FPGA entspricht das dem einfachen Abschneiden der binären Nachkommastellen. Nachdem die Orientierung bestimmt und die Koordinaten des Hough-Features korrigiert wurden, kann die eigentliche Merkmalsextraktion erfolgen.

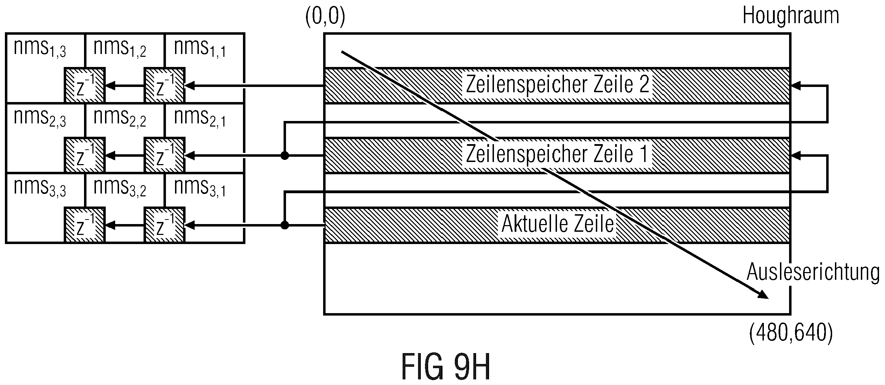

Zur Merkmalsextraktion werden drei Schwellwerte in Kombination mit einem non-maximumsuppression Operator genutzt. Der non-maximum-suppression Operator unterscheidet sich bei Geraden und Halbkreisen. Über die Schwellwerte wird eine minimale $MV_{KS_{min}}$ und maximale Krümmungsstärke $MV_{KS_{max}}$ vorgegeben und eine minimale Häufigkeit $MV_{H_{min}}$ festgelegt. Der non-maximum-suppression Operator kann als lokaler Operator der Größe 3x3 betrachtet werden (s. Fig. 9h). Ein gültiges Merkmal für Halbkreise (bzw. Krümmungen) entsteht immer genau dann, wenn die Bedingung des nms-Operators in (B23) erfüllt ist und die Schwellwerte gemäß Formeln (B20) bis (B22) überschritten werden.

$$MV_{nms_{2,2}}^{KS} \geq MV_{KS_{min}}$$

(B20)

$$MV_{nms_{2,2}}^{KS} \geq MV_{KS_{max}}$$

(B21)

$$MV_{nms_{2,2}}^{H} \geq MV_{H_{min}}$$

(B22)

$$MV_{nms_{1,1}}^{H} \wedge MV_{nms_{1,2}}^{H} \wedge MV_{nms_3}^{H} MV_{nms_{2,1}}^{H} MV_{nms_{2,3}}^{H} MV_{nms_{3,1}}^{H} MV_{nms_{3,2}}^{H} MV_{nms_{3,3}}^{H} MV_{nms_{2,2}}^{H}$$

(B23)

Durch die non-maximum-suppression werden Hough-Features unterdrückt, die keine lokalen Maxima im Häufigkeitsraum der Merkmalsvektoren darstellen. Auf diese Weise werden Hough- Features unterdrückt, die keinen Beitrag zur gesuchten Struktur liefern und für die Nachverarbeitung irrelevant sind. Die Merkmalsextraktion wird nur noch über drei Schwellen parametrisiert, die im Vorfeld sinnvoll eingestellt werden können. Eine detaillierte Erläuterung der Schwellwerte ist nachfolgender Tabelle zu entnehmen.

| Schwellwert | Beschreibung | Vergleichbarer Parameter des Verfahrens nach Katzmann | |
|---|---|---|---|
| $MV_{H_{min}}$ | Schwellwert für eine minimale Häufigkeit, also einen Spaltensummenwert, der nicht unterschritten werden darf. | | Hough-Thres |
| $MV_{KS_{min}}$ | | Schwellwert für eine minimale Krümmung des Hough-Features. Bei Houghcores mit Geradenkonfiguration bezieht sich die Schwelle auf den vom Houghcore detektierten Winkelbereich. | Bottom-Line |
| $MV_{KS_{max}}$ | | Verhält sich wie $MV_{KS_{min}}$ nur für eine maximale Krümmung. | Top-Line |

Detaillierte Beschreibung der drei Schwellwerte zur Extraktion von Hough-Features aus dem Houghraum. Im Vergleich zum Verfahren nach Katzmann sind Parameter mit ähnlicher Funktion angegeben.

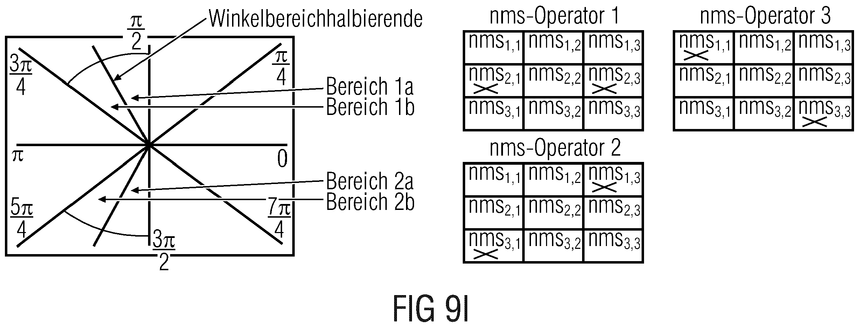

Für Geraden kann ebenfalls ein non-maximum-suppression Operator der Größe 3x3 (s. Fig. 9h) hergeleitet werden. Dabei sind einige Besonderheiten zu beachten. Anders als bei den Krümmungen werden die gesuchten Strukturen bei den Geradenabschnitten nicht auf ein entstehen fortlaufend mehrere Maxima entlang des binären Kantenverlaufes. Die non-maximumsuppression kann somit an das Verfahren im Canny-Kantendetektionsalgorithmus angelehnt werden. Je nach Houghcore-Typ und detektiertem Winkelbereich können drei Fälle unterschieden werden (s. Fig. 9i in Kombination mit obiger Tabelle). Die Fallunterscheidung gilt sowohl für rotierte als auch nicht rotierte Ausgangsbilder, da die Rücktransformation rotierter Koordinaten erst nach der non-maximum-suppression erfolgt. Welcher nms-Operator zu verwenden ist hängt neben dem Houghcore-Typ auch vom Winkelbereich ab. Der Winkelbereich, den ein Houghcore mit Konfigurationen für Geraden liefert wird durch die Winkelbereichshalbierende geteilt. Die Winkelbereichshalbierende kann als Houghcore-Spalte (dezimal gebrochen) angegeben werden ($MV_{KS_{halbe}}$). Den mathematischen Zusammenhang in Abhängigkeit der Houghcore-Größe beschreibt Formel (B24). In welchem Winkelbereich das Hough-Feature liegt richtet sich nach der Houghcore-Spalte, die den Treffer geliefert hat ($MV_{KS}$), welche direkt mit der Winkelbereichshalbierenden Houghcore-Spalte verglichen werden kann.

$$MV_{KS_{halbe}} = \tan\left(\frac{45}{2}\right) \cdot \frac{\pi}{180} \cdot Houghcore_{Größe}$$

(B24)

Hat man sich für einen Operator entschieden kann ähnlich der non-maximum-suppression für Krümmungen die Bedingung über den jeweiligen nms-Oprator abgefragt werden (Formeln (B25) bis (B27)). Sind alle Bedingungen erfüllt und werden zusätzlich die Schwellwerte gemäß den Formeln (B20) bis (B22) überschritten, kann das Hough-Feature an Position $nms_{2,2}$ übernommen werden.

| | Houghcore- Typ | Winkelbereich | nms-Operator | Bedingung |
|---|---|---|---|---|
| Bereich 1a | 1 | A | 1 | $MV_{KS} \leq MV_{KS_{halbe}}$ |
| Bereich 1b | 1 | B | 2 | $MV_{KS} > MV_{KS_{halbe}}$ |
| Bereich 2a | 2 | A | 1 | $MV_{KS} \leq MV_{KS_{halbe}}$ |
| Bereich 2b | 2 | B | 3 | $MV_{KS} > MV_{KS_{halbe}}$ |

Entscheidung für einen nms-Operator in Abhängigkeit des Houghcore-Typs und des Winkelbereichs, in dem der Treffer aufgetreten ist.

$$\left(MV^{H}_{nms_{2,2}} > MV^{H}_{nms_{2,2}}\right) \wedge \left(MV^{H}_{nms_{2,3}} > MV^{H}_{nms_{2,2}}\right)$$

$$(B25)$$

$$\left(MV^{H}_{nms_{1,3}} > MV^{H}_{nms_{2,2}}\right) \wedge \left(MV^{H}_{nms_{3,1}} > MV^{H}_{nms_{2,2}}\right)$$

$$(B26)$$

$$\left(MV^{H}_{nms_{1,1}} > MV^{H}_{nms_{2,2}}\right) \wedge \left(MV^{H}_{nms_{3,3}} > MV^{H}_{nms_{2,2}}\right)$$

$$(B27)$$

Den Abschluss der Merkmalsextraktion bildet die Rückrotation der x- und y-Koordinaten rotierter Hough-Features. Für die Nachverarbeitung sollten diese wieder im Bildkoordinatensystem vorliegen. Die Rücktransformation ist unabhängig vom Kurventyp (egal ob Geraden oder Krümmungen) immer dann auszuführen, wenn das rotierte Ausgangsbild verarbeitet wird. In den Formeln (B28) und (B29) ist der mathematische Zusammenhang beschrieben. Mit Bildbreite ist die Breite des nicht rotierten Ausgangsbildes gemeint.

$$MV_{y} = MV_{x_{rot}}$$

$$(B28)$$

$$MV_{x} = Bildbreite - MV_{y_{rot}}$$

$$(B29)$$

Mit Hilfe der Merkmalsextraktion ist es möglich die Ergebnisdaten der parallelen Hough-Transformation bis auf wenige Punkte zu reduzieren. Diese können dann als Merkmalsvektor an die Nachverarbeitung übergeben werden.

Im Folgenden werden zusätzliche Ausführungsbeispiele und Aspekte der Erfindung beschrieben, die einzeln oder in Kombination mit beliebigen der hierin beschriebenen Merkmale, Funktionalitäten und Einzelheiten verwendet werden können.

Gemäß einem ersten Aspekt umfasst ein 3D-Bildanalysator 400 zur Bestimmung einer Blickrichtung, wobei der 3D-Bildanalysator 400, ausgebildet ist, um zumindest einen ersten Satz von Bilddaten, der auf Basis eines ersten Bildes 804a bestimmt wird, und einen weiteren Satz von Informationen, der auf Basis des ersten Bildes 804a oder eines weiteren Bildes 804b bestimmt wird, zu empfangen, wobei das erste Bild 804a ein Muster umfasst, das sich durch die Abbildung eines dreidimensionalen Objekts aus einer ersten Perspektive in eine erste Bildebene ergibt, und wobei der weitere Satz ein Bild mit einem Muster umfasst, das sich durch die Abbildung des selben dreidimensionalen Objekts aus einer weiteren Perspektive in eine weitere Bildebene ergibt, oder wobei der weitere Satz Informationen enthält, welche eine Beziehung zwischen mindestens einem Punkt des dreidimensionalen Objekts und der ersten Bildebene beschreiben, folgende Merkmale: eine Positionsberechnungseinrichtung 404, die ausgebildet ist, um eine Position des Musters in einem dreidimensionalen Raum basierend auf dem ersten Satz, einem weiteren Satz, der auf Basis des weiteren Bildes 804b bestimmt wird, und einer geometrischen Beziehung zwischen den Perspektiven des ersten 804a und des weiteren Bildes 804b zu berechnen oder um die Position des Musters 806a in dem dreidimensionalen Raum basierend auf dem ersten Satz und einer statistisch ermittelten Beziehung zwischen mindestens zwei charakteristischen Merkmalen zueinander in dem ersten Bild zu berechnen oder um die Position des Musters 806a in dem dreidimensionalen Raum basierend auf dem ersten Satz und einer Lagebeziehung zwischen mindestens einem Punkt des dreidimensionalen Objektes und der ersten Bildebene zu berechnen; und eine Ausrichtungsberechnungseinrichtung 408, die ausgebildet ist, um pro Bild zumindest zwei mögliche 3D-Blickvektoren zu berechnen und aus den zwei möglichen 3D-Blickvektoren den 3D-Blickvektor zu ermitteln, gemäß dem das Muster 806a in dem dreidimensionalen Raum ausgerichtet ist, wobei die Berechnung und Ermittlung auf dem ersten Satz, dem weiteren Satz und auf der berechneten Position des Musters 806a basiert.

Gemäß einem zweiten Aspekt unter Bezugnahme auf den ersten Aspekt umfasst der weitere Satz ein weiteres Bild 804b, und die Ausrichtungsberechnungseinrichtung 408 ist ausgebildet, um zwei weitere mögliche 3D-Blickvektoren zu berechnen und die zwei weiteren möglichen 3D-Blickvektoren mit den zwei möglichen 3D-Blickvektoren zu vergleichen und auf Basis des Vergleichs den 3D-Blickvektor zu ermitteln, gemäß dem das Muster 806a in dem dreidimensionalen Raum ausgerichtet ist.

Gemäß einem dritten Aspekt unter Bezugnahme auf zumindest einen des ersten bis zweiten Aspekts enthält der weitere Satz von Bildinformationen Information, wie viele Pixel von der in dem ersten 804a und/oder weiteren Bild 804b abgebildeten Sklera von den Projektionen überstrichen werden, welche sich aus dem Pupillenmittelpunkt in dem ersten und/oder weiteren Bild und der Abbildung der beiden möglichen 3D-Blickvektoren in das Bild ergeben.

Gemäß einem vierten Aspekt unter Bezugnahme auf zumindest einen des zweiten bis dritten Aspekts ist die Ausrichtungsberechnungseinrichtung 408 ausgebildet, aus den zwei möglichen 3D-Blickvektoren den 3D-Blickvektor auszuwählen, gemäß dem das Muster 806a in dem dreidimensionalen Raum ausgerichtet ist, wobei dieser 3D-Blickvektor sich dadurch auszeichnet, dass dessen Rückprojektion in das Bild ausgehend vom Pupillenmittelpunkt weniger Pixel der Sklera überstreicht als die Rückprojektion des anderen 3D-Blickvektors.

Gemäß einem fünften Aspekt unter Bezugnahme auf zumindest einen des ersten bis vierten Aspekts ist die Ausrichtungsberechnungseinrichtung 408 ausgebildet, um je einen Abstand zwischen dem erkannten Pupillenmittelpunkt und einem erkannten Rand des Auges entlang den zwei möglichen ins Bild projizierten 3D-Blickvektoren zu ermitteln und den 3D-Blickvektor, gemäß dem das Muster in dem dreidimensionalen Raum ausgerichtet ist, aus den zwei möglichen 3D-Blickvektoren auszuwählen, wobei der 3D-Blickvektor ausgewählt wird, dessen Projektion ins Bild dort den kleineren Abstand zwischen dem Pupillenmittelpunkt und dem Rand der Augenöffnung überstreicht.

Gemäß einem sechsten Aspekt unter Bezugnahme auf zumindest einen des ersten bis fünften Aspekts umfasst der weitere Satz von Bildinformationen eine Information über eine Beziehung zwischen einer im ersten Bild 804a erkannten Pupillenlage innerhalb des Auges zu einer Referenzpupillenlage und den zwei mögliche 3D-Blickvektoren.

Gemäß einem siebten Aspekt unter Bezugnahme auf den sechsten Aspekt ist die Ausrichtungsberechnungseinrichtung 408 ausgebildet, um eine Referenzlage des Auges, die dem Schwerpunkt der Fläche der abgebildeten Augenöffnung bei Parallellage der Gesichtsebene zur Kamerasensorebene oder dem berechneten Pupillenmittelpunkt bei direktem Blick zur Kamerasensormitte entspricht, zu ermitteln und den 3D-Blickvektor, gemäß dem das Muster 806a in dem dreidimensionalen Raum ausgerichtet ist, aus den zwei möglichen 3D-Blickvektoren auszuwählen, wobei der 3D-Blickvektor ausgewählt wird, dessen Abbildung ins Bild ausgehend vom Pupillenmittelpunkt den größeren Abstand zu der Referenzlage aufweist.

Gemäß einem achten Aspekt unter Bezugnahme auf zumindest einen des ersten bis siebten Aspekts umfasst die statistisch ermittelte Beziehung einen Abstand zwischen zwei charakteristischen Gesichtsmerkmalen, ein Größenverhältnis zwischen den zwei charakteristischen Gesichtsmerkmalen und/oder ein Größenverhältnis zwischen einem charakteristischen Gesichtsmerkmal und einem Bildrand.

Gemäß einem neunten Aspekt unter Bezugnahme auf zumindest einen des ersten bis achten Aspekts ist die Positionsberechnungseinrichtung 404 ausgebildet, um die zwei oder mehrere charakteristischen Merkmale zu detektieren und deren Lagebeziehungen mit statistisch vorab ermittelten und gespeicherten Daten zu vergleichen und daraus den Abstand und/oder die Ausrichtung des Musters zur Kamera zu ermitteln.

Gemäß einem zehnten Aspekt unter Bezugnahme auf zumindest einen des ersten bis neunten Aspekts ist der 3D-Bildanalysator 400 ausgebildet, um eine Mehrzahl von ersten und weiteren Sätzen einer Mehrzahl von Samples zu empfangen.

Gemäß einem elften Aspekt unter Bezugnahme auf den zehnten Aspekt ist die Positionsberechnungseinrichtung 404 ausgebildet, um die Position des Musters 806a für die Mehrzahl der Samples zu berechnen, und ist die Ausrichtungsberechnungseinrichtung 408 ausgebildet, um den 3D-Blickvektor des Musters 806a für die Mehrzahl von Samples zu ermitteln, um so den 3D-Blickvektor zu verfolgen.

Gemäß einem zwölften Aspekt unter Bezugnahme auf zumindest einen des ersten bis elften Aspekts ist das Muster 806a eine Pupille, eine Iris oder eine Ellipse.

Gemäß einem dreizehnten Aspekt unter Bezugnahme auf zumindest einen des ersten bis zwölften Aspekts stammen der erste und der weitere Satz aus einer Gruppe, die Koordinaten eines Musters 806a, Koordinaten eines Mittelpunkts des Musters 806a, Geometrieparameter des Musters 806a, Koordinaten des Mittelpunkts einer Ellipse, einen ersten Durchmesser der Ellipse - die lange Achse -, einen zweiten Durchmesser der Ellipse - die kurze Achse - und einen Neigungswinkel einer Achse der Ellipse umfasst.

Gemäß einem vierzehnten Aspekt unter Bezugnahme auf zumindest einen des ersten bis dreizehnten Aspekts ist der 3D-Blickvektor als Vektor definiert, der sich durch einen Mittelpunkt des Musters 806a entlang einer Normalenrichtung ausgehend von einer Oberfläche eines zu dem Muster 806a gehörenden Objekts erstreckt.

Gemäß einem fünfzehnten Aspekt unter Bezugnahme auf zumindest einen des ersten bis vierzehnten Aspekts basiert die Berechnung der Position und des 3D-Blickvektors auf weiteren Informationen, die aus einer Gruppe stammen, die Informationen über optische Parameter der Kameraoptik, eine Position- und Ausrichtung der Kameraoptik, eine Sensorpixelgröße und eine Information über die Auslassung oder Zusammenfassung mehrerer Sensorpixel umfasst.

Gemäß einem sechzehnten Aspekt unter Bezugnahme auf den fünfzehnten Aspekt ist die Ausrichtungsberechnungseinrichtung 408 ausgebildet, um eine erste virtuelle Projektionsebene für das erste Bild 804a zu berechnen, so dass eine erste virtuelle optische Achse, die als Senkrechte zu der ersten virtuellen Projektionsebene definiert ist, sich durch den Mittelpunkt des Musters 806a erstreckt, und um die erste virtuelle Projektionsebene basierend auf dem weiteren Satz von Bildinformationen auszurichten.

Gemäß einem siebzehnten Aspekt unter Bezugnahme auf zumindest einen des fünfzehnten bis sechzehnten Aspekts ist die Ausrichtungsberechnungseinrichtung 408 ausgebildet, um eine erste virtuelle Projektionsebene für das erste Bild 804a zu berechnen, so dass eine erste virtuelle optische Achse, die als Senkrechte zu der ersten virtuellen Projektionsebene definiert ist, sich durch den Mittelpunkt des Musters 806a erstreckt, und um eine zweite virtuelle Projektionsebene für das weitere Bild 804b zu berechnen, so dass eine zweite virtuelle optische Achse, die als Senkrechte zu der zweiten virtuellen Projektionsebene definiert ist, sich durch den Mittelpunkt des Musters erstreckt, wobei sich die erste virtuelle optische Achse durch den Mittelpunkt des aufgenommenen Musters 806a in der ersten virtuellen Projektionsebene erstreckt und sich die zweite virtuelle optische Achse durch den Mittelpunkt des aufgenommenen Musters 806a in der zweiten virtuellen Projektionsebene erstreckt.

Gemäß einem achtzehnten Aspekt unter Bezugnahme auf den siebzehnten Aspekt erfolgt die Transformation des ersten 804a und/oder zweiten Bildes 804b in die erste und/oder zweite virtuelle Projektionsebene auf Basis der bestimmten Position des Musters 806a und/oder auf Basis von weiteren Informationen, die aus einer Gruppe stammen, die Informationen über optische Parameter der Kameralinse, eine Linsenposition, eine Sensorpixelgröße und eine Information über die Auslassung oder Zusammenfassung mehrerer Sensorpixel umfasst.

Gemäß einem neunzehnten Aspekt unter Bezugnahme auf zumindest einen des siebzehnten bis achtzehnten Aspekts ist die Ausrichtungsberechnungseinrichtung 408 ausgebildet, um das Muster 806a, das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden.

Gemäß einem zwanzigsten Aspekt unter Bezugnahme auf den neunzehnten Aspekt ist das Muster eine verzerrte Pupille oder Iris oder eine Ellipse, die durch den ersten und zweiten Satz von Bilddaten, die zumindest eine erste und zweite Achse sowie einen Neigungswinkel einer der Achsen der verzerrten Pupille oder Iris oder der Ellipse umfassen, beschreibbar ist.

Gemäß einem einundzwanzigsten Aspekt unter Bezugnahme auf den zwanzigsten Aspekt ist der 3D-Blickvektor durch einen Satz von Gleichungen beschreibbar, wobei jede Gleichung eine geometrische Beziehung der jeweiligen ersten oder jeweiligen weiteren virtuellen Projektionsebene gegenüber dem 3D-Blickvektor beschreibt.

Gemäß einem zweiundzwanzigsten Aspekt unter Bezugnahme auf den einundzwanzigsten Aspekt sind für den 3D-Blickvektor bezogen auf die erste virtuelle Projektionsebene durch eine erste Gleichung auf Basis der Bilddaten des ersten Satzes zwei mögliche Lösungen berechenbar, und sind für den 3D-Blickvektor bezogen auf eine weitere virtuelle Projektionsebene durch eine weitere Gleichung auf Basis der Bilddaten des weiteren Satzes zwei möglichen Lösungen berechenbar.

Gemäß einem dreiundzwanzigsten Aspekt unter Bezugnahme auf den zweiundzwanzigsten Aspekt ist die Differenz zwischen dem einen Lösungsvektor der ersten Gleichung und dem einen Lösungsvektor der zweiten Gleichung kleiner als eine Differenz zwischen anderen Kombinationen aus den Lösungsvektoren der beiden Gleichungen und die beschriebenen Vektoren werden ausgewählt, wobei der 3D-Blickvektor durch gewichtete Mittelung der beiden ausgewählten Vektoren berechnet wird.

Gemäß einem vierundzwanzigsten Aspekt unter Bezugnahme auf den dreizwanzigsten Aspekt ist die Ausrichtungsberechnungseinrichtung 408 ausgebildet, um ein eindeutiges Ergebnis für den 3D-Blickvektor mittels eines Gleichungssystems, das die erste und zweite Gleichung umfasst, zu berechnen.

Gemäß einem fünfundzwanzigsten Aspekt unter Bezugnahme auf zumindest einen des ersten bis vierundzwanzigsten Aspekts ist der 3D-Bildanalysator 400 in einer Verarbeitungseinheit implementiert.

Gemäß einem sechsundzwanzigsten Aspekt unter Bezugnahme auf den fünfundzwanzigsten Aspekt weist die Verarbeitungseinheit einen Selektiv-adaptiven Datenprozessor auf, der ausgebildet ist, um mehrere Sätze von Werten zu empfangen, wobei jeder Satz einem jeweiligen Sample zugewiesen ist, mit folgenden Merkmalen: einen Prozessor, der ausgebildet ist, um basierend auf den empfangenen Sätzen plausible Sätze auszugeben, und wobei ein unplausibler Satz durch einen plausiblen Satz ersetzt wird oder wobei Werte eines unplausiblen Satzes durch intern ermittelte Werte ersetzt werden.

Gemäß einem siebenundzwanzigsten Aspekt umfasst ein Bildanalysesystem zum Ermitteln einer Blickrichtung basierend auf einer zuvor detektierten oder verfolgten Pupille oder Iris folgende Merkmale: mindestens einen Hough-Pfad für zumindest eine Kamera einer monoskopischen Kameraanordnung oder mindestens zwei Hough-Pfade für zumindest für zwei Kameras einer stereoskopischen oder multiskopischen Kameraanordnung, wobei jeder Hough-Pfad einen Hough-Prozessor mit folgenden Merkmalen umfasst: einen Pre-Prozessor 102, der ausgebildet ist, um eine Mehrzahl von Samples 112a, 112b, 112c zu empfangen, die jeweils ein Bild umfassen, und um das Bild des jeweiligen Samples 112a, 112b, 112c zu drehen und/oder zu spiegeln und um eine Mehrzahl von Versionen 112a', 112a", 112a''', 112a'''' des Bildes des jeweiligen Samples 112a, 112b, 112c für jedes Sample 112a, 112b, 112c auszugeben; und eine Hough-Transformationseinrichtung 104, die ausgebildet ist, um ein vorbestimmtes gesuchtes Muster 806a in der Mehrzahl von Samples 112a, 112b, 112c auf der Basis der Mehrzahl von Versionen 112a', 112a", 112a''', 112a'''' zu erfassen, wobei eine mit dem gesuchten Muster 806a in Abhängigkeit stehende Charakteristik der Hough-Transformationseinrichtung 104 anpassbar ist; eine Einrichtung zum Analysieren des erfassten Musters 806a und zum Ausgeben eines Satzes von Bilddaten, der eine Position und/oder eine Geometrie des Musters 806a beschreibt; und einen 3D-Bildanalysator 400 gemäß einem der Aspekte 1 bis 27 umfasst.

Gemäß einem achtundzwanzigsten Aspekt umfasst ein Verfahren zur Bestimmung einer Blickrichtung folgende Schritte: Empfangen zumindest eines ersten Satzes von Bilddaten, der auf Basis eines ersten Bildes 804a bestimmt wird, und eines weiteren Satzes von Bilddaten, der auf Basis des ersten Bildes 804a oder eines weiteren Bildes 804b bestimmt wird, wobei das erste Bild 804a ein Muster 806a eines dreidimensionalen Objekts aus einer ersten Perspektive in eine erste Bildebene abbildet und wobei der weitere Satz ein weiteres Bild 804b oder eine Information umfasst, welche eine Beziehung zwischen mindestens einem Punkt des dreidimensionalen Objekts und der ersten Bildebene beschreiben; Berechnen einer Position des Musters 806a in einem dreidimensionalen Raum basierend auf dem ersten Satz, dem weiteren Satz, und einer geometrischen Beziehung zwischen den Perspektiven des ersten und des weiteren Bildes 804b oder Berechnen der Position des Musters 806a in dem dreidimensionalen Raum basierend auf dem ersten Satz und einer statistisch ermittelten Beziehung zwischen mindestens zwei charakteristischen Merkmalen in dem ersten Bild 804a oder Berechnen der Position des Musters 806a in dem dreidimensionalen Raum basierend auf dem ersten Satz und einer Lagebeziehung zwischen mindestens einem Punkt des dreidimensionalen Objektes und der ersten Bildebene; und Berechnen eines 3D-Blickvektors, gemäß dem das Muster 806a in dem dreidimensionalen Raum ausgerichtet ist, basierend auf dem ersten Satz und dem weiteren Satz.

Ein neunundzwanzigster Aspekt bezieht sich auf ein computerlesbares digitales Speichermedium auf dem ein Computerprogramm gespeichert ist mit einem Programmcode zum Durchführen des Verfahrens gemäß Aspekt 28, wenn dasselbe auf einem Computer, einem eingebetteten Prozessor, einem programmierbaren Logikbauelement oder kundenspezifischen Chip läuft.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1.  3D-Bildanalysator (400) zur Bestimmung einer Blickrichtung, wobei der 3D-Bildanalysator (400), ausgebildet ist, um zumindest einen ersten Bilddatensatz, der auf Basis eines ersten Bildes (804a) bestimmt wird, und einen weiteren Satz von Informationen, der auf Basis des ersten Bildes (804a) oder eines weiteren Bildes (804b) bestimmt wird, zu empfangen, wobei das erste Bild (804a) ein Muster, das eine Pupille, eine Iris oder eine Ellipse ist, umfasst, das sich durch die Abbildung eines dreidimensionalen Objekts aus einer ersten Perspektive in eine erste Bildebene ergibt, und wobei der weitere Satz Informationen enthält, welche eine Beziehung zwischen mindestens einem Punkt des dreidimensionalen Objekts und der ersten Bildebene beschreiben, wobei der 3D-Bildanalysator (400) folgende Merkmale umfasst:

    eine Positionsberechnungseinrichtung (404), die ausgebildet ist, um die Position des Musters (806a) in dem dreidimensionalen Raum basierend auf dem ersten Satz und einer Lagebeziehung zwischen mindestens einem Punkt des dreidimensionalen Objektes und der ersten Bildebene zu berechnen; und
    eine Ausrichtungsberechnungseinrichtung (408), die ausgebildet ist, um pro Bild zumindest zwei mögliche 3D-Blickvektoren zu berechnen, wobei jeder 3D-Blickvektor als Vektor definiert ist, der sich durch einen Mittelpunkt des Musters (806a) entlang einer Normaleinrichtung ausgehend von einer Oberfläche eines zu dem Muster (806a) gehörenden Objekts erstreckt, und aus den zwei möglichen 3D-Blickvektoren den 3D-Blickvektor zu ermitteln, gemäß dem das Muster (806a) in dem dreidimensionalen Raum ausgerichtet ist, wobei die Berechnung und Ermittlung auf dem ersten Satz, dem weiteren Satz und auf der berechneten Position des Musters (806a) basiert,
    **dadurch gekennzeichnet,**

**dass** die Ausrichtungsberechnungseinrichtung (408) ausgebildet ist, aus den zwei möglichen 3D-Blickvektoren den 3D-Blickvektor auszuwählen, gemäß dem das Muster (806a) in dem dreidimensionalen Raum ausgerichtet ist, wobei dieser 3D-Blickvektor sich dadurch auszeichnet, dass dessen Rückprojektion in das Bild ausgehend vom Pupillenmittelpunkt weniger Pixel der Sklera überstreicht als die Rückprojektion des anderen 3D-Blickvektors; oder

**dass** der weitere Satz von Bildinformationen Information enthält, wie viele Pixel von der in dem ersten (804a) und/oder weiteren Bild (804b) abgebildeten Sklera von den Projektionen überstrichen werden, welche sich aus dem Pupillenmittelpunkt in dem ersten und/oder weiteren Bild und der Abbildung der beiden möglichen 3D-Blickvektoren in das Bild ergeben; oder

**dass** die Ausrichtungsberechnungseinrichtung (408) ausgebildet ist, um je einen Abstand zwischen dem erkannten Pupillenmittelpunkt und einem erkannten Rand des Auges entlang den zwei möglichen ins Bild projizierten 3D-Blickvektoren zu ermitteln und den 3D-Blickvektor, gemäß dem das Muster in dem dreidimensionalen Raum ausgerichtet ist, aus den zwei möglichen 3D-Blickvektoren auszuwählen, wobei der 3D-Blickvektor ausgewählt wird, dessen Projektion ins Bild dort den kleineren Abstand zwischen dem Pupillenmittelpunkt und dem Rand der Augenöffnung überstreicht; oder

**dass** der weitere Satz von Bildinformationen eine Information über eine Beziehung zwischen einer im ersten Bild (804a) erkannten Pupillenlage innerhalb des Auges zu einer Referenzpupillenlage und den zwei mögliche 3D-Blickvektoren umfasst.

2. 3D-Bildanalysator (400) zur Bestimmung einer Blickrichtung, wobei der 3D-Bildanalysator (400), ausgebildet ist, um zumindest einen ersten Bilddatensatz, der auf Basis eines ersten Bildes (804a) bestimmt wird, und einen weiteren Satz von Informationen, der auf Basis des ersten Bildes (804a) oder eines weiteren Bildes (804b) bestimmt wird, zu empfangen, wobei das erste Bild (804a) ein Muster, das eine Pupille, eine Iris oder eine Ellipse ist, umfasst, das sich durch die Abbildung eines dreidimensionalen Objekts aus einer ersten Perspektive in eine erste Bildebene ergibt, und wobei der weitere Satz Informationen enthält, welche eine Beziehung zwischen mindestens einem Punkt des dreidimensionalen Objekts und der ersten Bildebene beschreiben, wobei der 3D-Bildanalysator (400) folgende Merkmale umfasst:

eine Positionsberechnungseinrichtung (404), die ausgebildet ist, um die Position des Musters (806a) in dem dreidimensionalen Raum basierend auf dem ersten Satz und einer statistisch ermittelten Beziehung zwischen mindestens zwei charakteristischen Merkmalen zueinander in dem ersten Bild zu berechnen; und

eine Ausrichtungsberechnungseinrichtung (408), die ausgebildet ist, um pro Bild zumindest zwei mögliche 3D-Blickvektoren zu berechnen, wobei jeder 3D-Blickvektor als Vektor definiert ist, der sich durch einen Mittelpunkt des Musters (806a) entlang einer Normalenrichtung ausgehend von einer Oberfläche eines zu dem Muster (806a) gehörenden Objekts erstreckt, und aus den zwei möglichen 3D-Blickvektoren den 3D-Blickvektor zu ermitteln, gemäß dem das Muster (806a) in dem dreidimensionalen Raum ausgerichtet ist, wobei die Berechnung und Ermittlung auf dem ersten Satz, dem weiteren Satz und auf der berechneten Position des Musters (806a) basiert,

**dadurch gekennzeichnet,**

**dass** die statistisch ermittelte Beziehung ein Abstand zwischen zwei charakteristischen Gesichtsmerkmalen, ein Größenverhältnis zwischen den zwei charakteristischen Gesichtsmerkmalen und/oder ein Größenverhältnis zwischen einem charakteristischen Gesichtsmerkmal und einem Bildrand umfasst; oder

**dass** die Positionsberechnungseinrichtung (404) ausgebildet ist, um die zwei oder mehrere charakteristischen Merkmale zu detektieren und deren Lagebeziehungen mit statistisch vorab ermittelten und gespeicherten Daten zu vergleichen und daraus den Abstand und/oder die Ausrichtung des Musters zur Kamera zu ermitteln.

3. 3D-Bildanalysator (400) gemäß Anspruch 1, wobei die Ausrichtungsberechnungseinrichtung (408) ausgebildet ist, um eine Referenzlage des Auges, die dem Schwerpunkt der Fläche der abgebildeten Augenöffnung bei Parallellage der Gesichtsebene zur Kamerasensorebene oder dem berechneten Pupillenmittelpunkt bei direktem Blick zur Kamerasensormitte entspricht, zu ermitteln und den 3D-Blickvektor, gemäß dem das Muster (806a) in dem dreidimensionalen Raum ausgerichtet ist, aus den zwei möglichen 3D-Blickvektoren auszuwählen, wobei der 3D-Blickvektor ausgewählt wird, dessen Abbildung ins Bild ausgehend vom Pupillenmittelpunkt den größeren Abstand zu der Referenzlage aufweist.

4. 3D-Bildanalysator (400) gemäß einem der Ansprüche 1 bis 3, der ausgebildet ist, um für ein Tracking eine Mehrzahl von ersten und weiteren Sätzen einer Mehrzahl von Samples zu empfangen.

5. 3D-Bildanalysator (400) gemäß Anspruch 4, bei dem die Positionsberechnungseinrichtung (404) ausgebildet ist, um die Position des Musters (806a)für die Mehrzahl der Samples zu berechnen, und
wobei die Ausrichtungsberechnungseinrichtung (408) ausgebildet ist, um den 3D-Blickvektor des Musters (806a) für die Mehrzahl von Samples zu ermitteln, um so den 3D-Blickvektor zu verfolgen.

6. 3D-Bildanalysator (400) gemäß einem der Ansprüche 1 bis 5, bei dem der erste und der weitere Satz aus einer Gruppe stammen, die Koordinaten eines Musters (806a), Koordinaten eines Mittelpunkts des Musters (806a), Geometrieparameter des Musters (806a), Koordinaten des Mittelpunkts einer Ellipse, einen ersten Durchmesser der Ellipse - die lange Achse -, einen zweiten Durchmesser der Ellipse - die kurze Achse - und einen Neigungswinkel einer Achse der Ellipse umfasst.

7. 3D-Bildanalysator (400) gemäß einem der Ansprüche 1 bis 6, bei dem die Berechnung der Position und des 3D-Blickvektors auf weiteren Informationen basiert, die aus einer Gruppe stammen, die Informationen über optische Parameter der Kameraoptik, eine Position- und Ausrichtung der Kameraoptik, eine Sensorpixelgröße und eine Information über die Auslassung oder Zusammenfassung mehrerer Sensorpixel umfasst; oder
bei dem die Berechnung der Position und des 3D-Blickvektors auf weiteren Informationen basiert, die aus einer Gruppe stammen, die Informationen über optische Parameter der Kameraoptik, eine Position- und Ausrichtung der Kameraoptik, eine Sensorpixelgröße und eine Information über die Auslassung oder Zusammenfassung mehrerer Sensorpixel umfasst und bei dem die Ausrichtungsberechnungseinrichtung (408) ausgebildet ist, um eine erste virtuelle Projektionsebene für das erste Bild (804a) zu berechnen, so dass eine erste virtuelle optische Achse, die als Senkrechte zu der ersten virtuellen Projektionsebene definiert ist, sich durch den Mittelpunkt des Musters (806a) erstreckt, und um die erste virtuelle Projektionsebene basierend auf dem weiteren Satz von Bildinformationen auszurichten.

8. 3D-Bildanalysator (400) gemäß Anspruch 7, bei dem die Ausrichtungsberechnungseinrichtung (408) ausgebildet ist, um eine erste virtuelle Projektionsebene für das erste Bild (804a) zu berechnen, so dass eine erste virtuelle optische Achse, die als Senkrechte zu der ersten virtuellen Projektionsebene definiert ist, sich durch den Mittelpunkt des Musters (806a) erstreckt, und um eine zweite virtuelle Projektionsebene für das weitere Bild (804b) zu berechnen, so dass eine zweite virtuelle optische Achse, die als Senkrechte zu der zweiten virtuellen Projektionsebene definiert ist, sich durch den Mittelpunkt des Musters erstreckt, wobei sich die erste virtuelle optische Achse durch den Mittelpunkt des aufgenommenen Musters (806a) in der ersten virtuellen Projektionsebene erstreckt und sich die zweite virtuelle optische Achse durch den Mittelpunkt des aufgenommenen Musters (806a) in der zweiten virtuellen Projektionsebene erstreckt; oder
bei dem die Ausrichtungsberechnungseinrichtung (408) ausgebildet ist, um eine erste virtuelle Projektionsebene für das erste Bild (804a) zu berechnen, so dass eine erste virtuelle optische Achse, die als Senkrechte zu der ersten virtuellen Projektionsebene definiert ist, sich durch den Mittelpunkt des Musters (806a) erstreckt, und um eine zweite virtuelle Projektionsebene für das weitere Bild (804b) zu berechnen, so dass eine zweite virtuelle optische Achse, die als Senkrechte zu der zweiten virtuellen Projektionsebene definiert ist, sich durch den Mittelpunkt des Musters erstreckt, wobei sich die erste virtuelle optische Achse durch den Mittelpunkt des aufgenommenen Musters (806a) in der ersten virtuellen Projektionsebene erstreckt und sich die zweite virtuelle optische Achse durch den Mittelpunkt des aufgenommenen Musters (806a) in der zweiten virtuellen Projektionsebene erstreckt, wobei die Transformation des ersten (804a) und/oder zweiten Bildes (804b) in die erste und/oder zweite virtuelle Projektionsebene auf Basis der bestimmten Position des Musters (806a) und/oder auf Basis von weiteren Informationen erfolgt, die aus einer Gruppe stammen, die Informationen über optische Parameter der Kameralinse, eine Linsenposition, eine Sensorpixelgröße und eine Information über die Auslassung oder Zusammenfassung mehrerer Sensorpixel umfasst.

9. 3D-Bildanalysator (400) gemäß Anspruch 8, wobei die Ausrichtungsberechnungseinrichtung (408) ausgebildet ist, um das Muster (806a), das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden; oder

wobei die Ausrichtungsberechnungseinrichtung (408) ausgebildet ist, um das Muster (806a), das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden, wobei das Muster eine verzerrte Pupille oder Iris oder eine Ellipse ist, die durch den ersten und zweiten Bilddatensatz, die zumindest eine erste und zweite Achse sowie einen Neigungswinkel einer der Achsen der verzerrten Pupille oder Iris oder der Ellipse umfassen, beschreibbar ist; oder

wobei die Ausrichtungsberechnungseinrichtung (408) ausgebildet ist, um das Muster (806a), das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden, wobei das Muster eine verzerrte Pupille oder Iris oder eine Ellipse ist, die durch den ersten und zweiten Bilddatensatz, die zumindest eine erste und zweite Achse sowie einen Neigungswinkel einer der Achsen der verzerrten Pupille oder Iris oder der Ellipse umfassen, beschreibbar ist, wobei der 3D-Blickvektor durch einen Satz von Gleichungen beschreibbar ist, wobei jede Gleichung eine geometrische Beziehung der jeweiligen ersten oder jeweiligen weiteren virtuellen Projektionsebene gegenüber dem 3D-Blickvektor beschreibt; oder

wobei die Ausrichtungsberechnungseinrichtung (408) ausgebildet ist, um das Muster (806a), das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden, wobei das Muster eine verzerrte Pupille oder Iris oder eine Ellipse ist, die durch den ersten und zweiten Bilddatensatz, die zumindest eine erste und zweite Achse sowie einen Neigungswinkel einer der Achsen der verzerrten Pupille oder Iris oder der Ellipse umfassen, beschreibbar ist, wobei der 3D-Blickvektor durch einen Satz von Gleichungen beschreibbar ist, wobei jede Gleichung eine geometrische Beziehung der jeweiligen ersten oder jeweiligen weiteren virtuellen Projektionsebene gegenüber dem 3D-Blickvektor beschreibt, wobei für den 3D-Blickvektor bezogen auf die erste virtuelle Projektionsebene durch eine erste Gleichung auf Basis der Bilddaten des ersten Satzes zwei mögliche Lösungen berechenbar sind, und wobei für den 3D-Blickvektor bezogen auf eine weitere virtuelle Projektionsebene durch eine weitere Gleichung auf Basis der Bilddaten des weiteren Satzes zwei möglichen Lösungen berechenbar sind; oder

wobei die Ausrichtungsberechnungseinrichtung (408) ausgebildet ist, um das Muster (806a), das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden, wobei das Muster eine verzerrte Pupille oder Iris oder eine Ellipse ist, die durch den ersten und zweiten Bilddatensatz, die zumindest eine erste und zweite Achse sowie einen Neigungswinkel einer der Achsen der verzerrten Pupille oder Iris oder der Ellipse umfassen, beschreibbar ist, wobei der 3D-Blickvektor durch einen Satz von Gleichungen beschreibbar ist, wobei jede Gleichung eine geometrische Beziehung der jeweiligen ersten oder jeweiligen weiteren virtuellen Projektionsebene gegenüber dem 3D-Blickvektor beschreibt, wobei für den 3D-Blickvektor bezogen auf die erste virtuelle Projektionsebene durch eine erste Gleichung auf Basis der Bilddaten des ersten Satzes zwei mögliche Lösungen berechenbar sind, und wobei für den 3D-Blickvektor bezogen auf eine weitere virtuelle Projektionsebene durch eine weitere Gleichung auf Basis der Bilddaten des weiteren Satzes zwei möglichen Lösungen berechenbar sind; wobei die Differenz zwischen dem einen Lösungsvektor der ersten Gleichung und dem einen Lösungsvektor der zweiten Gleichung kleiner ist als eine Differenz zwischen anderen Kombinationen aus den Lösungsvektoren der beiden Gleichungen und die beschriebenen Vektoren ausgewählt werden, wobei der 3D-Blickvektor durch gewichtete Mittelung der beiden ausgewählten Vektoren berechnet wird; oder

wobei die Ausrichtungsberechnungseinrichtung (408) ausgebildet ist, um das Muster (806a), das durch eine erste Mehrzahl an Knotenpunktstrahlen durch die Optik auf eine erste Projektionsebene für die erste Perspektive und durch eine zweite Mehrzahl an Knotenpunktstrahlen durch die Optik auf eine zweite Projektionsebene für die zweite Perspektive abgebildet ist, in der ersten virtuellen Projektionsebene durch eine erste Mehrzahl an virtuellen Knotenpunktstrahlen abzubilden und in der zweiten virtuellen Projektionsebene durch eine zweite Mehrzahl an Knotenpunktstrahlen abzubilden, wobei das Muster eine verzerrte Pupille oder Iris oder eine Ellipse ist, die durch den ersten und zweiten Bilddatensatz, die zumindest eine erste und zweite Achse sowie einen Neigungswinkel einer der Achsen der verzerrten Pupille oder Iris oder der Ellipse umfassen, beschreibbar ist, wobei der 3D-Blickvektor durch einen Satz von Gleichungen beschreibbar ist, wobei jede Gleichung eine geometrische Beziehung der jeweiligen ersten oder jeweiligen weiteren virtuellen Projektionsebene gegenüber dem 3D-Blickvektor beschreibt, wobei für den 3D-Blickvektor bezogen auf die erste virtuelle Projektionsebene durch eine erste Gleichung auf Basis der Bilddaten des ersten Satzes zwei mögliche Lösungen berechenbar sind, und wobei für den 3D-Blickvektor bezogen auf eine weitere virtuelle Projektionsebene durch eine weitere Gleichung auf Basis der Bilddaten des weiteren Satzes zwei möglichen Lösungen berechenbar sind; wobei die Differenz zwischen dem einen Lösungsvektor der ersten Gleichung und dem einen Lösungsvektor der zweiten Gleichung kleiner ist als eine Differenz zwischen anderen Kombinationen aus den Lösungsvektoren der beiden Gleichungen und die beschriebenen Vektoren ausgewählt werden, wobei der 3D-Blickvektor durch gewichtete Mittelung der beiden ausgewählten Vektoren berechnet wird, bei dem die Ausrichtungsberechnungseinrichtung (408) ausgebildet ist, um ein eindeutiges Ergebnis für den 3D-Blickvektor mittels eines Gleichungssystems, das die erste und zweite Gleichung umfasst, zu berechnen.

10. 3D-Bildanalysator (400) gemäß einem der Ansprüche 1 bis 9, bei dem der 3D-Bildanalysator (400) in einer Verarbeitungseinheit implementiert ist; und/oder
bei dem die Verarbeitungseinheit einen Selektiv-adaptiven Datenprozessor aufweist, der ausgebildet ist, um mehrere Sätze von Werten zu empfangen, wobei jeder Satz einem jeweiligen Sample zugewiesen ist, mit folgenden Merkmalen:

einen Prozessor, der ausgebildet ist, um basierend auf den empfangenen Sätzen plausible Sätze auszugeben, und wobei ein unplausibler Satz durch einen plausiblen Satz ersetzt wird oder wobei Werte eines unplausiblen Satzes durch intern ermittelte Werte ersetzt werden.

11. Bildanalysesystem zum Ermitteln einer Blickrichtung basierend auf einer zuvor detektierten oder verfolgten Pupille oder Iris, mit folgenden Merkmalen:
mindestens einem Hough-Pfad für zumindest eine Kamera einer monoskopischen Kameraanordnung oder mindestens zwei Hough-Pfade für zumindest für zwei Kameras einer stereoskopischen oder multiskopischen Kameraanordnung, wobei jeder Hough-Pfad einen Hough-Prozessor mit folgenden Merkmalen umfasst:

einen Pre-Prozessor (102), der ausgebildet ist, um eine Mehrzahl von Samples (112a, 112b, 112c) zu empfangen, die jeweils ein Bild umfassen, und um das Bild des jeweiligen Samples (112a, 112b, 112c) zu drehen und/oder zu spiegeln und um eine Mehrzahl von Versionen (112a', 112a", 112a''', 112a'' ") des Bildes des jeweiligen Samples (112a, 112b, 112c) für jedes Sample (112a, 112b, 112c) auszugeben; und
eine Hough-Transformationseinrichtung (104), die ausgebildet ist, um ein vorbestimmtes gesuchtes Muster (806a) in der Mehrzahl von Samples (112a, 112b, 112c) auf der Basis der Mehrzahl von Versionen (112a', 112a", 112a''', 112a"") zu erfassen, wobei eine mit dem gesuchten Muster (806a) in Abhängigkeit stehende Charakteristik der Hough-Transformationseinrichtung (104) anpassbar ist.
eine Einrichtung zum Analysieren des erfassten Musters (806a) und zum Ausgeben eines Satzes von Bilddaten, der eine Position und/oder eine Geometrie des Musters (806a) beschreibt; und
einen 3D-Bildanalysator (400) gemäß einem der Ansprüche 1 bis 10 umfasst.

12. Verfahren zur Bestimmung einer Blickrichtung, mit folgenden Schritten:

Empfangen zumindest eines ersten Satzes von Bilddaten, der auf Basis eines ersten Bildes (804a) bestimmt wird, und eines weiteren Satzes von Bilddaten, der auf Basis des ersten Bildes (804a) oder eines weiteren Bildes (804b) bestimmt wird, wobei das erste Bild (804a) ein Muster (806a), das eine Pupille, eine Iris oder eine Ellipse ist, eines dreidimensionalen Objekts aus einer ersten Perspektive in eine erste Bildebene abbildet und wobei der weitere Satz eine Information umfasst, welche eine Beziehung zwischen mindestens einem Punkt des dreidimensionalen Objekts und der ersten Bildebene beschreiben;
Berechnen der Position des Musters (806a) in dem dreidimensionalen Raum basierend auf dem ersten Satz und einer Lagebeziehung zwischen mindestens einem Punkt des dreidimensionalen Objektes und der ersten Bildebene; und
Berechnen eines 3D-Blickvektors, wobei jeder 3D-Blickvektor als Vektor definiert ist, der sich durch einen Mittelpunkt des Musters (806a) entlang einer Normalenrichtung ausgehend von einer Oberfläche eines zu dem Muster (806a) gehörenden Objekts erstreckt, gemäß dem das Muster (806a) in dem dreidimensionalen Raum ausgerichtet ist, basierend auf dem ersten Satz und dem weiteren Satz;
**dadurch gekennzeichnet,**
**dass** aus den zwei möglichen 3D-Blickvektoren der 3D-Blickvektor ausgewählt wird, gemäß dem das Muster (806a) in dem dreidimensionalen Raum ausgerichtet ist, wobei dieser 3D-Blickvektor sich dadurch auszeichnet, dass dessen Rückprojektion in das Bild ausgehend vom Pupillenmittelpunkt weniger Pixel der Sklera überstreicht als die Rückprojektion des anderen 3D-Blickvektors; oder
**dass** der weitere Satz von Bildinformationen Information enthält, wie viele Pixel von der in dem ersten (804a) und/oder weiteren Bild (804b) abgebildeten Sklera von den Projektionen überstrichen werden, welche sich aus dem Pupillenmittelpunkt in dem ersten und/oder weiteren Bild und der Abbildung der beiden möglichen 3D-Blickvektoren in das Bild ergeben; oder

**dass** je einen Abstand zwischen dem erkannten Pupillenmittelpunkt und einem erkannten Rand des Auges entlang den zwei möglichen ins Bild projizierten SD-Blickvektoren ermittelt wird und den 3D-Blickvektor, gemäß dem das Muster in dem dreidimensionalen Raum ausgerichtet ist, aus den zwei möglichen 3D-Blickvektoren ausgewählt wird, wobei der 3D-Blickvektor ausgewählt wird, dessen Projektion ins Bild dort den kleineren Abstand zwischen dem Pupillenmittelpunkt und dem Rand der Augenöffnung überstreicht; oder

**dass** der weitere Satz von Bildinformationen eine Information über eine Beziehung zwischen einer im ersten Bild (804a) erkannten Pupillenlage innerhalb des Auges zu einer Referenzpupillenlage und den zwei mögliche 3D-Blickvektoren umfasst.

13. Verfahren zur Bestimmung einer Blickrichtung, mit folgenden Schritten:

Empfangen zumindest eines ersten Satzes von Bilddaten, der auf Basis eines ersten Bildes (804a) bestimmt wird, und eines weiteren Satzes von Bilddaten, der auf Basis des ersten Bildes (804a) oder eines weiteren Bildes (804b) bestimmt wird, wobei das erste Bild (804a) ein Muster (806a), das eine Pupille, eine Iris oder eine Ellipse ist, eines dreidimensionalen Objekts aus einer ersten Perspektive in eine erste Bildebene abbildet und wobei der weitere Satz eine Information umfasst, welche eine Beziehung zwischen mindestens einem Punkt des dreidimensionalen Objekts und der ersten Bildebene beschreiben;

Berechnen der Position des Musters (806a) in dem dreidimensionalen Raum basierend auf dem ersten Satz und einer statistisch ermittelten Beziehung zwischen mindestens zwei charakteristischen Merkmalen in dem ersten Bild (804a); und

Berechnen eines 3D-Blickvektors, wobei jeder 3D-Blickvektor als Vektor definiert ist, der sich durch einen Mittelpunkt des Musters (806a) entlang einer Normalenrichtung ausgehend von einer Oberfläche eines zu dem Muster (806a) gehörenden Objekts erstreckt, gemäß dem das Muster (806a) in dem dreidimensionalen Raum ausgerichtet ist, basierend auf dem ersten Satz und dem weiteren Satz;

**dadurch gekennzeichnet,**

**dass** die statistisch ermittelte Beziehung ein Abstand zwischen zwei charakteristischen Gesichtsmerkmalen, ein Größenverhältnis zwischen den zwei charakteristischen Gesichtsmerkmalen und/oder ein Größenverhältnis zwischen einem charakteristischen Gesichtsmerkmal und einem Bildrand umfasst; oder

**dass** die zwei oder mehrere charakteristischen Merkmale zu detektieren und deren Lagebeziehungen mit statistisch vorab ermittelten und gespeicherten Daten zu ver-gleichen und daraus den Abstand und/oder die Ausrichtung des Musters zur Kamera zu ermittelt wird.

14. Computerlesbares digitales Speichermedium auf dem ein Computerprogramm gespeichert ist mit einem Programmcode zum Durchführen des Verfahrens gemäß Anspruch 12 oder 13, wenn dasselbe auf einem Computer, einem eingebetteten Prozessor, einem programmierbaren Logikbauelement oder kundenspezifischen Chip läuft.

FIG 1

FIG 2A

EP 3 968 288 A2

EP 3 968 288 A2

FIG 2B

FIG 2C

FIG 3A

108 110 138 140 141 143 153
104

108v 110v 138v 140v 141v 143v

Richtung Datenfluss

150 Spalte 1 Summe Spalte 2 Summe Spalte 3 Summe

142 +144

112a

a
b
c
d
e
f

160

163

Konfigurationsbitstring
Konfiguration enable-Signal

EP 3 968 288 A2

60

108a

160b

148 142    144

160     $z^{-1}$    162

$z^{-1}$    MUX    $z^{-1}$

160a

160c    Pipeline-
Verzögerungselement

146

FIG 3B

FIG 4A

FIG 4B

EP 3 968 288 A2

vorverarbeitetes Bild

pixelweise
Korrelation
mit jedem der
Templates

1115

FIG 4C

suche
pixelweise
Maximum

Ergebnisbild Korrelation
mit Template n

Ergebnisbild Korrelation mit Template 1

FIG 4D

FIG 5A

FIG 5B

FIG 6

FIG 7A

EP 3 968 288 A2

Originalbild

Downscaling-Bild

FIG 7B

Falschfarbenbild nach der Klassifikation

Bild nach der Censustransformation

FIG 7C

FIG 8A

FIG 8B

FIG 8C

EP 3 968 288 A2

FIG 8D

virtuelle Hauptebene 1

virtueller Schnittpunkt $\nu S_2$

Ellipsenmittelpunkt $\nu E_{MP} = \nu H_1$

E

virtueller Schnittpunkt $\nu S_1$

$\vec{K_n}$

b

$\vec{a}$

a

r

r

A

mögliche Blickgerade 2

mögliche Blickgerade 1

$\vec{P_{n,2}}$

$\vec{P_{n,1}}$

806a

Pupille

$P_{MP}$

**FIG 8E**

FIG 9A

FIG 9B

Ausgangspunkt:
Kurven 1-4
einer 8x8
Kurvenschar

Bearbeiten der
ersten Kurve

y-Werte
dekrementieren

Bearbeiten der
zweiten Kurve

y-Werte
dekrementieren

Bearbeiten der
dritten Kurve

y-Werte
dekrementieren

Konfigurationsmatrix

Bearbeiten der
vierten Kurve

## FIG 9C

config_out

$z^{-1}$

$z^{-1}$

MUX

$z^{-1}$

config_in

config_enable

Pipeline-
Verzögerungselement

## FIG 9D

Richtung Datenfluss

Spaltensumme, Spaltennummer

Verzögerung

Delayline

Spalte 1 Summe

Spalte 2 Summe

Spalte 3 Summe

Konfigurations-logik

BRAM

binäres Kantenbild

——— Konfigurationsbitstring

– – – Konfiguration enable-Signal

FIG 9E

Houghcore-Struktur
15x15

Ausrichtung kleinerer
Konfigurationen an Spalte 1
der Houghcore-Struktur
in horizontaler Richtung

zentrierte Ausrichtung
kleinerer Konfigurationen
in vertikaler Richtung

Houghcore-
Konfiguration 7x7

FIG 9F

EP 3 968 288 A2

FIG 9G

EP 3 968 288 A2

FIG 9H

FIG 9I

EP 3 968 288 A2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004046617 A1

- DE 102005047160 B4, Johannes Katzmann

**In der Beschreibung aufgeführte Nicht-Patentliteratur**

- **FITZGIBBON.** *Direct least square fitting of ellipses*

- **ANDREW T. DUCHOWSKI.** *Eye Tracking Methodology: Theory and Practice*